# EUROPEAN PATENT SPECIFICATION

(11) **EP 4 145 280 B1**
(45) Date of publication and mention of the grant of the patent: **22.07.2026**
(21) Application number: 21826610.4
(22) Date of filing: 12.06.2021
(51) Int. Cl.: G06F 9/451, G06F 3/04842, G06F 3/04886, H04M 1/02

(54) **NOTIFICATION DISPLAY METHOD AND TERMINAL**
BENACHRICHTIGUNGSANZEIGEVERFAHREN UND ENDGERÄT
PROCÉDÉ ET TERMINAL D'AFFICHAGE DE NOTIFICATION

(30) Priority: 16.06.2020 CN 202010549282
(43) Date of publication of application: 08.03.2023
(73) Proprietor: Huawei Technologies Co., Ltd., Longgang District, Shenzhen, Guangdong 518129 (CN)
(72) Inventor: XU, Jie, Shenzhen, Guangdong 518129 (CN); ZHAO, Xiaohu, Shenzhen, Guangdong 518129 (CN)
(74) Representative: Pfenning, Meinig & Partner mbB
(86) International application number: PCT/CN2021/099912
(87) International publication number: WO 2021/254293

(56) References cited:
- CN-A- 104 345 971
- CN-A- 107 704 187
- CN-A- 110 874 168
- US-A1- 2013 215 041
- US-A1- 2015 248 200
- US-A1- 2017 115 944

## Description

### TECHNICAL FIELD

This application relates to the field of terminal technologies, and in particular, to a notification display method, an electronic device, a computer readable sorage medium and a computer program product.

### BACKGROUND

With the development of intelligent terminals, such as mobile phones, tablet computers, smart wearables, and smart appliances, more applications (also referred to as APKs, apps, or applications) that are suitable for different scenarios and users and that provide various functions emerge, for example, applications of news software such as NetEase and Tencent, social software such as WeChat and Whatsapp, shopping software such as Taobao and Jingdong, and other software related to work, entertainment, travel, and learning on a terminal.

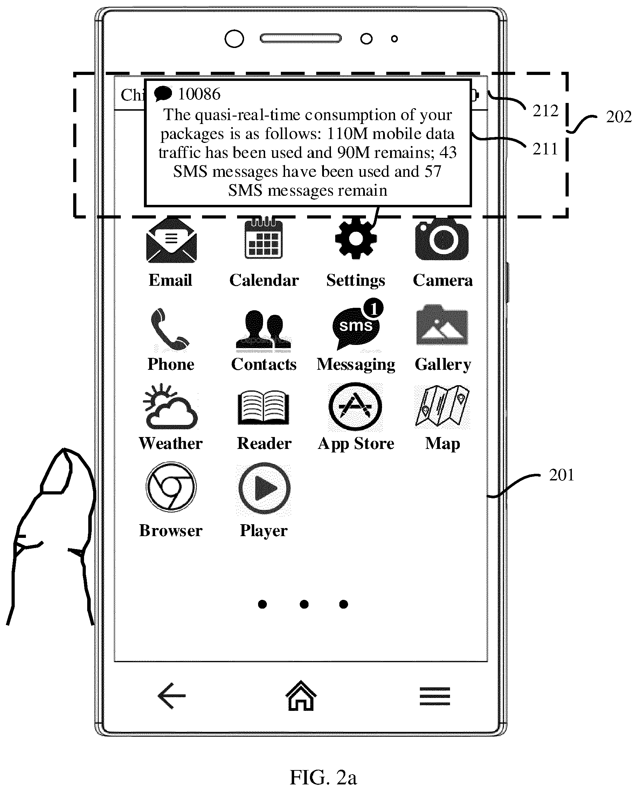

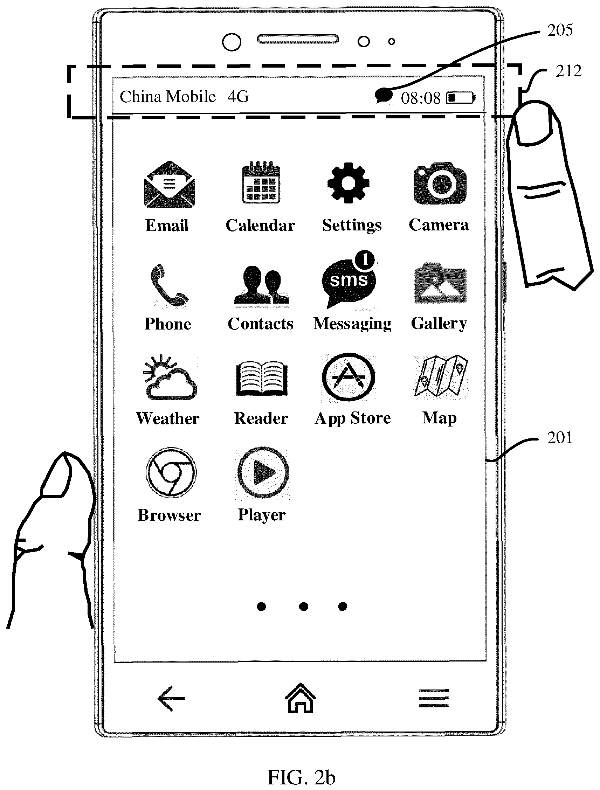

Usually, these applications push or send specific content, such as notifications, to a user of the terminal, and the content is displayed on a display of the terminal. Specifically, a news application pushes hot news to the user, a shopping application pushes promotion information to the user, a social application pushes an instant message to the user, and the like. A push notification received by the user on the terminal usually appears at the top of the display of the terminal in a form of a banner or a pop-up box. Therefore, another operation region (for example, a middle part or a lower part of a screen) is not blocked, as shown in FIG. 2a. A push notification or message that is not processed by the user in a timely manner may be retained in a form of a shrunk icon in a top signal bar of the display of the terminal, to facilitate subsequent viewing by the user, as shown in FIG. 2b.

When the user needs to process the push notification, for example, view, ignore, or delete a message or notification, regardless of whether the terminal is held with one hand or both hands, the user needs to move a finger to or near the top of the display to perform an operation on the banner, the pop-up box, or the signal bar. Fast processing of the push notification or unread information can further improve operation experience of the user of the terminal. US 2015/248200 A1 discloses a mobile terminal including a display unit having a main display region exposed on a front surface and an auxiliary display region exposed on a lateral surface; and a controller configured to display at least one display object on the main display region, and move the at least one display object from the main display region to the auxiliary display region in response to a received move command.
US 2017/115944 A1 discloses an electronic device with a bended display, a sensor unit and a processor. The bended display includes a front display region, a side display region, and a back display region, which respectively correspond to a front face, a side face, and a back face of the electronic device. The sensor unit detects a motion of the electronic device. If an event occurs while content is displayed on the front display region, the processor controls the bended display to display a graphic object corresponding to the event on the front display region, and also controls the bended display to display a first screen corresponding to the graphic object on the back display region, based on the detected motion of the electronic device.

### SUMMARY

This application provides a notification display method, an electronic device, a computer-readable storage medium and a computer program product according to the attached claims. In the method, a notification can be quickly processed, for example, viewed or deleted, so that operation experience of a user is improved.

According to a first aspect, this application provides a notification display method, applied to an electronic device having a curved screen. The curved screen has a flat display region and a curved display region extending from a side edge of the flat display region, and a first icon of a first application is displayed in the flat display region. The method includes: in response to the electronic device receiving a first notification from the first application, displaying a first banner in the flat display region, where first content of the first notification is displayed in the first banner; displaying a first symbol in the curved display region, where the first symbol is configured to receive an operation to process the first notification; and displaying a second symbol on the first icon in the flat display region. The first symbol is displayed in the curved display region for notification processing. This can extend application of the curved screen in the curved display region, and facilitate a user operation.

According to the first aspect (also called first implementation of the first aspect) the method further includes: if no operation on the first banner, the first symbol, or the first icon is detected within a first predetermined time period in which the first symbol is displayed in the first curved display region, when the first symbol has been displayed for the first predetermined time period, enabling the first symbol and the first banner to automatically disappear from the curved screen. If no processing operation on the first notification is detected, a display interface on a display is restored after a predetermined time period, to avoid blocking or interference on the interface displayed on the display.

According to the first implementation of the first aspect, in a second implementation of the first aspect, after the first symbol and the first banner disappear from the curved screen, the method further includes: in response to the electronic device receiving a second notification from a second application, where the second application is different from the first application, displaying a second banner in the flat display region, where content of the second notification is displayed in the second banner; and displaying the first symbol in the curved display region, to receive an operation to process the second notification. The first symbol may be configured as a unique interface element displayed in a side region, and is configured to receive an operation to process a notification received by the electronic device. Each time the electronic device receives a new notification, the electronic device displays the first symbol and receives an operation to process the new notification. An advantage is as follows: Because a same touch symbol appears each time, a user may process a new notification according to inertia.

According to the first implementation of the first aspect, in a third implementation of the first aspect, after the first symbol and the first banner disappear from the curved screen, the method further includes: in response to the electronic device receiving a third notification from a third application, where the third application is different from the first application, displaying a third banner in the flat display region, where content of the third notification is displayed in the third banner; and displaying, in the curved display region, a third symbol different from the first symbol, to receive an operation to process the third notification. For notifications from different applications, different symbols are displayed in the curved display region, so that a specific application to which a new notification belongs can be distinguished. Particularly, when the electronic device receives a plurality of notifications from different applications within a short time period, a user may learn of applications corresponding to the notifications by identifying symbols.

According to the first aspect (also called fourth implementation of the first aspect) after the first symbol and the first banner disappear from the curved screen, the method further includes: detecting a first operation in the curved display region; and displaying the first symbol in the curved display region in response to the first operation. After the first symbol corresponding to the first notification that is not processed disappears, the first symbol may be triggered to be displayed in the curved display region again, so that a user conveniently processes the first notification.

According to the fourth implementation of the first aspect, in a fifth implementation of the first aspect, the method further includes: determining, based on an operation location of the first operation in the curved display region, a display location of the first symbol in the curved display region. The first symbol may be displayed following an operation performed by the user in the curved display region, to avoid accidental touch of the user.

According to a fifth implementation of the first aspect, in a sixth implementation of the first aspect, the display location is at a first height above the operation location. Each time display of the first symbol is triggered, the first symbol is displayed above the user operation location, so that accidental touch of the user can be avoided, and the user can conveniently and quickly locate the first symbol to perform an operation.

According to the fourth implementation of the first aspect, in a seventh implementation of the first aspect, the method further includes: displaying a fourth symbol in the curved display region in response to the first operation, where the fourth symbol is configured to open an application option of a fourth application. A plurality of symbols may be displayed through a trigger operation in the curved display region, to provide a plurality of shortcut operation entries for the user.

According to the seventh implementation of the first aspect, in an eighth implementation of the first aspect, the method further includes: detecting a second operation on the first symbol; and displaying a first card in the flat display region in response to the second operation, where second content of the first notification is displayed in the first card, and the second content includes the first content.

According to the eighth implementation of the first aspect, in a ninth implementation of the first aspect, the method further includes: detecting a sliding operation in the curved display region; and displaying a fourth card in the flat display region when the sliding operation is sliding from the first symbol to the fourth symbol, where the application option of the fourth application is displayed in the fourth card. When a finger of the user slides in the curved display region, the user can view cards corresponding to different symbols, to process notifications or view application options.

According to the eighth implementation of the first aspect, in a tenth implementation of the first aspect, the method further includes: detecting a third operation on the first card; and opening the first application in response to the third operation. When the user needs to reply to the notification after viewing the first card, the user can quickly open the first application by performing the third operation on the card, to reply to the notification. This is very convenient.

According to the eighth implementation of the first aspect, in an eleventh implementation of the first aspect, the method further includes: in response to the second operation, triggering at least one of the following steps: displaying the first symbol in an enlarged manner; and moving the first symbol in a direction to the flat display region. Displaying the first symbol in an enlarged manner and/or a moving manner can prevent the user from accidentally touching another symbol in the curved display region.

According to the fourth implementation of the first aspect, in a twelfth implementation of the first aspect, the method further includes: displaying a fifth symbol in the curved display region in response to the first operation, where the fifth symbol corresponds to a fifth application and is configured to receive an operation to process a fifth notification, and the first symbol and the fifth symbol are displayed in the curved display region based on a time sequence of receiving the first notification and the fifth notification.

According to the fourth implementation of the first aspect, in a thirteenth implementation of the first aspect, the method further includes: in response to the electronic device receiving a sixth notification from a sixth application, enabling the first symbol to disappear from the curved screen; displaying a sixth banner in the flat display region, where content of the sixth notification is displayed in the sixth banner; and displaying a sixth symbol in the curved display region, where the sixth symbol corresponds to the sixth application and is configured to receive an operation to process the sixth notification. When the user interacts with a symbol, if the electronic device receives a new notification, optionally, the new notification interrupts the current interaction, and a symbol corresponding to the new notification is separately displayed in the curved display region, to receive an operation to process the new notification.

According to the eighth implementation of the first aspect, in a fourteenth implementation of the first aspect, the method further includes: in response to the electronic device receiving a seventh notification from a seventh application, displaying a seventh banner in the flat display region, where content of the seventh notification is displayed in the seventh banner; and displaying a seventh symbol in the curved display region, where the seventh symbol is configured to receive an operation to process the seventh notification. When the user interacts with a symbol, in particular, when the user has opened a card corresponding to the symbol, if the electronic device receives a new notification, optionally, the new notification does not interrupt the current interaction, but a symbol corresponding to the new notification is further displayed in the curved display region, to prompt the user to process the new notification.

According to the fourteenth implementation of the first aspect, in a fifteenth implementation of the first aspect, the displaying a seventh symbol in the curved display region includes at least one of the following steps: displaying the seventh symbol in the curved display region in an enlarged manner; displaying the seventh symbol in the curved display region in a flickering manner; and displaying the seventh symbol in the curved display region in a highlighted manner. The symbol of the new notification is displayed in a prompt manner more obvious than that of another symbol, and this helps the user quickly process the new notification.

According to the first aspect, in a sixteenth implementation of the first aspect, the method further includes: detecting a fourth operation on the first symbol; and opening the first application in response to the fourth operation. The application corresponding to the first notification can be opened by performing an operation on the first symbol. This operation is very convenient.

According to the first aspect, in a seventeenth implementation of the first aspect, the method further includes: detecting a fifth operation on the first symbol; and displaying a reply window of the first notification in response to the fifth operation. The reply window of the first notification can be opened by performing an operation on the first symbol. This operation is very convenient.

According to the first aspect, in an eighteenth implementation of the first aspect, the curved display region includes a first curved display region extending from a first side edge of the flat display region and a second curved display region extending from a second side edge of the flat display region, and the first curved display region is opposite to the second curved display region.

According to the eighteenth implementation of the first aspect, in a nineteenth implementation of the first aspect, the displaying a first symbol in the curved display region includes: displaying the first symbol in the first curved display region when a user holds the electronic device by using a left hand; or displaying the first symbol in the second curved display region when a user holds the electronic device by using a right hand. Based on a scenario of holding by the left/right hand of the user, the first symbol is displayed on the left side or the right side, and is closer to an operation finger of the user, so that an operation on the first symbol is more convenient.

According to the eighteenth implementation of the first aspect, in a twentieth implementation of the first aspect, the displaying a first symbol in the curved display region includes: displaying the first symbol in both the first curved display region and the second curved display region. The first symbol is displayed on both sides, so that the user can conveniently perform an operation on the first symbol at any time when changing a holding posture.

According to the eighteenth implementation of the first aspect, in a twenty-first implementation of the first aspect, the electronic device is a foldable electronic device, the curved screen is a foldable screen, and the first symbol is displayed in the first curved display region or the second curved display region when the electronic device is in a folded state, or the first symbol is displayed in both the first curved display region and the second curved display region when the electronic device is in an unfolded state. Because the foldable screen has a larger display region in the unfolded state, the first symbol is adaptively displayed on both sides of the screen when the screen is unfolded. This helps more quickly process a notification in a large-screen scenario.

According to the first aspect, in a twenty-second implementation of the first aspect, the displaying a first symbol in the curved display region includes: determining a display location of the first symbol in the curved display region based on historical data of performing an operation by a user on the curved screen; and displaying the first symbol at the display location. Through determining of the historical data of the user operation, the first symbol is displayed at a location closer to an operation finger of the user, to facilitate an inertial operation of the user.

According to the first aspect, in a twenty-third implementation of the first aspect, the first application is not running. An advantage is as follows: When the first notification is pushed to the electronic device, the first symbol is displayed in the curved display region to remind the user that a quick operation can be performed on the first notification on a curved surface. This solution does not require whether the first application corresponding to the first notification is in a running state. This can save storage space for program running in the electronic device.

According to the first aspect, in a twenty-fourth implementation of the first aspect, the first symbol includes one of a dot symbol, a bar symbol, and an icon symbol, and the icon symbol is an icon corresponding to the first application.

According to the fourth implementation of the first aspect, in a twenty-fifth implementation of the first aspect, the curved display region includes a first region, and the first region is configured to receive the first operation and display the first symbol in response to the first operation. When an operation is performed outside the first region in the curved display region, there is no operation feedback, that is, the first symbol is not displayed. The first region, that is, a valid region for triggering an operation, is set, so that frequent accidental touch of the user can be avoided.

According to a further aspect, this application provides an electronic device, including one or more touchscreens, one or more memories, and one or more processors. The one or more memories store one or more programs. When the one or more processors execute the one or more programs, the electronic device is enabled to implement the method according to any one of the foregoing implementations. The method in any one of the foregoing implementations is implemented. In this way, the terminal can quickly display and process a notification, for example, view or delete the notification or content of the notification, and a user can process a specific message or notification without moving a finger at a large range. Therefore, use experience of the user can be improved.

According to a further aspect, this application provides a computer-readable storage medium, including instructions. When the instructions are run on an electronic device, the electronic device is enabled to perform the method according to any one of the foregoing implementations.

According to a further aspect, this application provides a computer program product including instructions. When the computer program product runs on an electronic device, the electronic device is enabled to perform the method according to any one of the foregoing implementations.

### BRIEF DESCRIPTION OF DRAWINGS

FIG. 1 is a schematic diagram depicting a structure of an electronic device according to an embodiment of this application;
FIG. 2a and FIG. 2b are a schematic diagram depicting a user interface according to the conventional technology;
FIG. 3a to FIG. 3h are a schematic diagram depicting a scenario of a notification display method according to an embodiment of this application;
FIG. 4a to FIG. 4f are a schematic diagram depicting a scenario of a notification display method according to an embodiment of this application;
FIG. 5a and FIG. 5b are a schematic diagram depicting an intelligent terminal according to an embodiment of this application;
FIG. 6a to FIG. 6e are a schematic diagram depicting a scenario of a notification display method according to an embodiment of this application;
FIG. 7a to FIG. 7e are a schematic diagram depicting a scenario of a notification display method according to an embodiment of this application;
FIG. 8a to FIG. 8e are a schematic diagram depicting a scenario of a notification display method according to an embodiment of this application;
FIG. 9a to FIG. 9e are a schematic diagram depicting a scenario of a notification display method according to an embodiment of this application;
FIG. 10a to FIG. 10e are a schematic diagram depicting a scenario of a notification display method according to an embodiment of this application;
FIG. 11a to FIG. 11d are a schematic diagram depicting a scenario of a notification display method according to an embodiment of this application;
FIG. 12a to FIG. 12d are a schematic diagram depicting a scenario of a notification display method according to an embodiment of this application;
FIG. 13a to FIG. 13d are a schematic diagram depicting a scenario of a notification display method according to an embodiment of this application;
FIG. 14a to FIG. 14f are a schematic diagram depicting a scenario of a notification display method according to an embodiment of this application;
FIG. 15 is a block diagram depicting a software structure of an electronic device according to an embodiment of this application;
FIG. 16a to FIG. 16c each are a message sequence diagram depicting a notification display method according to an embodiment of this application;
FIG. 17 is a schematic flowchart depicting a notification display method according to an embodiment of this application;
FIG. 18 is a schematic flowchart depicting a notification display method according to an embodiment of this application;
FIG. 19 is a schematic flowchart depicting a notification display method according to an embodiment of this application;
FIG. 20 is a schematic diagram depicting a module architecture of a terminal according to an embodiment of this application; and
FIG. 21 is a schematic diagram depicting a structure of a terminal according to an embodiment of this application.

### DESCRIPTION OF EMBODIMENTS

The following describes the embodiments of this application with reference to the accompanying drawings in the embodiments of this application.

It should be noted that descriptions such as "first" and "second" in the embodiments of this application are configured to distinguish between different messages, devices, modules, applications, or the like, and do not indicate a sequence, and "first" and "second" are not limited to different types either. Descriptions such as "first" and "second" do not limit a quantity. For example, "first application" may be one "first application", or may be a plurality of "first applications".

The term "A and/or B" in the embodiments of this application describes only an association for describing associated objects and represents that three relationships may exist. For example, only A exists, both A and B exist, and only B exists. In addition, the character "/" in the embodiments of this application usually indicates an "or" relationship between the associated objects.

A multitasking technology means that an electronic device may run a plurality of applications at the same time. Each application is referred to as one task. The multitasking technology may be specifically represented as a screen splitting technology and a picture-in-picture (Picture-in-Picture, PIP) technology. Screen splitting means that interfaces of different applications may be displayed in different display regions of a display of an electronic device, and the interfaces of the different applications do not overlap each other. For example, the interfaces of the different applications are displayed separately, so that a user can operate the applications at the same time. The picture-in-picture technology means that after an interface is displayed, another interface is displayed in the interface in a superimposed manner. For ease of description, split-screen display and picture-in-picture display are referred to as "region-based display" in the embodiments of this application.

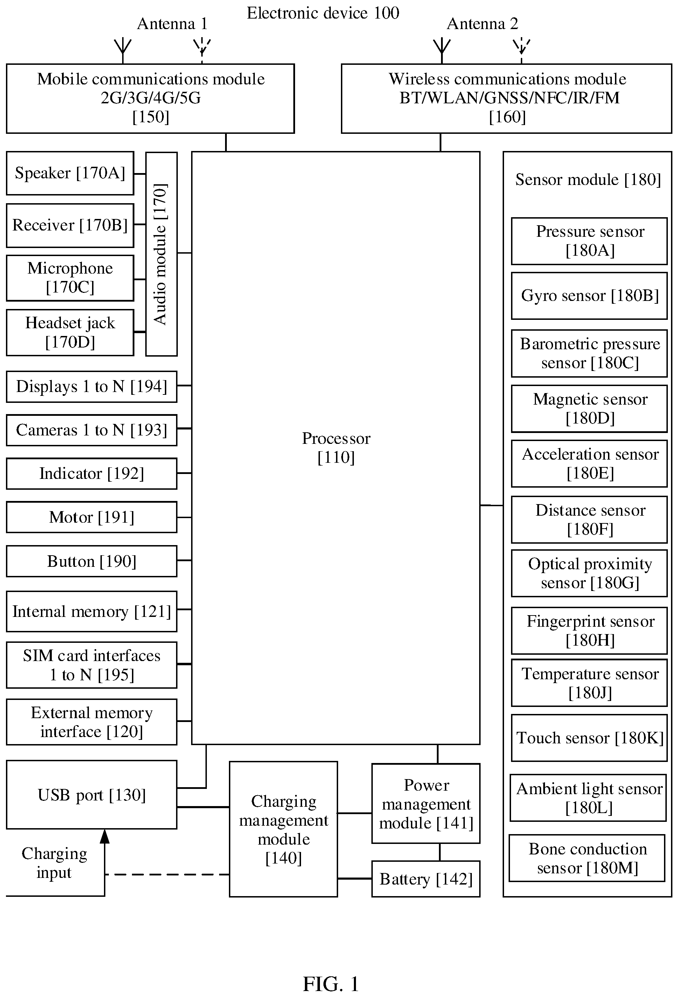

A method provided in the embodiments of this application is applied to an electronic device 100 shown in FIG. 1. FIG. 1 is a schematic diagram depicting a structure of the electronic device 100.

The electronic device 100, such as an intelligent terminal, includes a processor 110, an external memory interface 120, an internal memory 121, a universal serial bus (universal serial bus, USB) port 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present disclosure does not constitute a specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110, so that system efficiency is improved.

In this embodiment of this application, the processor 110 may invoke program instructions stored in the internal memory 121 or the memory disposed in the processor 110, so that the electronic device 100 performs steps performed by the electronic device (for example, a terminal) in a notification display method provided in the embodiments of this application. It should be understood that the electronic device 100 may be configured to implement the notification display method provided in the embodiments of this application. For a related feature, refer to the following detailed description.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identity module, SIM) interface, a universal serial bus (universal serial bus, USB) port, and/or the like.

The I2C interface is a two-way synchronous serial bus, and includes a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface to implement a touch function of the electronic device 100.

The I2S interface may be configured to perform audio communication. The PCM interface may also be configured to: perform audio communication, and sample, quantize, and code an analog signal. The UART interface is a universal serial data bus, and is configured to perform asynchronous communication.

The MIPI interface may be configured to connect the processor 110 to a peripheral component such as the display 194 or the camera 193. The MIPI interface includes a camera serial interface (camera serial interface, CSI), a display serial interface (display serial interface, DSI), or the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by using software. The GPIO interface may be configured as a control signal, or may be configured as a data signal. In some embodiments, the GPIO interface may be configured to connect the processor 110 to the camera 193, the display 194, the wireless communications module 160, the audio module 170, the sensor module 180, or the like. The GPIO interface may be alternatively configured as the I2C interface, the I2S interface, the UART interface, the MIPI interface, or the like.

The USB port 130 is a port that conforms to a USB standard specification, and may be specifically a mini USB port, a micro USB port, a USB Type-C port, or the like. It may be understood that an interface connection relationship between the modules that is shown in this embodiment of the present disclosure is merely an example for description, and does not constitute a limitation on the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive charging input from the charger. The power management module 141 is configured to connect to the battery 142, the charging management module 140, and the processor 110. A wireless communication function of the electronic device 100 may be implemented through the antenna 1, the antenna 2, the mobile communications module 150, the wireless communications module 160, a modem processor, a baseband processor, and the like.

The antenna 1 and the antenna 2 are configured to transmit and receive electromagnetic wave signals. Each antenna in the electronic device 100 may be configured to cover one or more communication bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communications module 150 may provide a wireless communication solution that includes 2G/3G/4G/5G or the like and that is applied to the electronic device 100. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering and amplification on the received electromagnetic wave, and transmit the electromagnetic wave to the modem processor for demodulation. The mobile communications module 150 may further amplify a signal modulated by the modem processor, and convert the signal into an electromagnetic wave for radiation through the antenna 1. In some embodiments, at least some functional modules of the mobile communications module 150 may be disposed in the processor 110. In some embodiments, at least some functional modules of the mobile communications module 150 and at least some modules of the processor 110 may be disposed in a same device.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transfers the low-frequency baseband signal obtained through demodulation to the baseband processor for processing. The baseband processor processes the low-frequency baseband signal, and then transfers a processed signal to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communications module 150 or another functional module.

The wireless communications module 160 may provide a wireless communication solution that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, or the like and that is applied to the electronic device 100. The wireless communications module 160 may be one or more devices integrating at least one communications processing module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communications module 150 in the electronic device 100 are coupled, and the antenna 2 and the wireless communications module 160 are coupled, so that the electronic device 100 can communicate with a network and another device through a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division-synchronous code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 implements the display function through a GPU, the display 194, the application processor, and the like. The GPU is a microprocessor for image processing, and is connected to the display 194 and the application processor. The GPU is configured to perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini LED, a micro LED, a micro OLED, a quantum dot light-emitting diode (quantum dot light-emitting diodes, QLED), or the like. In some embodiments, the electronic device 100 may include one or N displays 194, where N is a positive integer greater than 1.

The display 194 is configured to display a user interface, and may further receive a user operation. Displaying mentioned in the embodiments of this application may be displaying by using the display 194. The display 194 has a display function. In addition, the display 194 may have a touch function or may not have a touch function. An operation on a touchscreen may be implemented by using a virtual button, or may be implemented by tapping the touchscreen. An operation on a non-touchscreen may be implemented by using a physical button.

The electronic device 100 may implement the photographing function through the ISP, the camera 193, the video codec, the GPU, the display 194, the application processor, and the like.

The ISP is configured to process data fed back by the camera 193. The camera 193 is configured to capture a static image or a video. An optical image of an object is generated through a lens, and is projected to a photosensitive element.

The digital signal processor is configured to process a digital signal. In addition to the digital image signal, the digital signal processor may further process another digital signal. For example, when the electronic device 100 selects a frequency, the digital signal processor is configured to perform Fourier transform or the like on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transfer mode between human brain neurons, and may further continuously perform self-learning.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (such as audio data and a phone book) and the like created when the electronic device 100 is used. In addition, the internal memory 121 may include a high-speed random access memory, or may include a nonvolatile memory, for example, at least one magnetic disk storage device, a flash memory, or a universal flash storage (universal flash storage, UFS). The processor 110 runs the instructions stored in the internal memory 121 and/or the instructions stored in the memory disposed in the processor, to perform various function applications of the electronic device 100 and data processing.

In some embodiments of this application, the internal memory is further configured to store a translation application and buffer all pictures generated in a running process of the translation application. After a user exits the translation application, all the buffered pictures may be automatically deleted.

The electronic device 100 may implement audio functions such as music playing and recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode audio signals. In some embodiments, the audio module 170 may be disposed in the processor 110, or some functional modules in the audio module 170 are disposed in the processor 110.

The speaker 170A, also referred to as a "horn", is configured to convert an audio electrical signal into a sound signal. The electronic device 100 may be configured to listen to music or answer a call in a hands-free mode over the speaker 170A.

The receiver 170B, also referred to as an "earpiece", is configured to convert an audio electrical signal into a sound signal. When a call is answered or a voice message is listened to by using the electronic device 100, the receiver 170B may be put close to a human ear to listen to a voice.

The microphone 170C, also referred to as a "mike" or a "mic", is configured to convert a sound signal into an electrical signal.

The headset jack 170D is configured to connect to a wired headset. The headset jack 170D may be the USB port 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are many types of pressure sensors 180A such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change of the capacitance. When a touch operation is performed on the display 194, the electronic device 100 detects intensity of the touch operation by using the pressure sensor 180A. The electronic device 100 may also calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on a messaging application icon, an instruction for viewing an SMS message is executed. When a touch operation whose touch operation intensity is greater than or equal to the first pressure threshold is performed on the messaging application icon, an instruction for creating a new SMS message is executed.

The gyro sensor 180B may be configured to determine a motion posture of the electronic device 100. The barometric pressure sensor 180C is configured to measure barometric pressure. In some embodiments, the electronic device 100 calculates an altitude based on a value of the barometric pressure measured by the barometric pressure sensor 180C, to assist positioning and navigation. The magnetic sensor 180D includes a Hall effect sensor. The acceleration sensor 180E may detect magnitude of accelerations of the electronic device 100 in various directions (usually on three axes). The distance sensor 180F is configured to measure a distance. The electronic device 100 may measure the distance through infrared or a laser. In some embodiments, in a photographing scenario, the electronic device 100 may measure a distance through the distance sensor 180F to implement quick focusing. For example, the optical proximity sensor 180G may include a light-emitting diode (LED) and an optical detector, for example, a photodiode. The ambient light sensor 180L is configured to sense ambient light brightness. The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like. The temperature sensor 180J is configured to detect a temperature.

The touch sensor 180K is also referred to as a "touch control device". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation to the application processor, to determine a type of a touch event. The display 194 may provide visual output related to the touch operation. In some other embodiments, the touch sensor 180K may alternatively be disposed on a surface of the electronic device 100 at a location different from that of the display 194.

The bone conduction sensor 180M may obtain a vibration signal. The button 190 includes a power button, a volume button, and the like. The button 190 may be a mechanical button, or may be a touch button. The electronic device 100 may receive key input, and generate key signal input related to a user setting and function control of the electronic device 100. The motor 191 may generate a vibration prompt. The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or detachment from the electronic device 100. The electronic device 100 may support one or N SIM card interfaces, where N is a positive integer greater than 1. The SIM card interface 195 may support a nano SIM card, a micro SIM card, a SIM card, and the like. A plurality of cards may be inserted into a same SIM card interface 195 at the same time. The plurality of cards may be of a same type or of different types. The SIM card interface 195 may be compatible with different types of SIM cards. The SIM card interface 195 may also be compatible with the external memory card. The electronic device 100 interacts with a network through the SIM card, to implement functions such as conversation and data communication. In some embodiments, the electronic device 100 uses an eSIM, namely, an embedded SIM card. The eSIM card may be embedded into the electronic device 100, and cannot be detached from the electronic device 100.

FIG. 2a and FIG. 2b show a user interface displayed on a terminal according to the conventional technology. Various applications may be installed on the terminal, and these applications push notifications to the terminal. When receiving a notification pushed by an application, the terminal may load the notification to a notification bar, to display the notification in the notification bar. Currently, a third-party server corresponding to some applications is connected to a push server of a unified push service provider (for example, Apple or Google), and the push server sends notifications to the terminal. These notifications carry parameters such as an identity ID of a target application and pushed notification content. As shown in FIG. 2a, when browsing a first interface on a display 201, for example, viewing an application on a home screen or browsing a display interface or a split-screen interface of a first application, a user receives a notification of a second application, for example, an SMS notification. The SMS notification appears in a display region 202 on the display 201 in a form of a banner, pop-up box, or floating box 211. Content of the SMS notification is displayed on the banner, pop-up box, or floating box 211. The display region 202 is at the top of the display 201 and includes a notification bar 212. In this case, when the user wants to view the SMS notification, or when the user wants to ignore the SMS notification to quickly hide the banner 211 of the SMS notification, the user needs to move a finger to the banner 211 to perform a corresponding operation. This operation usually requires the user to greatly move the finger. In addition, for a user holding the terminal with one hand, this operation is very inconvenient to complete with one hand. When the user does not process the banner 211 of the SMS notification in FIG. 2a in a timely manner, the banner 211 automatically exits a displayed state, and the unread SMS notification is displayed in the top notification bar 212 on the display 201 in a form of a small icon 205, as shown in FIG. 2b. In this case, the display 201 displays the first interface. When the user wants to view the unprocessed SMS notification, the user may open a messaging application to view all unprocessed SMS messages. The user may further perform a corresponding operation on the notification bar 212, to drop down to display a notification center, so as to process all unprocessed notifications on the terminal. Usually, for the user, the vicinity of the top of the terminal display is not a convenient operation region. When the user needs to operate the top display region 202, the finger of the user needs to move greatly, and such an operation is not convenient or quick. Particularly, for a user holding the terminal with one hand, it is very inconvenient to process an icon of an unread notification/information at or near the top of the display by using a one-hand operation. Therefore, a current method for processing a newly pushed notification or an unread notification is not user-friendly.

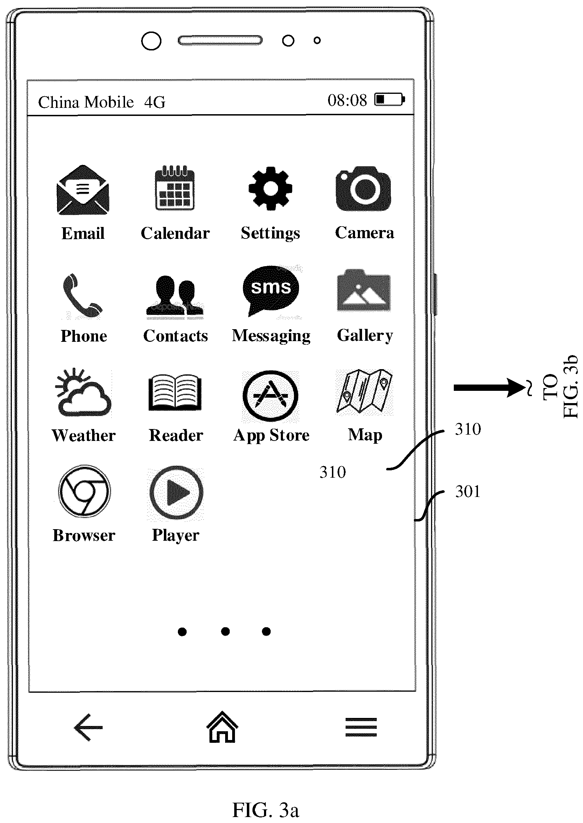

Notification display methods provided in the following embodiments shown in FIG. 3a to FIG. 3h to FIG. 14a to FIG. 14f are applied to the electronic device 100 provided in the foregoing embodiment.

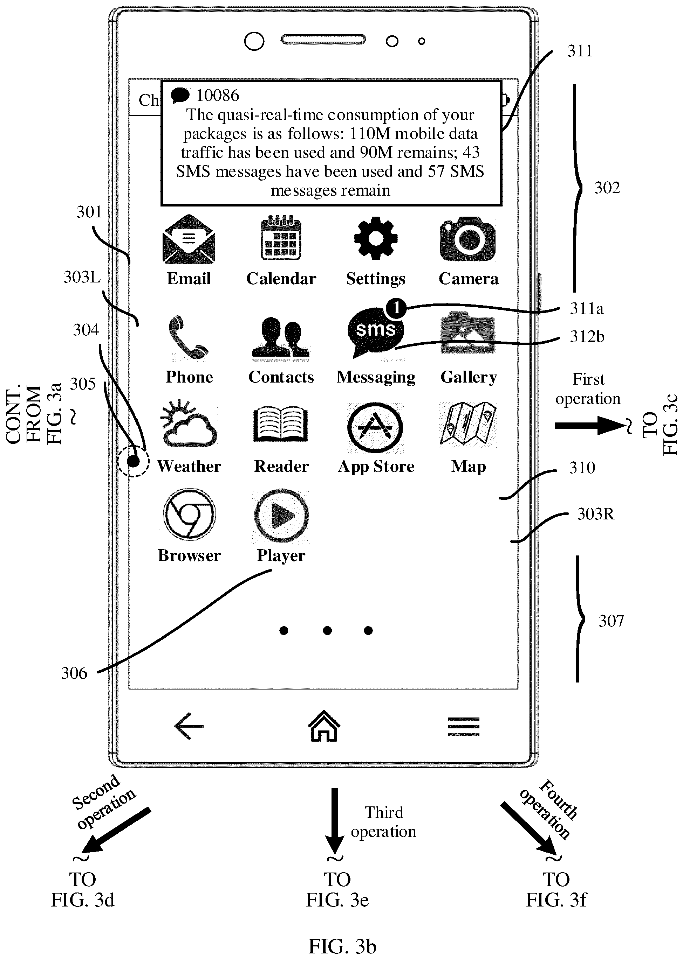

FIG. 3a to FIG. 3h are a schematic diagram depicting a scenario of a notification display method according to an embodiment of this application. As shown in FIG. 3a, a touchscreen 301 of an intelligent terminal displays a first interface 310. The first interface 310 is a complete display interface displayed on the touchscreen 301. Specifically, the first interface 310 may be a home screen including a notification bar/signal bar part on the display 301, an interface (including or not including the notification bar/signal bar part) of a first application, or a split-region display interface, for example, a split-screen display interface of the first application and the home screen or a split-screen display interface of a plurality of application programs (briefly referred to as applications below) (and the notification bar/signal bar part). It should be understood that all content, for example, a leftmost screen, a widget (widget), an intelligent home screen assistant, or a control, displayed on the display 301 before a notification is displayed may be considered as a part of the first interface 310. As shown in FIG. 3b, when the display 301 displays only the first interface 310, for example, the home screen, from a perspective of up, down, left, and right directions in which a user normally views the first interface 310, the first interface 310 includes a top region 302, a bottom region 307, side regions 303L and 303R, and a front region 306. Each region in the first interface 310 is defined by a direction in which content is displayed in the first interface 310. To be specific, when the first interface is in a direction for normal viewing, the top region 302 is at an upper part of the first interface 310 and abuts against an upper edge of the first interface 310, the bottom region 307 is at a lower part of the first interface 310 and abuts against a lower edge of the first interface 310, the side regions 303L and 303R are at a left part and a right part of the first interface 310 respectively and abut against a left edge and a right edge of the first interface 310 respectively, and the front region 306 is in a main display region of the first interface 310, is also a middle region of the first interface 310, and occupies at least half of an area of the first interface 310. It should be understood that the front region 306 may be defined as a region in the middle of the first interface 310, or may be defined as being closer to one or more edges of the first interface 310. The front region 306 abuts against none of the four edges of the first interface 310. In addition, when the user normally holds the intelligent terminal, for example, when the intelligent terminal performs displaying in portrait mode, the top region 302 of the first interface 310 is a region that the user usually needs to move a finger greatly to touch, and the bottom region 307 and a part of the side region 303L/303R are regions that the user usually can touch without moving a finger greatly. It should be understood that region division for the first interface 310 in this application is intended to more clearly describe the following embodiments of this application, instead of substantially cutting the first interface 310 or differentiating between different regions. In another embodiment of this application, region division different from that shown in FIG. 3b may alternatively be performed for the first interface 310. Therefore, the region division for the first interface 310 in FIG. 3b should not be used as a limitation on this application. In this application, to better describe the embodiment, the foregoing region division is performed for the first interface 310, so that the front region 306 does not overlap the top region 302, the bottom region 307, or the side region 303L or 303R, and the top region 302 does not overlap the bottom region 307. The side region 303L or 303R may overlap the top region 302 and/or the bottom region 307. It should be understood that such region division is merely used as an example, and should not be used as a limitation on this application. The embodiments of this application may alternatively be described based on different region division without departing from the scope of this application.

When the display 301 of the intelligent terminal displays the first interface 310, for example, the home screen, a notification of a second application, for example, an SMS notification, is added to a notification center of the intelligent terminal. The notification corresponds to an SMS message and appears in the top region 302 of the first interface 310 in a form of a banner, a pop-up box, or a floating box, for example, a banner 311 shown in FIG. 3b. The banner 311 displays content of the SMS notification, and the content of the notification may be a part of an SMS message, for example, "The quasi-real-time consumption of your packages is as follows..." shown in the figure. Alternatively, the content of the notification may be content different from that shown in the figure, for example, "You have 1 unread SMS message". The banner 311 corresponding to the SMS notification covers a part of the top region 302 of the first interface 310. In response to the SMS notification or in response to the banner 311, as shown in FIG. 3b, a touch symbol 305 is displayed in the side region 303L of the first interface 310. The touch symbol 305 is corresponding to the banner 311 and the SMS notification, and covers a part of the side region 303L of the first interface 310. When the first interface 310 is a home screen shown in the figure, and the home screen includes an icon 312b of a messaging application, as shown in FIG. 3b, in response to a new SMS notification, a badge 311a is displayed on the icon 312b. In an embodiment of this application, display of a touch symbol corresponding to an application in a side region is irrelevant to whether the application is running. This is because a notification received by an application installed on the terminal is pushed to the terminal by a server. The application may be in a non-running state on the terminal, so that storage space for program running in the terminal is saved. For example, when the terminal receives a new notification of WeChat, and WeChat is not displayed on the home screen of the terminal and is not running in the background of the terminal, in response to the new notification, a touch symbol corresponding to WeChat is displayed in the side region of the current first interface of the terminal, to remind the user to process, by using the touch symbol, content associated with the new notification. In another embodiment of this application, display of the touch symbol is irrelevant to whether the application has a notification that has not been processed. For example, when the terminal receives a new notification of the application, and the application has no other notification in the notification center, or the touch symbol corresponding to the application does not correspond to any other notification of the application, in response to the new notification, the touch symbol corresponding to the application is displayed in the side region of the current first interface of the terminal, to remind the user to process, by using the touch symbol, content associated with the new notification. The user may process the banner 311 of the new notification by performing an operation on the touch symbol 305, and further process the content of the new notification. After the notification corresponding to the banner 311 is processed, the notification may be deleted from the notification center. When neither the banner 311 nor the touch symbol 305 receives a corresponding user operation within a predetermined time period, the banner 311 and the touch symbol 305 disappear from the first interface 310, and the notification corresponding to the banner 311 remains in the notification center of the terminal. In the embodiment shown in FIG. 3b of this application, in response to the terminal receiving the SMS notification or in response to the terminal displaying the banner 311, the banner 311 and the touch symbol 305 may simultaneously appear in the first interface 310. Compared with the banner 311, the touch symbol 305 is closer to the bottom region 307 of the first interface 310, to help the user conveniently process the content of the SMS notification, that is, the SMS message. In another embodiment of this application, the banner 311 and the touch symbol 305 sequentially appear in the first interface 310, and both stay in the first interface 310 for a period of time, to remind the user that the SMS message corresponding to the banner 311 can be processed by performing an operation on the touch symbol 305. FIG. 3b further shows an operation hot region of the touch symbol 305, for example, a touch region 304. The touch region 304 is closer to the bottom region 307 of the first interface 310 than the banner 311, that is, the touch region 304 is closer to the bottom of the first interface 310 than the banner or pop-up box 311. In addition, the touch region 304 is invisible in the first interface 310. In the embodiment shown in FIG. 3b, the touch region 304 is represented by a circular dashed-line box for ease of understanding. It should be learned that, in other embodiments of this application, the touch region 304 may be a region of any shape, or may be a varying region without a fixed shape. A size of the touch region 304 may be greater than a size of the touch symbol 305. For example, a display region of the touch symbol 305 is within the touch region 304. However, these should not be used as a limitation on the present disclosure. In an embodiment of this application, when the first interface 310 is an interface of the first application, the second application corresponding to the received new notification may be different from the first application. However, this should not be used as a limitation on this application. In another embodiment of this application, the second application may be the same as the first application.

In an embodiment of this application, the notification of the second application may be a push notification sent by a provider server of the second application to the terminal, for example, a WeChat push notification sent by a WeChat server (for example, a push platform). The notification of the second application may alternatively be a push notification sent to the terminal by another server (which is different from a server of the second application, for example, a terminal provider server), for example, a push notification sent to a terminal in an iOS system by using APNs (that is, Apple Push Notification Service), or a push notification sent to a terminal in an Android system by using GCM (Google Cloud Messaging). The notification of the second application may alternatively be an internal notification on the terminal, for example, a reminder notification of an alarm clock or a schedule. It should be understood that for some notifications of the second application, the terminal first receives the notification, and after detecting a related operation on a banner or a touch symbol of the notification, the terminal receives/downloads data of specific content of the notification from a provider server of the second application. For some notifications of the second application, the terminal first receives specific content of the notification, then generates the notification, and further displays a banner or a touch symbol.

The "notification" mentioned in this embodiment of this application should include but is not limited to notifications in the foregoing various forms, for example, include a system notification such as a system update notification, an alarm clock reminder notification, or a battery level alarm notification; and further include an application notification such as a WeChat notification, a hot news notification, or a flight notification. The "content" of the notification may be specific content corresponding to the notification, for example, specific content of a WeChat message, news, or flight information, or an indication of receiving an application notification. The "banner" may pop up, slide out, or flash in the top region of the first interface 310, and the banner may display at least some content of the notification, for example, display a version number of a system update, a group chat name of a WeChat message, or a sender and a subject of an email. The "touch symbol" 305 mentioned in this embodiment of this application may be used as an interface element of the notification or the banner, and is displayed on a touchscreen in a form of a light dot, a halo, a bubble, an icon, or the like, to remind the user of a touch and/or an operation. The "touch region" 304 mentioned in this embodiment of this application is a manipulation hot region of the touch symbol, that is, a region within a specific range centered on the touch symbol 305. Usually, the touch region is an invisible region that is not specially displayed, and can be touched by the user to perform a corresponding operation. In this embodiment of this application, the touch region 304 is a manipulation hot region that is in the side region 303 of the first interface 310 and that is centered on the touch symbol 305. It should be understood that features of the touch region in this embodiment of this application, for example, whether the touch region is hidden or displayed, a display color, size, or pattern of the touch region, and a shape of the touch region, are merely examples, and should not be used as a limitation on this application.

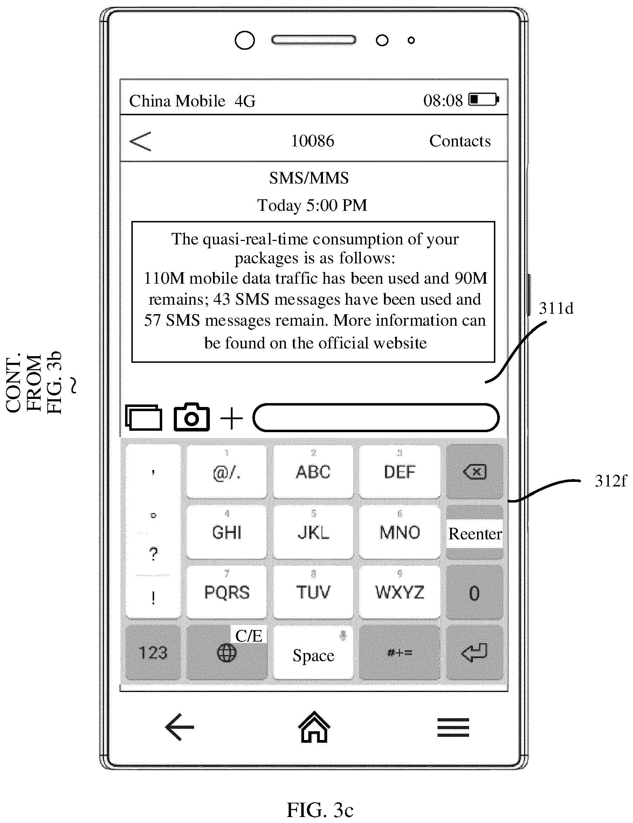

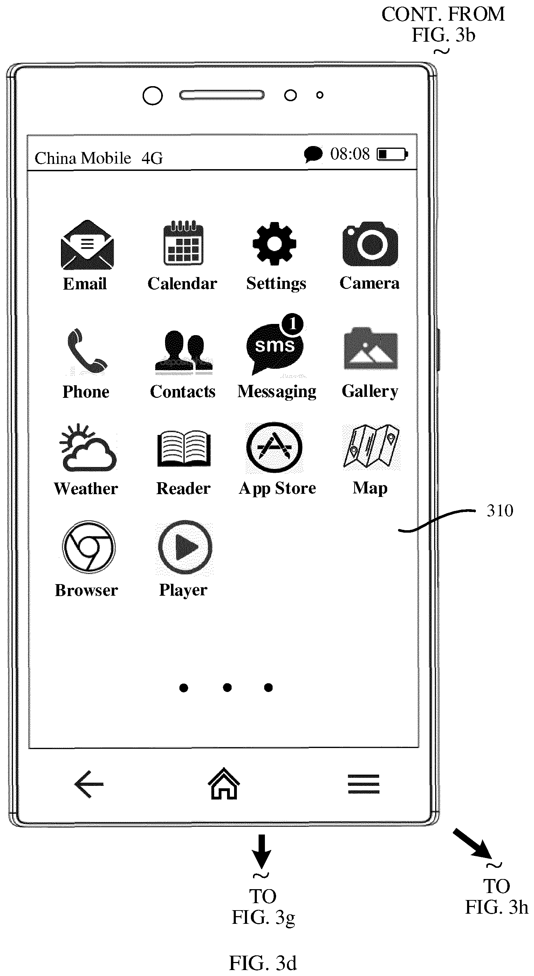

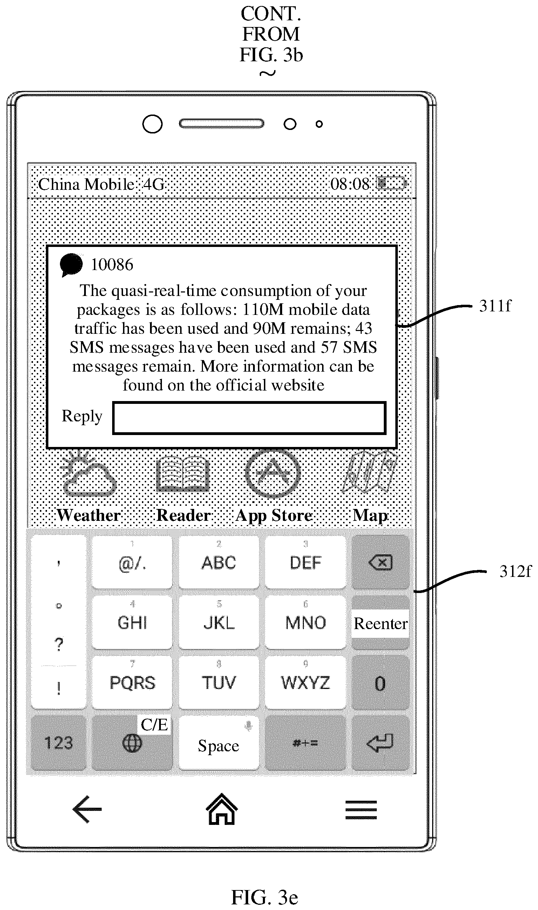

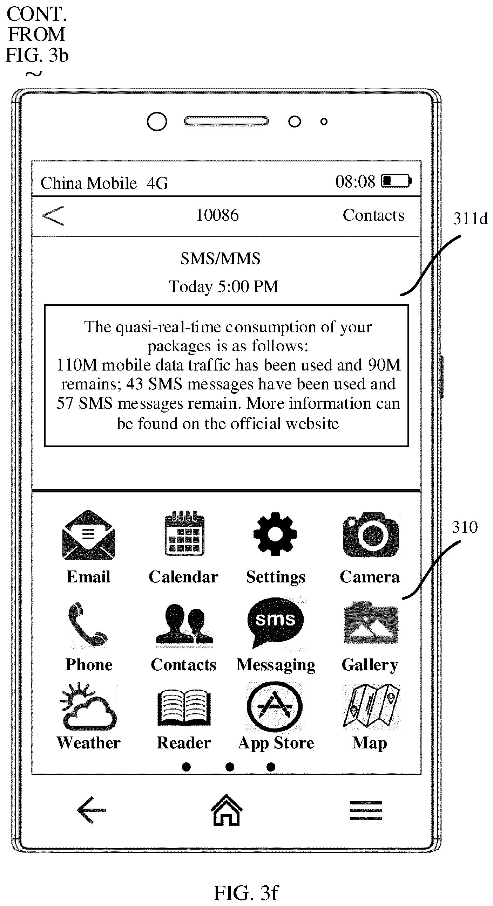

With reference to FIG. 3a to FIG. 3h again, as shown in FIG. 3b, a display location of the touch symbol 305 is farther away from the top region 302 of the first interface 310 than the banner 311, that is, closer to the bottom region 307 of the first interface 310. Therefore, compared with an operation on the banner 311, an operation performed by the user on the touch symbol 305 is more convenient. In this embodiment of this application, the touch symbol 305 may alternatively be displayed in the bottom region 307 of the first interface, or may be displayed between the top region 302 and the bottom region 307, as shown in the figure, and is closer to the bottom region 307. The user moves a finger based on appearance of the touch symbol 305, and performs a first operation in the touch region 304. After detecting the first operation, the intelligent terminal opens an application interface corresponding to the banner 311, for example, an SMS reply interface 311d and 312f, as shown in FIG. 3c. When the user moves the finger to the touch region 304 based on the appearance of the touch symbol 305, the user may further perform a second, a third, or a fourth operation. The intelligent terminal further detects these operations; and as shown in FIG. 3d, removes the banner 311, enables the corresponding touch symbol 305 to disappear, and restores display of the first interface 310 (in this case, an application icon for an unread notification may be displayed in the signal bar, and an updated badge may be displayed on an application icon on the home screen); or as shown in FIG. 3e, displays a reply window or card 311f and/or a keyboard region 312f of the notification corresponding to the banner 311, and semi-transparently displays content of the original first interface 310; or as shown in FIG. 3f, perform split-screen display on a part of the first interface 310 and a part of a second application interface 311d corresponding to the banner 311, to make it convenient for the user to perform a multi-task operation on the display 301. In an embodiment of this application, within a predetermined time period after the touch symbol 305 appears, if the terminal does not detect any operation on the touch symbol 305 or the banner 311, the touch symbol 305 and the banner 311 disappear. In addition, as shown in FIG. 3d, display of the first interface 310 is restored, and a small icon of the messaging application is displayed in the top notification bar to indicate the unread SMS notification. The first to the fourth operations may be preset or user-defined operations, and may be specifically one or a combination of a touch operation, a slide operation, a double-tap operation, a touch and hold operation, a pinch operation, a pressure operation, and a fingerprint operation, or may be a combination of the foregoing operations and face recognition, fingerprint recognition, voice recognition, or the like. Specifically, these operations include operations such as single-finger pressing, double-finger pressing, or three-finger pressing, single-tapping or double-tapping, sliding left, right, up, or down for a preset distance, touching and holding for a preset time period, pressing to a specific pressure threshold, and a combination thereof. Alternatively, these operations are combined with face recognition, fingerprint recognition, voice recognition, or the like. For example, when the content associated with the notification corresponding to the banner 311 is encrypted content, a finger operation of the user may cooperate with face recognition, fingerprint recognition, or voice recognition to view the encrypted content, or after the user performs a finger operation, the user is prompted to enter a password to view the encrypted content. These finger operations may be operations directly performed on the touch symbol, or may be operations performed at a specific distance from the touch symbol, that is, operations performed in the touch region but not directly on the touch symbol.

For example, when the touchscreen 301 of the terminal is displaying a home screen 310, as shown in FIG. 3a, if the terminal receives a new SMS notification, the banner 311 is displayed in the top region 302 of the home screen 310, and the touch symbol 305 is displayed in the side region 303. The banner 311 displays content of the notification, as shown in FIG. 3b. If the terminal detects a tap operation (that is, the first operation) in the touch region 304 of the touch symbol 305, the touchscreen 301 correspondingly displays an interface of the messaging application and displays an interface including an SMS message corresponding to the SMS notification, as shown in FIG. 3c. If the terminal detects a slide-up operation (that is, the second operation) in the touch region 304 of the touch symbol 305, correspondingly, the banner 311 and the touch symbol 305 disappear, and the touchscreen 301 restores to the first interface 310, as shown in FIG. 3d. If the terminal detects a slide-down operation (that is, the third operation) in the touch region 304 of the touch symbol 305, the touchscreen 301 correspondingly displays the SMS message corresponding to the SMS notification and a reply window thereof, for example, the card 311f for replying to the SMS message and the card 312f of the keyboard region, as shown in FIG. 3e. If the terminal detects a touch and hold operation (that is, the fourth operation) in the touch region 304 of the touch symbol 305, the display 301 correspondingly performs split-screen display, to simultaneously display the interface 311d that includes the SMS message corresponding to the SMS notification and a part of the first interface 310, as shown in FIG. 3f. In another embodiment of this application, when the terminal receives a new SMS notification with a verification code, an update notification of a system or an application, an alarm clock reminder notification, or the like, displays a banner or a floating box corresponding to the notification in the top region of the first interface, and displays a touch symbol in the side region of the first interface, the terminal may detect a fifth operation on the touch symbol, to process the notification in the background of the terminal, and restore display of the first interface on the display. For example, if the terminal detects a double-tap operation or a triple-tap operation (that is, the fifth operation) on the touch symbol, the terminal processes these notifications in the background: copying the verification code in the SMS message corresponding to the new SMS notification, starting update of the system or the application, setting the alarm clock to a later (10 minutes later) reminder, or the like.

It should be understood that content of the notification received by the terminal is different from detailed content corresponding to the notification. The content of the notification is content displayed in a banner, and the detailed content is content that can be seen in an application interface corresponding to the notification. The detailed content may alternatively be content in an interface displayed after the user performs an interaction operation on the notification, for example, an interface shown in FIG. 3c, FIG. 3e, or FIG. 3f. For example, the content that is of the notification and that is displayed in the banner may be "Received an SMS message", and the detailed content of the notification may be "What time do you get off work today?". For another example, when the detailed content corresponding to the notification received by the terminal is very long, the detailed content cannot be all displayed in the banner corresponding to the notification. Therefore, only a part of the detailed content corresponding to the notification is displayed in the banner. In some other cases, the content of the notification received by the terminal may alternatively be the same as the detailed content corresponding to the notification. For example, when detailed content corresponding to a notification received by WeChat is very simple, "When are you going home for dinner" displayed in the banner is the same as detailed content of the WeChat notification.

As described above, the copied verification code may be a part of the detailed content of the SMS message, and the verification code may be displayed in the banner when the banner appears, or may not be displayed in the banner.

When the terminal receives the update notification of the system or the application and displays the update notification in a form of a banner, content of the update notification may include an icon of the application and "You need to update the application for use", and detailed content of the update notification may be related to the to-be-updated application, for example, content such as description of the latest version of the application, a newly added function, a fixed bug, and other improvements.

Detailed content of the alarm clock that is set to later reminding through user interaction may or may not be displayed in a banner. For example, the banner corresponding to the alarm clock notification displays "08:00 alarm clock: punch in", or displays only "alarm clock". When the alarm clock notification that is set to later reminding expires at a preset time point (10 minutes later), the alarm clock notification or a new alarm clock notification is triggered to be displayed on the display of the terminal.

In response to the foregoing first, third, or fourth operation, an interface related to complete content of the SMS notification is displayed in the front region of the touchscreen 301, and the related interface may completely cover the first interface 310, or the related interface and the first interface 310 may be displayed on the display in a split-screen mode.

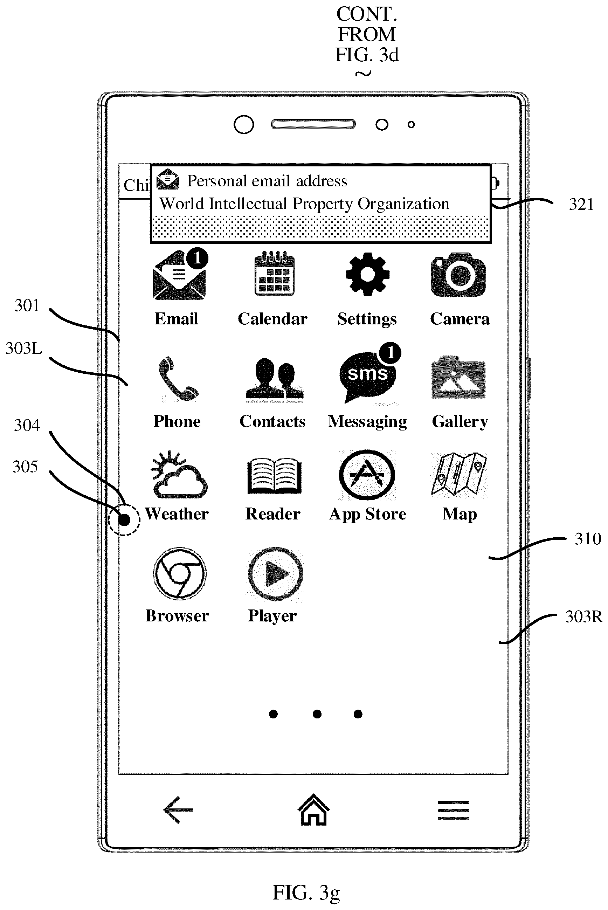

In an embodiment of this application, the touch symbol is unique. Each time the terminal receives a new notification and displays the notification in a form of a banner in the top region of the first interface, the unique touch symbol is correspondingly displayed in the side region of the first interface. In addition, both the touch symbol and the banner remain in the first interface for a period of time, to facilitate a user operation. An operation performed by the user on the unique touch symbol can only be configured to process a notification corresponding to a banner currently displayed on the terminal. If the terminal does not receive a new notification, the touch symbol is invisible. For example, with reference to FIG. 3b, FIG. 3d, and FIG. 3g, FIG. 3b shows that the terminal receives a new SMS notification and correspondingly displays the banner 311 and the touch symbol 305. If the terminal does not detect an operation on the banner 311 or the touch symbol 305 within a predetermined time period, the terminal restores display of the first interface 310 shown in FIG. 3d, and displays an SMS message icon in the signal bar, to indicate that there is an unprocessed SMS message. Subsequently, as shown in FIG. 3g, the terminal receives a new email notification and correspondingly displays a banner 321 and the same touch symbol 305. In this case, only the touch symbol 305 is displayed in the side region of the first interface 310, and any one of the first to the fifth operations that is performed in the touch region 304 of the touch symbol 305 can be configured to correspondingly open an interface of the email, ignore the banner 321 of the email notification, open a reply window of the email, open a split-screen display interface including an email interface and the first interface 310, or process content of the email in the background.

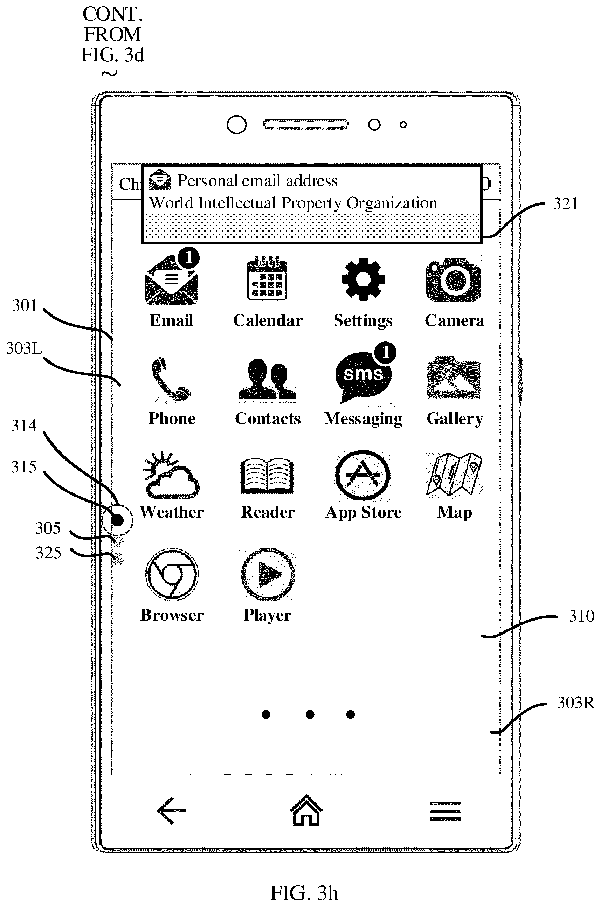

In another embodiment of this application, the touch symbol is not unique, different notifications may be corresponding to different touch symbols, and different applications may be corresponding to different touch symbols. The different touch symbols may be, for example, different colors, different shapes, different sizes, or different patterns, such as a touch point, a touch bar, a touch bubble, or a touch icon. The touch icon is an icon of an application corresponding to the notification or an icon related to an operating system and corresponding to the notification, for example, an icon of a system setting or an icon of a system update. It should be understood that features, for example, a color, a shape, a size, and a pattern, of the touch symbol in this embodiment of this application are merely used as examples, and should not be used as a limitation on this application. For example, with reference to FIG. 3b, FIG. 3d, and FIG. 3h, FIG. 3b shows that the terminal receives a new SMS notification and correspondingly displays the banner 311 and the touch symbol 305. If the terminal does not detect an operation on the banner 311 or the touch symbol 305 within a predetermined time period, the terminal restore display of the first interface 310 shown in FIG. 3d. Correspondingly, the SMS notification is set to an "unprocessed" notification. The touch symbol 305 corresponding to the "unprocessed" SMS notification is retained in a hidden form in the side display region of the touchscreen 301 for a subsequent operation by the user. It should be understood that, that the touch symbol is "hidden" means that the touch symbol is not displayed in the interface, instead of performing transparency processing on the touch symbol to enable the touch symbol to disappear from the interface. Subsequently, as shown in FIG. 3h, the terminal receives a new email notification and correspondingly displays a banner 321 and another touch symbol 315. In this case, the touch symbol 305 corresponding to at least one "unprocessed" SMS notification is still not displayed, and is invisible in the side region of the first interface 310. To be specific, when the terminal receives a new notification in the first interface 310, only the touch symbol 315 corresponding to the current new notification is displayed in the side region of the first interface 310, and any one of the first to the fifth operations that is performed in a touch region 314 of the touch symbol 315 can be configured to correspondingly open an interface of the email, ignore the banner 321 of the email notification, open a reply window of the email, open a split-screen display interface including an email interface and the first interface 310, or process content of the email in the background. In an embodiment of this application, as shown in FIG. 3h, although the touch symbol on the side is invisible, an icon of an application having an unread notification can be seen in the signal bar.

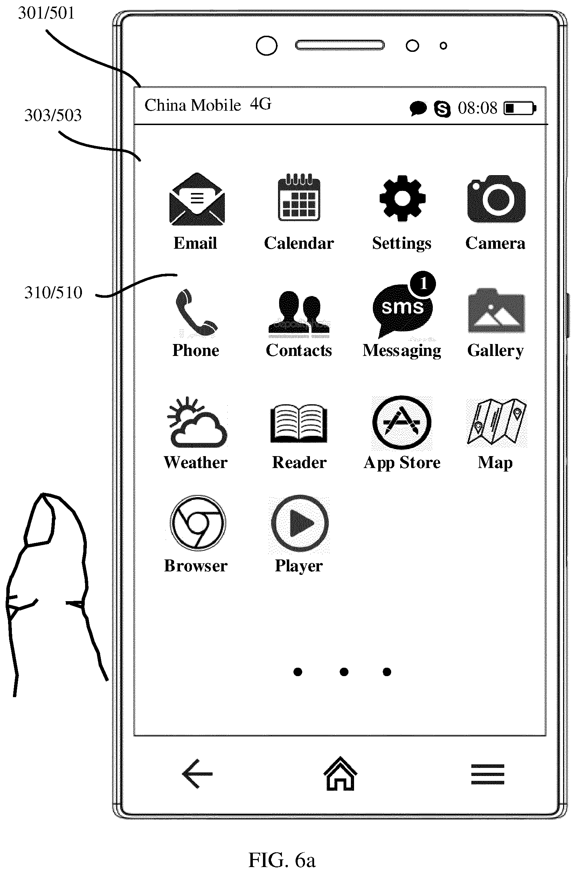

As shown in FIG. 3h, the touch symbol 305 corresponding to the "unprocessed" SMS notification and a touch symbol 325 corresponding to another "unprocessed" historical notification are invisible in the side region of the first interface 310. It should be understood that representing the touch symbols 305 and 325 in gray in FIG. 3h is only intended to describe this embodiment of this application more clearly. Preferably, the touch symbol corresponding to the unprocessed historical notification is not displayed because of a new notification pushed by another application, but is displayed only when the terminal receives a notification of a same type or a notification of the same application, and the notification corresponding to the touch symbol needs to be updated, or the terminal detects a corresponding operation in the side display region of the touchscreen. How to view an "unprocessed" historical notification, an update of a notification corresponding to a touch symbol, and the like is described in more detail below with reference to FIG. 6a to FIG. 6e to FIG. 8a to FIG. 8e.

In the embodiment in which the touch symbol is not unique, for a newly received notification, if the terminal detects that the first, second, third, fourth, or fifth operation is performed on a touch symbol of the new notification, the newly received notification is set to "processed". This indicates that the user has learned of the notification and performed required processing, for example, opening an application of the notification, ignoring the notification, replying to content of the notification, or viewing content of the notification in a split-screen mode. If the terminal does not detect any one of the first to fifth operations, the newly received notification is set to "unprocessed", and correspondingly, the touch symbol is retained in the side region of the first interface in a hidden form. In another embodiment of this application, if the user actively ignores the newly received notification, that is, the terminal detects that the second operation is performed on the touch symbol, the notification may also be set to "unprocessed". The touch symbol corresponding to the "unprocessed" notification is retained in the side region in a hidden form for subsequent processing by the user.

In an embodiment of this application, the touch symbol 315 may be displayed in both the left side region 303L and the right side region 303R of the first interface 310. In addition, the touch symbols 305 and 325 corresponding to "unprocessed" historical notifications may be respectively hidden in the left side region 303L and the right side region 303R. Displaying the touch symbol in both the left side region 303L and the right side region 303R facilitates an operation of the user on the touch symbol, and the user is not limited to performing an operation on the notification and the banner on only one side. In an embodiment of this application, a touch symbol in one of the left side region 303L and the right side region 303R is a mirror or a copy of that on the other side, results of operations on the touch symbols on both sides are consistent, and the touch symbols basically appear or disappear simultaneously, or are simultaneously displayed in the first interface 310 for at least a period of time. It should be understood that although the touch symbols are separately displayed on two sides of the first interface 310, the touch symbols may still be the unique touch symbol in the foregoing embodiment. To be specific, each time the terminal receives a new notification, a pair of the unique touch symbols is correspondingly displayed in the left side region 303L and the right side region 303R, and an operation on the pair of touch symbols is valid only for the notification corresponding to a currently displayed banner.

In an embodiment of this application, the terminal determines, based on a sensor, and/or an antenna signal, and/or historical use data of the user, whether the user holds the terminal with the left hand or the right hand, or whether the user performs an operation with the left hand or the right hand, and correspondingly displays the touch symbol in the left side region 303L or the right side region 303R of the first interface based on a determining result. For example, when the user performs an operation with the left hand, the touch symbol is displayed in the left side region 303L. Further, the terminal may display the touch symbol 305 in a selected region or a selected location in the side region 303 based on the sensor, and/or the antenna signal, and/or the historical use data of the user. For example, the terminal may determine that a hand of the user accidentally touches one or more locations in the side region 303 when the user performs another operation. Specifically, if the terminal determines that the user accidentally touches a location E in the side region 303 a plurality of times, when the terminal receives a new notification, the touch symbol is displayed at the location E or near the location E in the side region 303, for example, 0 to 3 cm above the location E. For another example, the terminal may determine one or more locations of performing another operation by the user. Specifically, when receiving a new notification, the terminal determines historical operation locations of the user in the middle region 303 within a period of time (for example, within 1 minute) before the terminal receives the notification, and determines a display location of the touch symbol 305 in the side region 303 based on the historical operation locations within 1 minute. The display location may be a location that is in the side region 303 and that is horizontally corresponding to an average value of the historical operation locations, or may be a location above the location that is in the side region 303 and that is horizontally corresponding to the average value, for example, a location 0 to 2 cm above the location that is in the side region 303 and that is horizontally corresponding to the average value. Therefore, the location at which the touch symbol is displayed in the side region 303 is close to an operation finger of the user. This makes it convenient for the user to process the new notification by performing an operation on the touch symbol in a current holding status and operation inertia, without changing the holding status or adding an additional operation finger. The technical solutions provided in the embodiments of this application help reduce a range of operating the new notification by the user, and further reduce an operation time, so that the user has quicker and better operation experience when processing content of the new notification.

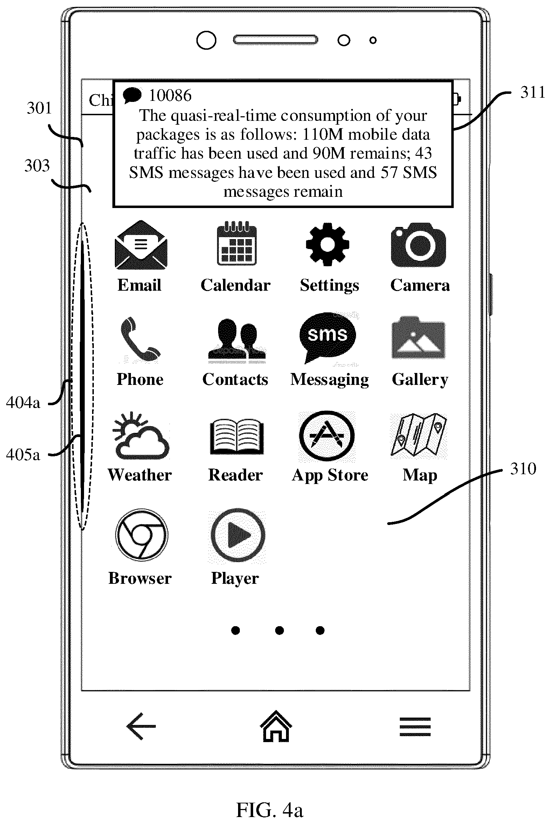

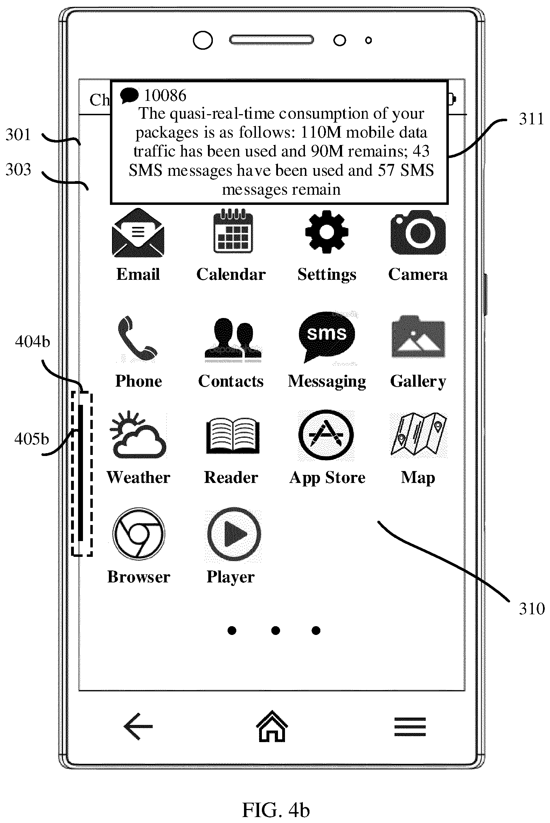

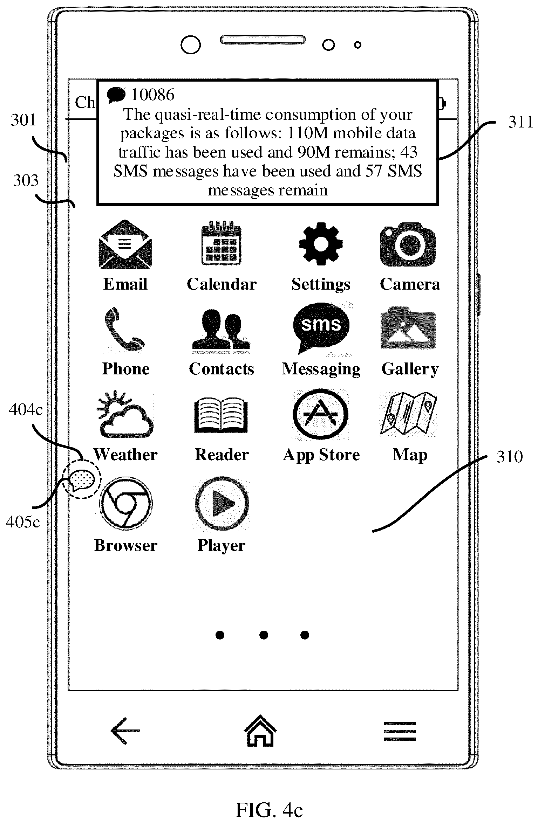

FIG. 4a to FIG. 4f are a schematic diagram depicting a scenario of a notification display method according to an embodiment of this application. As shown in the figure, a touch symbol (for example, 405a, 405b, or 405c) in a touch region (for example, 404a, 404b, or 404c) is displayed in the side region 303 of the first interface 310 in a form of a light bar, a halo, or a small icon. As shown in FIG. 4a and FIG. 4b, the user may perform the foregoing processing operation on content on the halo 405a or the light bar 405b or in a location at a specific distance from the halo 405a or the light bar 405b, that is, in the touch region 404a or 404b but not directly on the halo 405a or the light bar 405b. In other words, the intelligent terminal may detect an operation in the touch region 404a or 404b to process a notification corresponding to the operation. The notification is displayed in the top region of the first interface 310 in a form of the floating box 311. As shown in FIG. 4c, the touch symbol is displayed in the side display region 303 in a form of a touch icon 405c, and the touch icon 405c is a reduced form of an application icon corresponding to the new notification, for example, a reduced form of a messaging icon. An outline of the touch icon 405c is corresponding to an outline of the messaging icon, and/or details of the touch icon 405c are corresponding to details of the messaging icon. Based on display of the touch icon 405c, the user may perform the foregoing processing operation on notification content on the touch icon 405c or in a location at a specific distance from the touch icon 405c, that is, in the touch region 404c but not directly on the touch icon 405c. In other words, the intelligent terminal detects an operation in the touch region 404c, to process content of the notification, and/or display a corresponding interface on the display 301.

In an embodiment of this application, a touch symbol corresponding to a notification that is currently being pushed may be the halo 405a or the light bar 405b shown in FIG. 4a to FIG. 4f, and has a larger operation area compared with the touch icon 405c, to facilitate processing performed by the user on content of the notification. If the notification is not processed by the user in a timely manner, and the touch symbol of the notification needs to be hidden in the side region, as shown in the embodiment in FIG. 3h, the hidden touch symbol corresponding to the notification may be in a form of the touch icon 405c.

In another embodiment of this application, a touch symbol corresponding to a notification that is currently being pushed may be a unique interface element for processing the current notification in the side region, for example, a touch light dot, a touch halo, or a touch light bar. The touch symbol hidden in the side region may be corresponding to the notification or corresponding to an application. Therefore, a cluster of touch symbols may be generated through accumulation in the side region, and the cluster has a plurality of interface elements configured to process a notification that is not processed currently, for example, a touch light dot and a touch icon.

Therefore, when a notification is being pushed, a touch symbol displayed in the side region and a hidden touch symbol corresponding to the same notification may have shapes, and/or patterns, and/or colors, and/or sizes that are the same or different.

It should be understood that, in another embodiment of this application, the touch symbol may alternatively be in another form, and the touch region may be displayed in the side display region in another form or may not be displayed. In an embodiment of this application, display of the touch region and the touch symbol of the touch region may be customized by the user. This cannot be used as a limitation on this application.

It should be understood that, in the embodiment in FIG. 4a to FIG. 4c, in response to a new SMS notification, the banner 311 and the side symbol 405a, 405b, or 405c may appear in the first interface. When the first interface is a home screen and displays a messaging application icon, there may be no badge appearing on the icon.

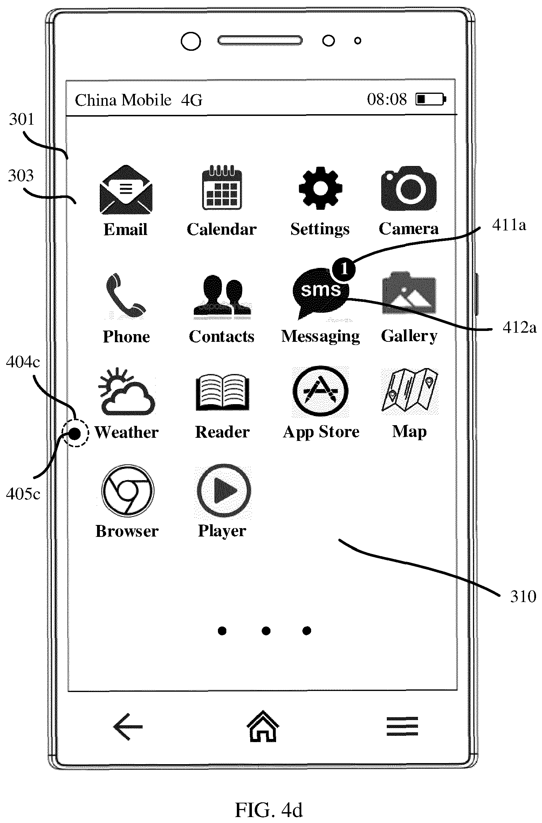

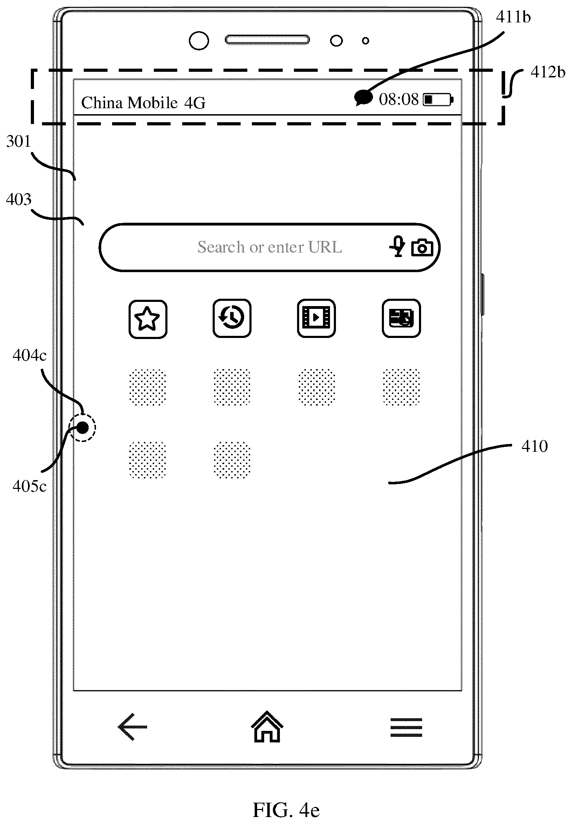

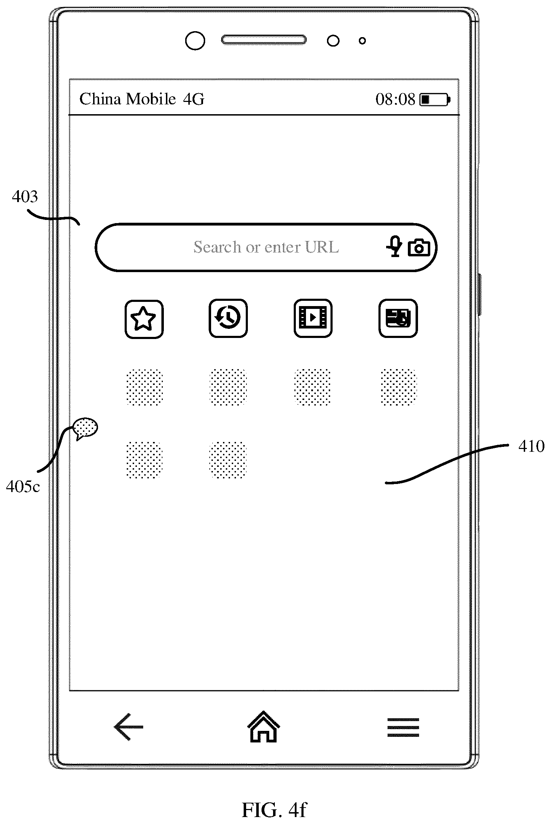

In another embodiment of this application, the user may set a notification display mode of the intelligent terminal. For example, in a privacy protection mode, a do-not-disturb mode, or another related mode, the user may set that when the terminal receives a new notification, a corresponding banner or floating box is not displayed in an interface displayed on the screen. Specifically, with reference to FIG. 4d, FIG. 4e, and FIG. 4f, when the terminal receives a new SMS notification, a banner or floating box corresponding to the SMS notification is not displayed in the first interface 310 shown in FIG. 4d or a second interface 410 shown in FIG. 4e and FIG. 4f.

In the embodiment shown in FIG. 4d, the first interface 310 may be a home screen of the terminal, and displays a messaging application icon 412a as an interface of a messaging application. When the terminal receives a new SMS message, a touch icon is displayed in the side region 303 of the first interface 310, to receive an operation to process notification content of the SMS message, and a symbol such as a badge 411a also appears on the messaging icon 412a, and is used as a prompt of receiving a new notification related to the application. In an embodiment, the touch icon may be a reduced form of the messaging icon 412a, for example, the touch icon 405c. In this way, the user may be prompted that the currently received notification is a notification related to the messaging application. In another embodiment, the touch icon may be in another form, for example, the touch icon 305, 405, 405a, or 405b, and the user may check, by performing an operation on the touch icon, a specific application related to the new notification. Alternatively, the user may determine, based on the badge 411a appearing on the messaging icon 412a, that the new notification is related to the messaging application. In this way, in the privacy protection mode, the do-not-disturb mode, or the another related mode, the user can prevent the content of the notification from appearing in the first interface 310, but still retain a shortcut interface for processing the notification, that is, the touch icon displayed in the side region.

In the embodiment shown in FIG. 4e, the second interface 410 is displayed on the screen of the terminal. The second interface 410 may be, for example, a browser interface and an interface of a notification bar/task bar 412b. In other words, the second interface 410 is a complete interface displayed on the display 301. In addition, the messaging application icon 412a or an interface icon of another application is not displayed in the second interface 410. In this case, when the terminal receives a new SMS message, a touch icon is displayed in a side region 403 of the second interface 410, to receive an operation to process notification content of the SMS message, and a symbol such as an icon 411b also appears in the notification bar/task bar 412b, and is used as a prompt of receiving a new notification related to the application. The icon 411b is a reduced form of the messaging icon 412a, and the touch icon may be the foregoing touch icon 305, 405, 405a, or 405b. Based on the icon 411b displayed in the notification bar/task bar 412b and the touch icon displayed in the side region, the user can prevent notification content from appearing in the second interface 410 in the privacy protection mode, the do-not-disturb mode, or the another related mode. However, the user can still determine which application is related to the newly received notification, and a shortcut interface for processing the notification is retained.

In the embodiment shown in FIG. 4f, the second interface 410 is also displayed on the screen of the terminal. When the terminal receives a new SMS message, the touch icon 405c is displayed in the side region 403 of the second interface 410, and in the second interface 410 shown in FIG. 4f, no symbol such as the icon 411b appears in the notification bar/task bar 412b. It should be understood that with development of terminals, a screen-to-body ratio of a screen of the terminal increases. For example, a "notched screen", a "dewdrop screen", and a "hole-punch screen" are several current screens designed under the development trend of bezel-less screens. In this case, a region of the notification bar/task bar 412b is gradually reduced. Therefore, a quantity of icons that can be displayed in the notification bar/task bar 412b is also limited. In the embodiment shown in FIG. 4f, the region of the notification bar/task bar 412b is not occupied for displaying an icon corresponding to a new notification. In addition, in the privacy protection mode, the do-not-disturb mode, or the another related mode, the user can prevent notification content from appearing in the second interface 410, but still retain a shortcut interface for processing the notification.

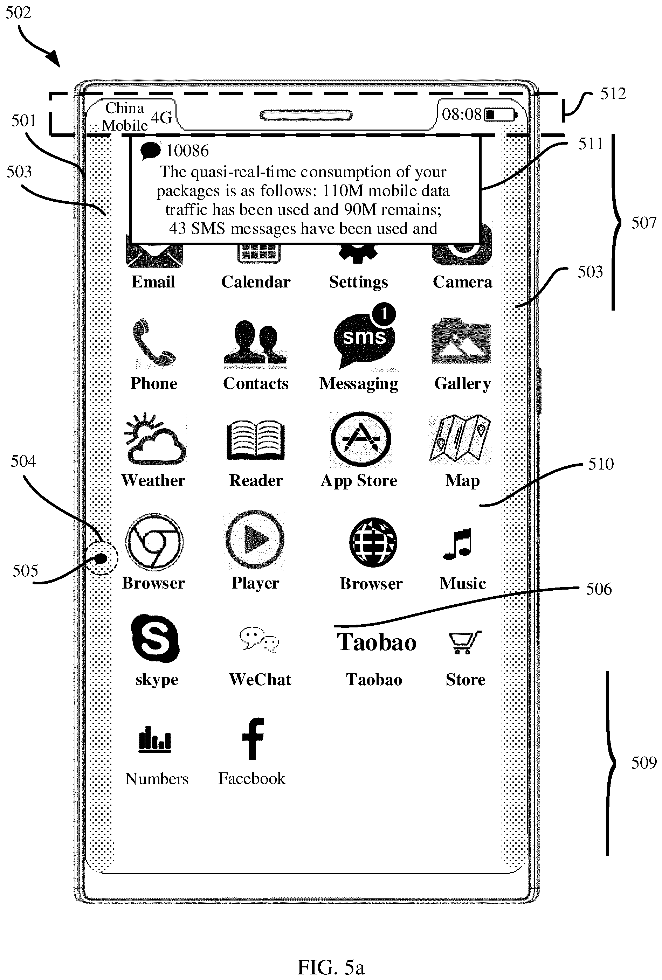

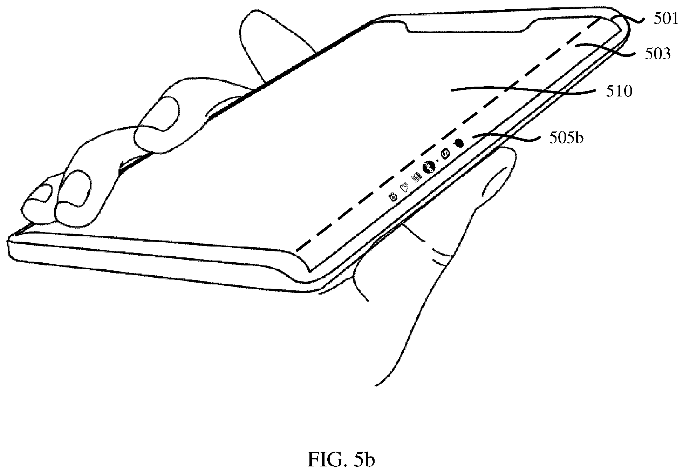

FIG. 5a and FIG. 5b are a schematic diagram depicting an intelligent terminal according to an embodiment of this application. As shown in FIG. 5a and FIG. 5b, the intelligent terminal includes a main body 502 and a touchscreen 501. The touchscreen 501 in FIG. 5a and FIG. 5b is a curved screen, and includes a flat display region and a curved display region located on at least one side of the flat display region. In the embodiment shown in FIG. 5a and FIG. 5b, left and right sides of the flat display region each include a curved display region with a specific curvature. The curved display region extends from the flat display region of the touchscreen 501 to an edge of the main body 502 of the intelligent terminal. In the embodiment shown in FIG. 5a, a curved part of the curved screen is represented in gray, to facilitate description of a part related to the curved screen in this application. In actual application, the curved part of the curved screen is usually not distinguished from a flat part of the curved screen by using a special color or form. Usually, the curved display region of the curved screen is an extension of the flat display region. When the display 501 displays a first interface 510, for example, displays an interface of a first application, the first interface 510 is generally displayed in the flat display region and is extended to the curved display region, so as to completely display the first interface 510 on the display 501 of the intelligent terminal. At least a part of a side region 503 of the first interface 510 is displayed in the curved display region. A front region 506 of the first interface 510 may or may not be displayed in the curved display region. When a new notification such as an SMS message of a second application appears in a top region 507 of the first interface 510 in a form of a banner or pop-up box 511, a touch symbol such as a touch icon 505 is displayed in at least a part of the curved display region in the side region 503 as an interface for the new SMS notification. Based on display of the touch icon 505, a user may perform a related operation in a touch region 504 to process the SMS message corresponding to the banner 511. A display location of the touch icon 505 and a manipulation location provided by the touch region 504 are closer to a bottom region 509 of the first interface 510 than a location of the banner 511. After detecting an operation in the touch region 504, for example, the first operation to the fifth operation in the foregoing embodiment, the intelligent terminal may perform related processing on the SMS message and/or display a corresponding interface, for example, deleting the notification, deleting the SMS message, replying to the SMS message, or copying a verification code in the SMS message. The technical solutions of this application provide a method for quickly displaying a notification and quickly processing the notification, to greatly improve operation experience of using a terminal by a user.

Compared with the touchscreen 301 in the foregoing embodiment, the curved screen 501 shown in FIG. 5a has the curved display region, and a size of an overall display region of the curved screen 501 greatly exceeds that of the touchscreen 301. With development of touchscreens on intelligent terminals, terminal devices with curved screens, bezel-less screens, and foldable screens are all further expanded in terms of display size. Therefore, difficulty of a one-hand operation of the user increases. With reference to FIG. 5a, when a touchscreen on an intelligent terminal is developed to a bezel-less screen, a region of a signal bar or status bar 512 is gradually reduced. Therefore, a quantity of unread icons that can be displayed in the signal bar 512 is also limited. In this case, the side display region, particularly the curved display region shown in FIG. 5a and FIG. 5b, of the touchscreen is fully used in this application. To be specific, when the intelligent terminal detects an operation in the side region of the first interface, a display interface related to a new notification is displayed on the display, to implement quick processing of the notification without operating a banner appearing on the top, an icon appearing in the status bar 512, or a corresponding application interface to process the new notification. When the user holds the intelligent terminal, a palm of the user can easily wrap a side of the touchscreen, so that it is very convenient for a finger to perform an operation at a location close to the side without greatly moving the finger. Therefore, performing a quick operation on the side such as the curved display region of the intelligent terminal helps improve operation experience of the user.

In some embodiments of this application, when notifications received by the terminal are "unprocessed" notifications, these notifications are retained in a form of touch symbols on a side of a curved screen or a non-curved screen, for example, hidden in the side region 303/503 of the first interface 310/510, for subsequent processing by the user. When one or more different touch symbols are retained or hidden, a hidden touch symbol cluster is formed in the side region.

The "touch symbol cluster" mentioned in this application is a combination of arranged touch symbols, and may include one or more touch points to form a touch point cluster, one or more touch bars to form a touch bar cluster, or one or more small application icons to form a touch icon cluster. Alternatively, the touch symbol cluster may be a combined cluster including one or more touch points, and/or touch bars, and/or touch icons. Each touch point, touch bar, or small icon may be corresponding to one notification, or corresponding to one application installed on the terminal.

For example, when the intelligent terminal receives a pushed notification of the second application in a screen-off (also referred to as black-screen) state, but does not detect a corresponding operation for processing the pushed notification, a touch symbol corresponding to the unprocessed notification is hidden in the side region 303/503. For another example, when the intelligent terminal receives a pushed notification of the second application in a screen-on (screen-unlocked or screen-locked) state, but does not display a banner 311 or 511 of the notification, and the terminal does not detect a corresponding operation for processing the pushed notification, a touch symbol corresponding to the unprocessed notification is also hidden in the side region 303/503. For another example, in the scenario shown in FIG. 3b, FIG. 4a, FIG. 4b, FIG. 4c, FIG. 4e, FIG. 4f, or FIG. 5a, when the intelligent terminal (in a screen-off or screen-on state) receives a pushed notification of the second application and displays a touch symbol and a first symbol (where the first symbol is a corresponding banner 311 or 511, a badge 411a of the application, or a task bar icon 411b), if the terminal does not detect a corresponding operation for processing the pushed content or detects that the user actively ignores the notification (for example, the foregoing second operation), some first symbols are hidden, for example, the banner or pop-up box 311 or 511 is hidden, and the touch symbol corresponding to the unprocessed notification is also hidden in the side region 303/503.

In an embodiment of this application, touch symbols or a touch symbol cluster corresponding to these unprocessed and retained notifications are/is hidden in the side region 303/503, and are/is not displayed in the side region 303/503 such as the curved region 503 until the intelligent terminal detects a corresponding operation. As shown in FIG. 5b, when the user holds the terminal having the curved screen 501 with one hand, a thumb of the user touches the curved region 503 on the curved screen 501, and a plurality of touch symbols, also referred to as a touch symbol cluster 505b, are displayed on a side. The curved region 503 is displayed in the curved display region of the curved screen 501, and the touch symbol cluster 505b may be displayed following an operation location of the user. This is described in more detail in FIG. 6a to FIG. 6e. In the embodiment shown in FIG. 5b, the user touches a right curved region 503 of the curved screen 501, and the touch symbol cluster is displayed on the right side. In this solution, the curved region of the curved screen is well used, and because it is a very convenient operation for the user to touch the curved region, this solution makes it very convenient for the user to view the notification corresponding to the touch symbol, so that operation experience of processing the notification by the user can be greatly improved. In the embodiment of this application, the side display region includes the curved display region of the curved screen, and the curved display region is adjacent to a left edge and/or a right edge of the curved screen.

When the user views and/or processes notifications by using the touch symbol cluster 505b shown in FIG. 5b, after these notifications are processed, touch symbols corresponding to the notifications are removed from the touch symbol cluster (at the same time, the processed notifications are deleted from the notification center). When it is determined that a new pushed notification is an "unprocessed" notification, a touch symbol corresponding to the new pushed notification is displayed and/or hidden in the touch symbol cluster (at the same time, the new notification is also added to the notification center). These touch symbols corresponding to the notifications are referred to as "dynamic touch symbols" in this application. In another embodiment of this application, the touch symbol cluster may further include a "fixed touch symbol" or a "preset touch symbol", which is always retained in the touch symbol cluster, and is displayed in the side region 303/503 of the first interface 310/510 with a corresponding operation. The fixed touch symbol may be corresponding to an application, or may be corresponding to an application option of an application. The "application option" refers to a function, an option, or a related interface related to the application. For example, a payment code may be considered as a function or an option of Alipay, and a WeChat group chat "GROUP" may be considered as a function or an option of WeChat. In addition, "fixed" means that even if the user opens an application or an application option corresponding to the fixed touch symbol by using the fixed touch symbol, the fixed touch symbol is not removed from the touch symbol cluster, and in particular, a location sequence of the fixed touch symbol in the touch symbol cluster is not dynamically adjusted. However, location sequences of both the dynamic touch symbol and the fixed touch symbol may be adjusted based on initial settings of the user or by dragging the symbols in the cluster by the user. Similar to the dynamic touch symbol, the fixed touch symbol may be in a form of a touch point, a touch bar, a touch icon, or the like. This is described in more detail below.

The following further describes the embodiments of this application by using a touch symbol cluster including a dynamic touch symbol and/or a fixed touch symbol as an example.

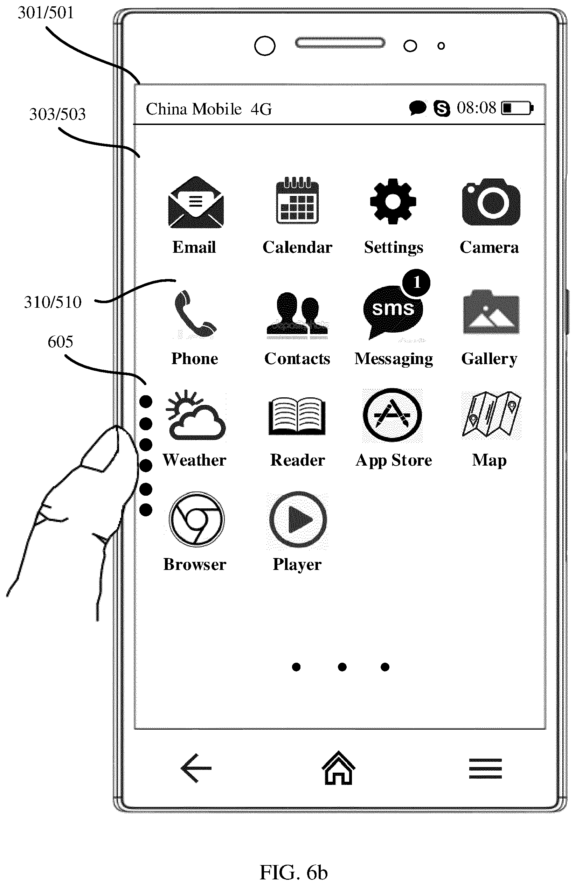

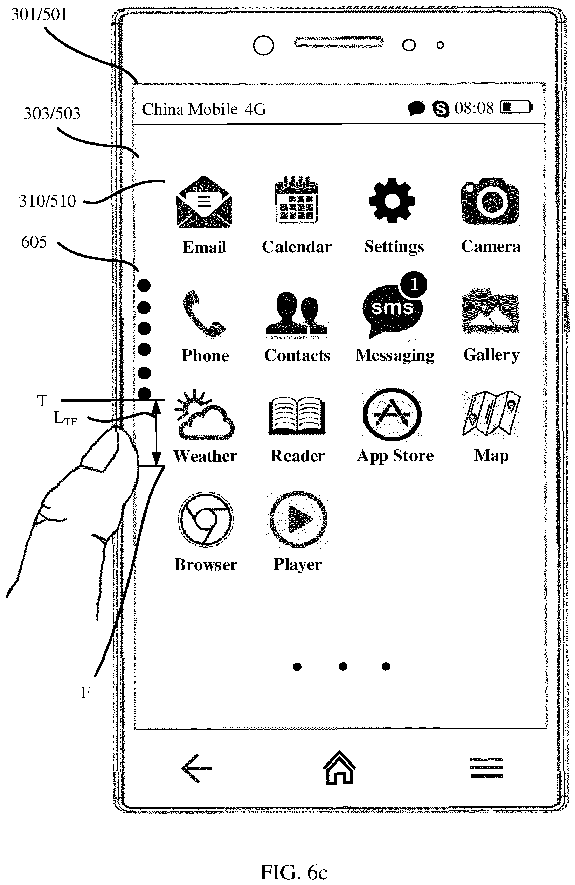

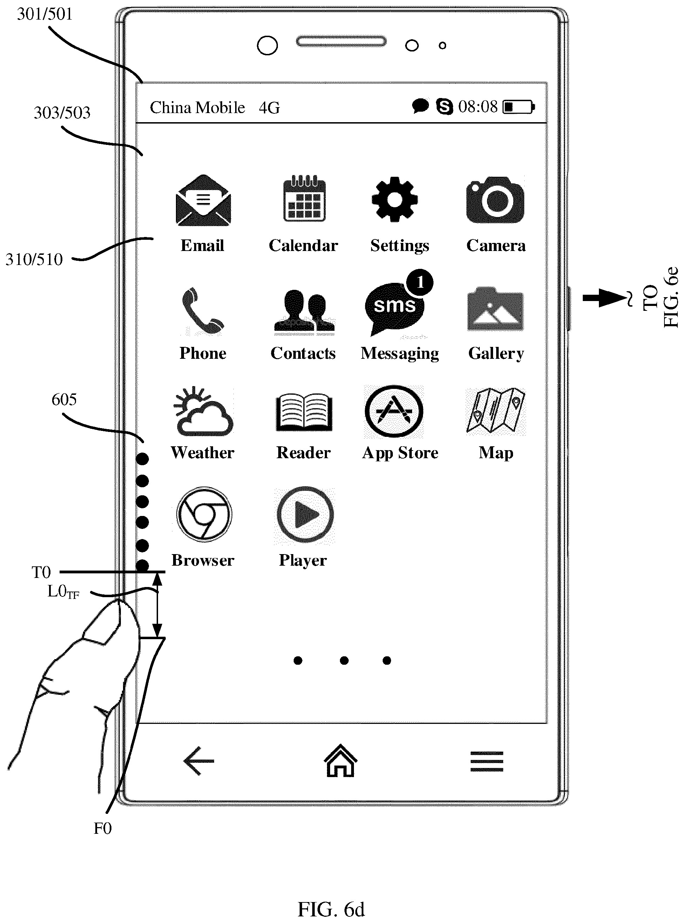

FIG. 6a to FIG. 6e are a schematic diagram depicting a scenario of a notification display method according to an embodiment of this application. With reference to FIG. 6a to FIG. 6d, when the terminal device receives a plurality of notifications, and the user does not process content of these notifications in a timely manner, the terminal device retains one or more touch symbols, for example, a touch point, a touch bar, or a touch icon of an application, corresponding to these notifications in the side region 303/503 of the first interface 310/510. In addition, the touch symbol may further be retained in a hidden manner (that is, retained in the background). In the embodiment shown in FIG. 6a, a touch symbol corresponding to an unprocessed notification is hidden on the display 301/501, and is displayed in the side region 303/503 of the first interface 310/510 after a user operation is detected, as shown in FIG. 6b, FIG. 6c, or FIG. 6d. In another embodiment of this application, a touch symbol corresponding to an unprocessed notification is always displayed in the side region 303/503 of the first interface 310/510, and is not hidden, so that the user can process the notification at any time, for example, view content of the notification or delete the notification.

In the embodiment shown in FIG. 6a, the touch symbol or a touch symbol cluster corresponding to the unprocessed notification is hidden on the display 301/501, so that display of the first interface 310/510 is not blocked, and another operation performed by the user on the terminal is not interfered. When the user needs to process the notifications, the user may touch the side region 303/503 of the first interface 310/510. For example, a user finger touches, taps, touches and holds, or slides up in the side region 303/503. When the intelligent terminal detects a corresponding operation, the touch symbol cluster is displayed in the side region 303/503. The displayed touch symbol cluster covers at least a part of the side region 303/503 of the first interface 310/510. It should be understood that there may be one or more touch symbols in the touch symbol cluster. Because a dynamic touch symbol disappears from the cluster after a notification corresponding to the dynamic touch symbol is processed, and is added to the cluster when a new notification is received, a quantity of touch symbols in the touch symbol cluster is variable. There may be one or more touch symbols, or there may be no touch symbol. In an embodiment of this application, the terminal detects a tap or touch operation in the side region 303/503 of the first interface 310/510, to display the touch symbol cluster. In another embodiment of this application, the terminal does not display the touch symbol cluster when detecting a tap or touch operation in the side region 303/503, but displays the touch symbol cluster only when detecting a double-tap operation or an operation of sliding up a specific distance in the side region 303/503. This avoids a case in which simple operations frequently cause accidental touch, and consequently the touch symbol cluster is frequently displayed and hidden, and another operation on the terminal is interfered. In the embodiment shown in FIG. 6b, FIG. 6c, and FIG. 6d, when the intelligent terminal detects a touch of the finger of the user in the side region 303/503 of the first interface 310/510, a touch symbol cluster, for example, a touch point cluster 605, corresponding to an unprocessed notification is displayed in the side region 303/503. In an embodiment of this application, the touch symbol cluster is displayed at a fixed location in the side region, for example, a middle location, a lower middle location, or an upper middle location in the side region 303/503. As shown in FIG. 6b, a location of the touch point cluster 605 is fixed, and a location at which the user operates the finger may be just on the cluster 605.

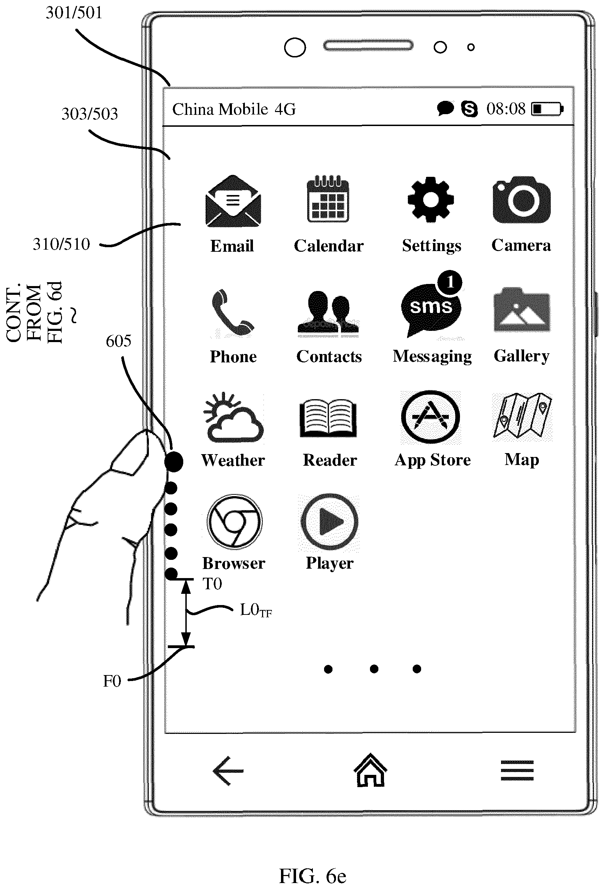

In another embodiment of this application, a location of a touch operation or a predetermined operation detected in the side region 303/503 may not be on the touch point cluster 605, but this does not affect that the touch point cluster 605 is displayed in response to the operation. In another embodiment of this application, a display location of the touch symbol cluster varies with a touch or operation location detected by the terminal in the side region. For example, the display location of the touch symbol cluster follows a location of an operation triggered by the user in the side region. Specifically, the touch symbol cluster 605 may be displayed at a specific distance above a touch location detected by the terminal in the side region 303/503 of the first interface 310/510. As shown in FIG. 6c and FIG. 6d, a vertical distance between a lowermost end T of the touch point cluster 605 and a detected touch location F (that is, a touch location of the user finger in the side display region 303/503) may be a preset height L_{TF}. Specifically, the lowermost end T of the touch point cluster 605 is above the touch location F by a distance L_{TF}. A display location of the touch point cluster 605 varies with the detected touch location F. Therefore, regardless of where the operation finger of the user touches, the cluster 605 is not blocked. In addition, the user can interact with the cluster 605 only by moving the operation finger by a predetermined distance, and each interaction operation can be completed by using operation inertia. Specifically, as shown in FIG. 6d, when the user touches F0 in the side region 303/503, the touch point cluster 605 is displayed and the bottom end of the touch point cluster 605 is T0, where T0 is above F0 by a distance L0_{TF}. When the user slides up from F0 to or raises a hand to tap a touch point in the cluster 605, a location of the cluster 605 does not change with an operation location of the user. As shown in FIG. 6e, in response to the slide-up or tap operation of the user, the corresponding touch point (for example, the first touch point in the cluster 605) may be displayed in an animated manner, for example, may be enlarged, highlighted, flicked, or moved.

In an embodiment of this application, the preset height L_{TF} may be set within a specific range, for example, 0 cm ≤ L_{TF} ≤ 2 cm. Alternatively, the preset height L_{TF} may be set to a fixed value, for example, L_{TF} = 0.5 cm, that is, a location for displaying the touch point cluster 605 in the side region 303/503 is a location at which a vertical distance between the lowest end T of the touch point cluster 605 and the detected touch location F is 0.5 cm. It should be understood that setting the preset height L_{TF} to 0.5 cm is merely an example, and should not be used as a limitation on this application. In another embodiment of this application, L_{TF} may be set to another value, for example, 0.3 cm, 1.2 cm, or 2.0 cm. In the embodiment shown in FIG. 6c and FIG. 6d, the touch location F may be determined based on a touch point of the user in the side region 303/503, for example, a single-tap point of the user in the region 303/503, a touch point of touching and holding, or either of two points of a double-tap. However, it should be understood that this should not be used as a limitation on this application. In another embodiment of this application, the touch point cluster 605 is displayed based on a predetermined operation performed by the user in the side region 303/503, for example, sliding a preset distance. When detecting the predetermined operation in the region 303/503, the intelligent terminal displays the touch point cluster 605. A display location of the touch point cluster 605 is determined based on a start location of the slide operation, an end location of the slide operation, or an intermediate location of the slide operation detected in the region 303/503.

In still another embodiment of this application, when a location of a touch operation or a predetermined operation detected by the terminal in the region 303/503 is in an upper middle part of the region 303/503, and therefore the touch point cluster 605 cannot be completely displayed at the distance L_{TF} above the touch or operation location, the terminal completely displays the touch point cluster 605. In this case, a display location of the touch point cluster 605 may overlap the operation location. Alternatively, in this case, a display location of the touch point cluster 605 may be set to a preset location, for example, a fixed location shown in FIG. 6b. However, it should be understood that this should not be used as a limitation on this application. In another embodiment of this application, when the touch point cluster 605 cannot be completely displayed at the distance L_{TF} above the touch or operation location, the touch point cluster 605 may still be displayed at the predetermined distance L_{TF} above the touch or operation location. In this case, the displayed touch point cluster 605 may not be complete, that is, only some touch points are displayed due to space limitation. In this case, the displayed touch points are preferably touch points corresponding to recently received notifications ranked according to notification time, or preferably correspond to notifications in which a system determines that the user is more interested. For example, the user may predefine priorities of applications, and display corresponding touch points in the incomplete cluster 605 according to the priorities. Alternatively, the user may predefine priorities of applications by setting a keyword, or the terminal may predetermine priorities of applications based on time and a frequency of using each application by the user. For another example, the terminal may further predetermine importance of a newly received notification by using an artificial intelligence AI algorithm, and preferentially display, in the incomplete cluster 605 based on the importance of the notification, a touch point corresponding to a more important notification. For example, touch points are displayed in the following order: "very important", "important", and "not important".

In any one of the foregoing embodiments of this application, after the touch point cluster 605 is displayed due to the operation detected in the side region 303/503, a location of the touch point cluster 605 may be fixed, so that the user starts to process corresponding notification content. Alternatively, a location of the displayed touch point cluster 605 may be changed or adjusted again based on a subsequently detected operation, to adjust the touch point cluster 605 to a more convenient location to start to process corresponding notification content. For example, after the touch point cluster 605 is displayed, the user may adjust an up-down location of the touch point cluster 605 in the side region 303/503 by performing touching and holding and then sliding up and down at a location between upper and lower ends of the touch point cluster 605.

The following uses a touch point cluster as an example to describe in detail a plurality of embodiments of a notification or an application corresponding to a dynamic touch symbol in this application.

In an embodiment of this application, the touch point cluster includes a dynamic touch point, and each dynamic touch point is corresponding to a different application and represents a latest received notification in the application. For example, a first dynamic touch point corresponds to messaging and represents a latest received SMS notification, a second dynamic touch point corresponds to WeChat and represents a latest received WeChat notification, and a third dynamic touch point corresponds to QQ and represents a latest received QQ message notification.

In another embodiment of this application, the touch point cluster includes a dynamic touch point, each dynamic touch point is corresponding to a different application, and each dynamic touch point represents a specific quantity of unprocessed notifications (for example, 10 or fewer unprocessed notifications) corresponding to the application or all unprocessed notifications corresponding to the application. For example, a first dynamic touch point corresponds to a messaging application and represents all unprocessed (for example, non-viewed or non-replied) SMS notifications, a second dynamic touch point corresponds to WeChat and represents all unprocessed (for example, unread or non-replied) WeChat notifications, and a third dynamic touch point corresponds to QQ and represents all unprocessed (for example, unread or non-replied) QQ message notifications. In this embodiment, a quantity of notifications corresponding to one touch point may be limited. For example, each dynamic touch point may be corresponding to a notification list of not more than 10 unprocessed notifications received by a same application. In addition, the not more than 10 unprocessed notifications are ranked by time in the notification list. When a quantity of unprocessed notifications in the application exceeds 10, an earliest unprocessed notification is removed from the notification list corresponding to the dynamic touch point, and a latest notification is added to the front end of the list. It should be understood that, in this embodiment, the quantity of notifications that may be corresponding to each dynamic touch point is merely used as an example, and should not be used as a limitation on this application.

In still another embodiment of this application, the touch point cluster includes a dynamic touch point, each touch point corresponds to one piece of unread pushed content, and a plurality of touch points may respectively correspond to a plurality of unprocessed notifications received in a same application. For example, both a first dynamic touch point and a second dynamic touch point correspond to a messaging application and respectively represent two unprocessed SMS notifications, both a third dynamic touch point and a fourth dynamic touch point correspond to WeChat and respectively represent two unprocessed WeChat notifications, and both a fifth dynamic touch point and a sixth dynamic touch point correspond to QQ and respectively represent two unprocessed QQ message notifications. In this embodiment, a quantity of a plurality of dynamic touch points corresponding to a same application may be limited. For example, a same application may correspond to no more than three dynamic touch points, that is, no more than three unread notifications are retained. However, this is not a limitation on this application.

The foregoing embodiments may be combined with each other. A maximum quantity of dynamic touch symbols in a cluster may further be set, for example, a maximum of five dynamic touch symbols are included.

Both a dynamic touch symbol in a touch symbol cluster and an unprocessed notification corresponding to the dynamic touch symbol are dynamic, and the dynamic touch symbol may appear in the touch symbol cluster as a new notification is pushed to the terminal, or may disappear from the touch symbol cluster as the corresponding notification is processed. Alternatively, a notification list in the dynamic touch symbol may be adjusted as a new notification is pushed to the terminal or the corresponding notification is processed. Therefore, when the intelligent terminal has received a plurality of notifications that have not been processed by the user and need to be retained for subsequent processing, the terminal manages a correspondence between these notifications and touch symbols in the background, and manages touch symbols in the touch symbol cluster, ranking of the touch symbols, and a notification list in each touch symbol in the background. In an embodiment of this application, notifications corresponding to touch symbols in the touch symbol cluster or notifications in a corresponding notification list may be separately mapped to notifications retained in the notification center. When the user views and/or processes a notification in the notification center, or views and/or processes a notification in an application interface, or performs an operation in the touch symbol cluster to view and/or process a notification, a notification mapped to the notification and corresponding to a touch symbol or the notification center is deleted accordingly. Touch symbols in the touch symbol cluster may be arranged in the touch symbol cluster in a time order in which the terminal receives notifications corresponding to the touch symbols, or may be arranged in the touch symbol cluster in an order predefined by the user or a system. For example, when arrangement is performed in the touch symbol cluster in a time order of notifications, a touch symbol corresponding to a latest received notification is ranked first or last in the cluster, and correspondingly, an earliest received touch symbol is ranked last or first in the cluster. In this embodiment of this application, a method for updating and ranking touch symbols in the cluster is described by using an example in which an upper touch symbol in the cluster indicates a later time point and a lower touch symbol in the cluster indicates an earlier time point. To be specific, an upper touch symbol arranged in the cluster corresponds to a later received unprocessed notification.

Specifically, in an embodiment of this application, it may be specified that a quantity of dynamic touch symbols in the touch symbol cluster does not exceed a first predetermined value A1. Based on the predetermined value A1, a method for ranking the dynamic touch symbols in the cluster and a method for matching a notification corresponding to each dynamic touch symbol may include but are not limited to the following manners:
(1) When one dynamic touch symbol corresponds to a latest notification of only one application, there are the following cases:
   a. When the terminal determines that a dynamic touch symbol D₁ corresponding to a newly received notification N₁ that has not been processed and needs to be retained (that is, retained in the notification center or the touch symbol cluster of the terminal) is not in a current cluster, and a quantity of dynamic touch symbols in the current cluster is less than A1, the terminal adds the dynamic touch symbol D₁ to the cluster and arranges the dynamic touch symbol D₁ at the top of the cluster, to indicate that the dynamic touch symbol D₁ corresponds to the latest received notification N₁.
   b. When the terminal determines that a dynamic touch symbol D₁ corresponding to a newly received notification N₁ that has not been processed and needs to be retained is not in a current cluster, and a quantity of dynamic touch symbols in the current cluster is equal to A1, the terminal removes a bottom dynamic touch symbol D₀ from the cluster (an unprocessed notification N₀ originally corresponding to the removed dynamic touch symbol D₀ is still retained in the notification center for viewing/processing by the user), and the removed dynamic touch symbol D₀ no longer corresponds to the unprocessed notification N₀ (to be specific, when the dynamic touch symbol D₀ is added to the touch symbol cluster again based on a notification N₀' newly received by the terminal and the notification N₀ has not been processed, the dynamic touch symbol D₀ corresponds to only the new unprocessed notification N₀', and the notification N₀ is retained in the notification center of the terminal until being processed). In addition, the terminal adds the dynamic touch symbol D₁ to the cluster and arranges the dynamic touch symbol D₁ at the top of the cluster, to indicate that the dynamic touch symbol D₁ corresponds to the latest received notification N₁.
   c. When the terminal determines that a dynamic touch symbol D₁ corresponding to a newly received notification N₁ that has not been processed and needs to be retained has been displayed in a current cluster, the terminal replaces an original notification N₁' corresponding to the dynamic touch symbol D₁ with the new notification N₁ (the replaced notification N₁' is still retained in the notification center for viewing by the user until being processed) and adjusts a rank of the dynamic touch symbol D₁ to the top of the cluster, to indicate that the dynamic touch symbol D₁ corresponds to the latest received notification N₁.
(2) When one dynamic touch symbol is corresponding to a plurality of notifications of one application, that is, corresponding to a notification list of one application (where notifications in the notification list are ranked by time), and the dynamic touch symbol is ranked in the cluster based on time of a latest notification in the notification list corresponding to the dynamic touch symbol, there are the following cases:
   a. When the terminal determines that a dynamic touch symbol D₂ corresponding to a newly received notification N₂ that has not been processed and needs to be retained (that is, retained in the notification center or the touch symbol cluster of the terminal) is not in a current cluster, and a quantity of dynamic touch symbols in the current cluster is less than A1, the terminal adds the dynamic touch symbol D₂ to the cluster and arranges the dynamic touch symbol D₂ at the top of the cluster. In this case, a notification list corresponding to the dynamic touch symbol D₂ includes only the latest received notification N₂.
   b. When the terminal determines that a dynamic touch symbol D₂ corresponding to a newly received notification N₂ that has not been processed and needs to be retained is not in a current cluster, and a quantity of dynamic touch symbols in the current cluster is equal to A1, the terminal removes a bottom dynamic touch symbol D₀ from the cluster, and clears a notification list corresponding to the dynamic touch symbol D₀ (all unprocessed notifications in the notification list originally corresponding to the removed dynamic touch symbol D₀ are still retained in the notification center for viewing/processing by the user, and when the terminal receives a notification N₀ corresponding to the dynamic touch symbol D₀, only the new notification N₀ is in a notification list corresponding to the symbol D₀ added to the touch symbol cluster again). In addition, the terminal adds the dynamic touch symbol D₂ to the cluster and arranges the dynamic touch symbol D₂ at the top of the cluster. In this case, a notification list corresponding to the dynamic touch symbol D₂ includes only the latest received notification N₂.
   c. When the terminal determines that a dynamic touch symbol D₂ corresponding to a newly received notification N₂ that has not been processed and needs to be retained has been displayed in a current cluster, the terminal updates a notification list corresponding to the dynamic touch symbol D₂ to include the notification N2, and adjusts a rank of the dynamic touch symbol D₂ to the top of the cluster, to indicate that the dynamic touch symbol D₂ corresponds to the latest received notification N₂.
      In an embodiment of this application, a quantity of notifications in the notification list corresponding to the dynamic touch symbol D₂ does not exceed a third predetermined value A3.
      i) When a quantity of notifications currently included in the notification list corresponding to the dynamic touch symbol D₂ is less than A3, the notification N₂ is added to the notification list and arranged at the top of the list, to indicate that the notification N₂ is the latest received notification in the notification list.
      ii) When a quantity of notifications currently included in the notification list corresponding to the dynamic touch symbol D₂ is equal to A3, an earliest received notification N₀' in the notification list is removed from the list (the removed notification N₀' is still retained in the notification center for viewing/processing by the user), and the latest received notification N₂ is added to the notification list and arranged at the top of the list.
(3) When a plurality of dynamic touch symbols correspond to one application, and each dynamic touch symbol corresponds to one notification of the application, there are the following cases:
   a. When the terminal determines that a newly received notification N₃ has not been processed and needs to be retained, and determines that a quantity of dynamic touch symbols in a current cluster is less than A1, the terminal adds a dynamic touch symbol D₃ corresponding to the notification N₃ to the cluster and arranges the dynamic touch symbol D₃ at the top of the cluster, to indicate that the dynamic touch symbol D₃ corresponds to the latest received notification N₃.
   b. When the terminal determines that a newly received notification N₃ has not been processed and needs to be retained, and determines that a quantity of dynamic touch symbols in a current cluster is equal to A1, the terminal removes a bottom dynamic touch symbol D₀ (which corresponds to an earliest received notification N) from the cluster, adds a dynamic touch symbol D₃ corresponding to the notification N₃ to the cluster, and arranges the dynamic touch symbol D₃ at the top of the cluster, to indicate that the dynamic touch symbol D₃ corresponds to the latest received notification N₃.

The following uses a touch point cluster as an example to describe in detail a plurality of embodiments of a notification, content, or a function corresponding to a fixed touch symbol in this application.

In an embodiment of this application, the touch point cluster includes a fixed touch point, and each fixed touch point is corresponding to one predetermined application, or a plurality of fixed touch points are corresponding to a plurality of application options of one predetermined application. For example, a first fixed touch point corresponds to WeChat and represents an unprocessed WeChat notification in WeChat, a second fixed touch point corresponds to a group chat named "GROUP" in WeChat and represents all WeChat information or unprocessed WeChat notifications received in the group chat, and a third fixed touch point corresponds to all SMS messages related to a contact "mom" or unprocessed SMS notifications in a messaging application.

In another embodiment of this application, the touch point cluster includes a fixed touch point, and each fixed touch point is corresponding to predetermined content or functions of a plurality of application options of one predetermined application. For example, a first fixed touch point is corresponding to Alipay and represents three function options: Payment code, Collection code, and Scan, of Alipay, a second fixed touch point corresponds to a Chinese-English translation application and represents a shortcut translation window for currently copied content, and a third fixed touch point represents two group chat options named "123" and "321" in WeChat.

In still another embodiment of this application, a fixed touch point in the touch point cluster may alternatively correspond to an unprocessed notification or an unprocessed notification list of one predetermined application. For example, a first fixed touch point is corresponding to an unread notification list of WeChat. In this case, a new notification received by WeChat is not retained in the cluster in a form of a dynamic touch point. The user may view and/or process unread WeChat notifications by performing an operation on the first fixed touch point, and after these unread WeChat notifications are viewed/processed, the first fixed touch point is still retained in the touch point cluster.

The user may customize an application option, for example, specific content or a specific function, corresponding to a fixed touch symbol in the touch symbol cluster, so that the user views, at any time, at least some notifications received by an application concerned by the user, or enables, at any time, a function of an application frequently used by the user. Similar to the dynamic touch symbol, a plurality of fixed touch symbols may correspond to notifications of different applications or a same application, or correspond to content or functions of different applications or a same application. A quantity of fixed touch symbols may also be limited, for example, not exceeding a second predetermined value A2. However, different from the dynamic touch symbol, the fixed dynamic symbol is not removed from the touch symbol cluster when all notifications corresponding to the fixed touch symbol are set to "processed". A rank of the fixed touch symbol in the touch symbol cluster is not adjusted based on a time order in which the terminal receives a notification corresponding to the fixed touch symbol. In other words, the fixed touch symbol is relatively fixed in the touch symbol cluster, and appears or disappears with the touch symbol cluster. In an embodiment of this application, fixed touch symbols in the touch symbol cluster may be ranked and displayed in a user-defined order, or another fixed touch symbol may be added based on an operation performed by the user on the fixed touch symbol. Alternatively, an existing fixed touch symbol may be removed, so that a quantity of fixed touch symbols in the cluster does not exceed A2. For example, after the user triggers display of the touch symbol cluster in the side region, the user may perform a triple-tap in a hot region of the cluster to enter a cluster editing mode. In this mode, the user may add a new fixed touch symbol, remove an existing dynamic and/or fixed touch symbol, edit a correspondence between a fixed touch symbol and an application or an application option, or the like. It should be understood that editing/setting of the dynamic touch symbol and/or the fixed touch symbol should not be used as a limitation on the present disclosure.

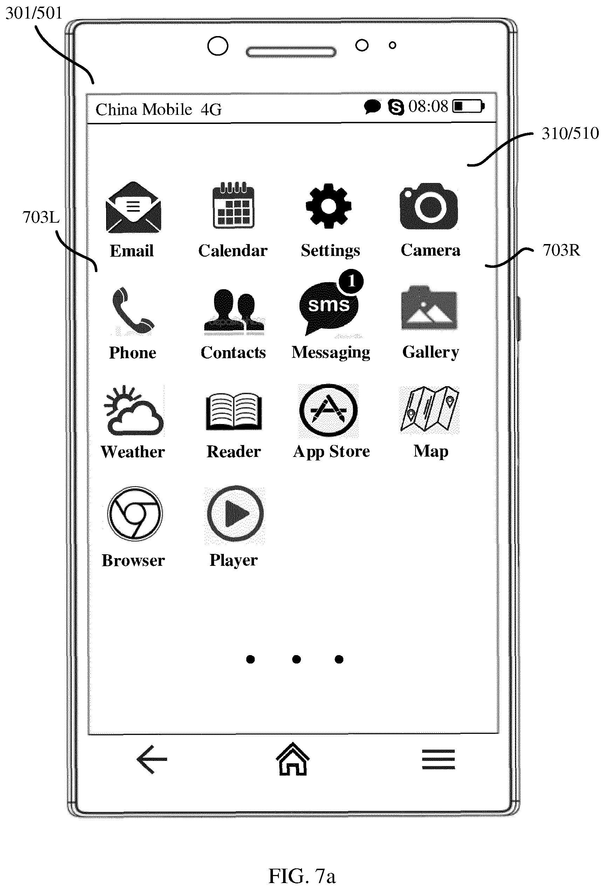

The foregoing embodiments may be combined with each other. For example, the touch symbol cluster includes both a fixed touch symbol corresponding to a notification and a fixed touch symbol corresponding to predetermined content or a predetermined function. For another example, the touch symbol cluster includes both the dynamic touch symbol and the fixed touch symbol. The following describes in detail, with reference to FIG. 7a to FIG. 7e, an embodiment of a cluster including a dynamic touch symbol and a fixed touch symbol.

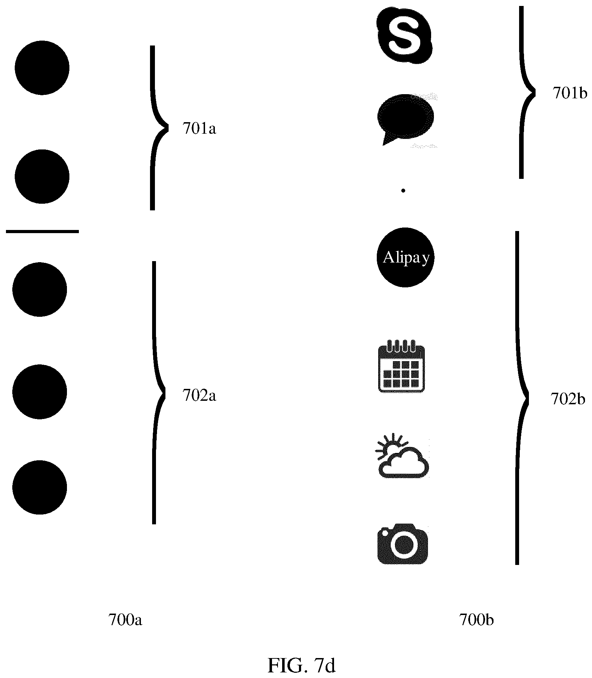

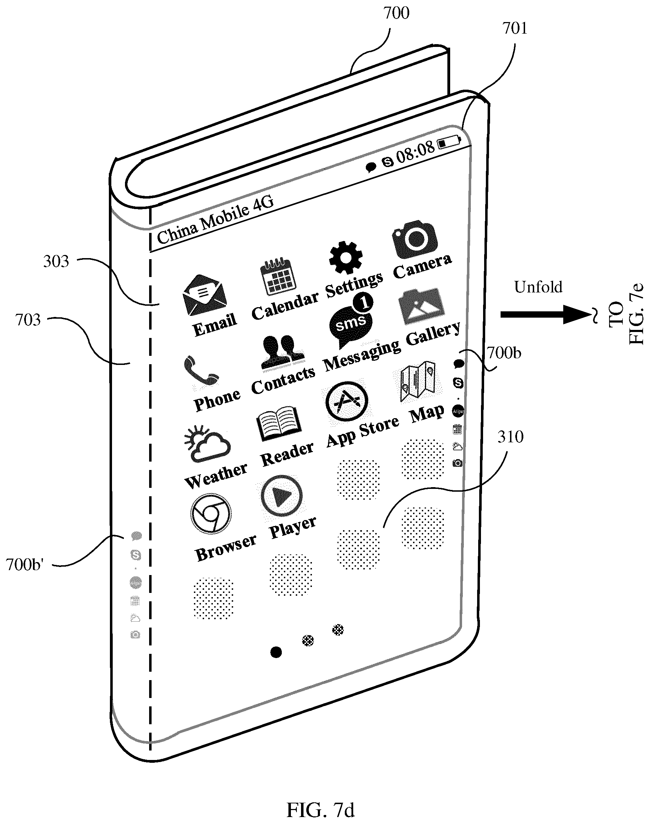

FIG. 7a to FIG. 7e are a schematic diagram depicting a scenario of a notification display method according to an embodiment of this application. Examples of a touch point cluster and a touch icon cluster are shown in an embodiment in FIG. 7d. As shown in FIG. 7d, a touch point cluster 700a includes a dynamic touch point cluster 701a and a fixed touch point cluster 702a, and a touch icon cluster 700b includes a dynamic touch icon cluster 701b and a fixed touch icon 702b. The dynamic touch point cluster 701a or the dynamic icon cluster 701b may include touch points or touch icons whose quantity does not exceed a first predetermined value A1, and the fixed touch point cluster 702a or the fixed touch icon cluster 702b may include touch points or icons whose quantity is a second predetermined value A2, where A1 and A2 are integers, A1 ≥ 0, and A2 ≥ 0. When the terminal receives a plurality of notifications and the user does not process the notifications, touch symbols corresponding to these notifications may be managed in the background of the terminal based on the first and second predetermined values A1 and A2 and/or a time order of receiving these notifications. This has been described in detail above, and details are not described herein again. According to an embodiment of this application, the first predetermined value A1 and the second predetermined value A2 may be set to a same value, or may be set to different values, for example, 3, 5, or 7. For example, when A1 = A2 = 3, it indicates that the dynamic touch point cluster 701a or the dynamic touch icon 701b may include 0 to 3 (including 0 and 3) dynamic touch symbols, and the fixed touch point cluster 702a or the fixed touch icon 702b may include three fixed touch symbols. A quantity of dynamic touch symbols is dynamically adjusted between 0 and 3 (including 0 and 3), as described above.

In an embodiment of this application, after the terminal detects a user operation in the side region 303/503 on the left or right of the first interface 310/510, the dynamic touch symbol cluster 701a/701b and the fixed touch symbol cluster 702a/702b may be displayed on the side on which the operation is detected, or may be separately displayed on the left side and the right side in the side region 303/503 of the first interface 310/510. For example, the dynamic touch symbol cluster is displayed in the left side region, and the fixed touch symbol cluster is displayed in the right side region. Alternatively, the dynamic touch symbol cluster and the fixed touch symbol cluster may be displayed on both the left side and the right side in the side region 303/503 of the first interface 310/510. For example, the dynamic touch symbol cluster and the fixed touch symbol cluster are displayed on the left side, and the dynamic touch symbol cluster and the fixed touch symbol cluster are also displayed on the right side.

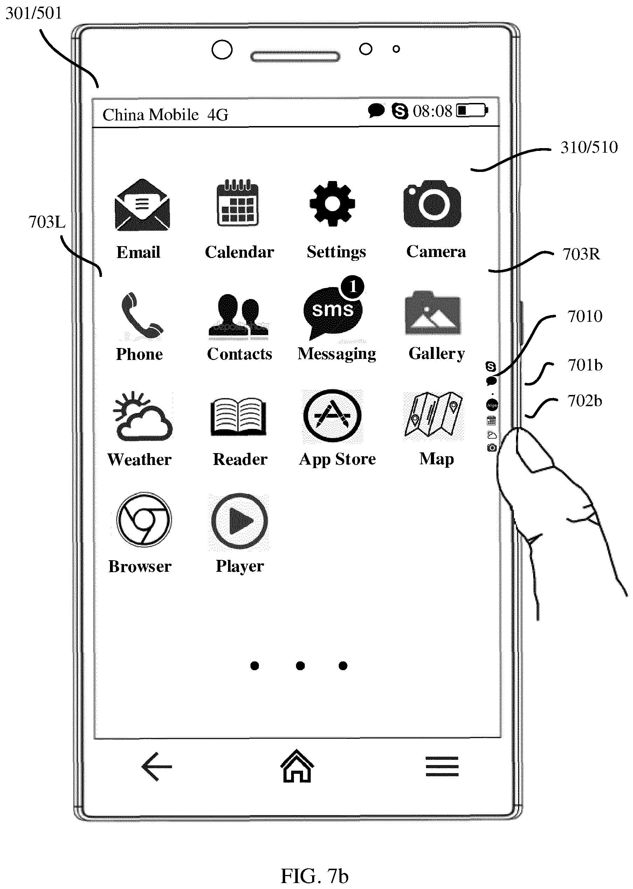

As shown in FIG. 7a, the first interface 310/510 is displayed on the display 301/501. When the intelligent terminal detects a user operation in the right region 703R of the first interface 310/510, the dynamic touch icon cluster 701b and the fixed touch icon cluster 702b in the touch icon cluster 700b are displayed in the right region 703R, as shown in FIG. 7b, so that the user continues to interact with the cluster on the right side. This ensures continuity of user operations, and minimizes a range for performing an operation by the user.

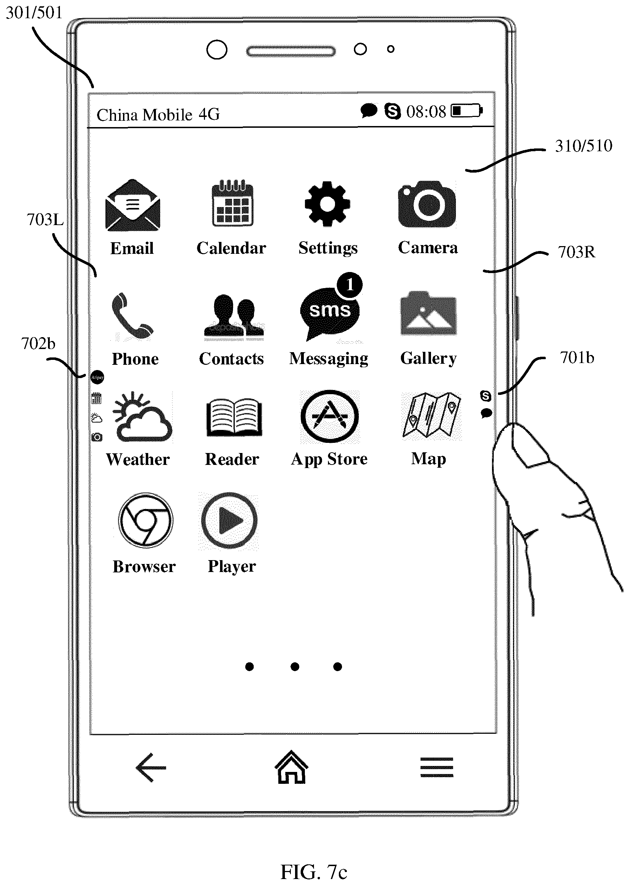

As shown in FIG. 7c, when the intelligent terminal detects a corresponding operation in the right region 703R of the first interface 310/510, the dynamic touch icon cluster 701b is displayed in the right region 703R of the first interface 310/510, and the fixed touch icon cluster 702b is displayed in the left region 703L of the first interface 310/510. Separately displaying the dynamic touch symbol and the fixed touch symbol on the left side and the right side helps the user quickly find a touch symbol that the user needs to interact with, and more conveniently process a notification and content corresponding to the touch symbol. In an embodiment shown in FIG. 7c, when the user needs to view the dynamic touch icon cluster 701b, the user may perform a related operation, for example, touching, tapping, touching and holding, or sliding, in the right region 703R of the first interface 310/510, to display the dynamic touch icon cluster 701b. In this case, the fixed touch icon cluster 702b is not displayed. When the user needs to view the fixed touch icon cluster 702b, the user may perform a related operation in the left region 703L of the first interface 310/510, to display the fixed touch icon cluster 702b. In this case, the dynamic touch icon cluster 701b is not displayed. In another embodiment shown in FIG. 7c, regardless of whether the user performs a related operation such as touching in the left or right display region 703L or 703R, both the dynamic touch icon cluster 701b and the fixed touch icon cluster 702b are displayed on the display 301/501, and are separately displayed on the left side and the right side of the first interface 310/510, so that the user conveniently selects a specific touch icon in the cluster to perform a related operation.

In another embodiment of this application, when the intelligent terminal detects a corresponding operation in the left region 703L or the right region 703R of the first interface 310/510, the touch icon cluster 700b including the dynamic touch icon cluster 701b and the fixed touch icon cluster 702b may be displayed in both the left region 703L and the right region 703R. The touch icon cluster 700b may be displayed on the left and right sides in a copy or mirror manner. In this way, the user can obtain a consistent result when performing a corresponding operation on either side. In a case in which the user watches a video in landscape mode by using the intelligent terminal, or the user uses an intelligent terminal with a large screen, such as a tablet computer or a foldable-screen terminal, usually, when the user holds such a terminal with both hands, in response to an operation performed by the user on a side, a touch symbol cluster may be displayed on both the left side and the right side of a current interface, so that the user can perform cluster interaction on both sides. This reduces difficulty of performing an operation on one side when the user uses such a terminal, and also reduces a range and a frequency for performing an operation by the user. For example, when the user interacts with the cluster on the left side, the user finds that the left hand is no longer suitable for performing a subsequent operation. In this case, the user can directly perform interaction again on the right side without waking up the cluster on the right side to display the cluster in the right region.

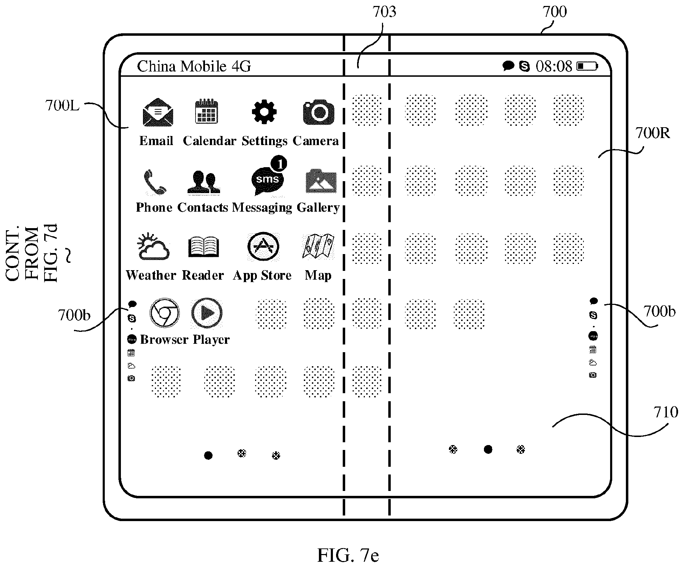

In another embodiment of this application, the display of the intelligent terminal may be a foldable screen, and includes one or more displays, as shown in FIG. 7d and FIG. 7e. The one or more displays display content of the first interface in cooperation with unfolding and folding of the foldable screen. When the foldable screen is in a folded state, as shown in FIG. 7d, one of the displays or a part of one display displays the first interface 310, and the first interface 310 includes the side region 303, which is displayed on the left side and/or the right side of the display. When the foldable screen is in an unfolded state, as shown in FIG. 7e, the one or more displays display a third interface 710, the third interface 710 is corresponding to the first interface 310, and the third interface 710 also includes side regions 700L and 700R, which are displayed on the left side and/or the right side of the unfolded display. It should be understood that in this embodiment of this application, regardless of whether the foldable screen is in an unfolded state or a folded state, when the first interface 310 or the third interface 710 is displayed on a part of the display, the entire display, or a plurality of displays for joint display, the side region is a region located on the left and/or the right of the first interface 310 or the third interface 710 in a direction in which the user normally views the first interface 310 or the third interface 710.

Refer again to a terminal 700 having a foldable screen 701 that is shown in FIG. 7d and FIG. 7e. Specifically, the foldable screen 701 may be a flexible display that can be bent, or may be two displays that are spliced through a hinge. In the embodiment shown in FIG. 7d and FIG. 7e, the foldable screen 701 is a flexible display that can be bent, and has a bent display region 703. When the foldable screen 701 displays the first interface 310 in a folded state, at least a part of the side region 303 of the first interface 310 is displayed in the bent display region 703. As shown in FIG. 7d, the foldable screen 701 is in a folded state, and in response to a trigger operation performed by the user on the side, the touch icon cluster 700b is displayed in the side region 303 of the first interface 310. The touch icon cluster 700b may be displayed in the bent display region 703 (such as a touch icon cluster 700b' in the figure) or may be displayed in a side region other than the bent display region 703 of the first interface 310 (such as the touch icon cluster 700b in the figure).

From FIG. 7d to FIG. 7e, when the user performs an operation to change the foldable screen 701 from a folded state (FIG. 7d) to an unfolded state (FIG. 7e), the first interface 310 in the folded state is correspondingly switched to the third interface 710 in the unfolded state. In addition, in the unfolded state, the touch icon cluster 700b is switched to be displayed in both the left region 700L and the right region 700R of the third interface 710. It should be noted that the left region 700L and the right region 700R herein are a left region 700L located on the left of the third interface 710 and a right region 700R located on the right of the third interface 710 in a direction in which the user normally views the third interface 710.

When the user performs another operation to change the foldable screen 701 from an unfolded state (FIG. 7e) back to a folded state (FIG. 7d), display of the touch icon cluster 700b is restored to that shown in FIG. 7d, that is, the touch icon cluster 700b is displayed on only one side of the first interface 310. The foldable screen 701 is more suitable for a one-hand operation of the user in the folded state in FIG. 7d, but usually requires a two-hand operation of the user in the unfolded state in FIG. 7e. Therefore, display of the touch icon cluster displayed on the foldable screen is switched between the folded state and the unfolded state, so that user operation convenience can be further improved, and user experience can be optimized.

The foregoing embodiment enumerates a case in which after the cluster is triggered to be displayed, the cluster is adjusted to be displayed on one side or displayed on both sides based on the folded state or the unfolded state of the foldable screen. It should be understood that, in another embodiment of this application, if the cluster is hidden, the cluster may be displayed on one side when the user triggers cluster display in a folded state of the terminal, or the cluster may be displayed on both sides when the user triggers cluster display in an unfolded state of the terminal.

As described above, a touch point or a touch icon included in the dynamic cluster 701a/701b and the fixed cluster 702a/702b corresponds to a notification of an application or an application option of an application. For example, a notification corresponding to a dynamic touch symbol in the dynamic cluster 701a/701b may be, for example, a notification of WeChat, a news hotspot, a conference invitation, or an alarm clock reminder, or a notification or reminder of another application. An application option corresponding to a fixed touch symbol in the fixed cluster 702a/702b may be, for example, content of an application or a function of an application, such as a shortcut chat window of a contact in WeChat, a link page of a browser, a payment code or a scan function of Alipay, a photo in the gallery, or a schedule reminder. A correspondence between each of a dynamic touch symbol and a fixed touch symbol and a notification, content, or a function, ranking of touch symbols, and the like have been described in detail in the foregoing embodiments, and details are not described herein again.

It should be understood that, a specific type of application whose symbol can be retained in the dynamic touch symbol cluster, a specific type of unprocessed notification of the application that can be retained, a specific application or specific applications whose symbols should be fixed in the fixed touch symbol cluster, and specific content or functions of the application that should be fixed can all be set by the user in a system of the intelligent terminal. For example, the user may choose to add a concerned application, so that a symbol corresponding to the application can be added to the dynamic touch symbol cluster or the fixed touch symbol cluster. The user may further edit an existing concerned application to change a concerned application list, or the user may set and allocate a quantity of touch symbols in the touch symbol cluster. Further, in addition to performing the foregoing setting in the system of the intelligent terminal, a quick setting interface or editing manner may also be provided for the user, so that the foregoing setting and/or editing is performed in another interface. For example, when the cluster is displayed in the first interface, a touch symbol in the cluster can be conveniently edited in a display region of the cluster. The setting for the cluster and the editing for the touch symbol displayed in the cluster are merely examples, and should not be used as a limitation on this application.

In the embodiment shown in FIG. 7a and FIG. 7b, if the first predetermined value A1 of the quantity of dynamic touch symbols is 5, it indicates that a maximum of five touch icons may be displayed in the dynamic touch icon cluster 701b. Based on the first predetermined value A1 being 5, for a method for ranking the dynamic touch icons in the dynamic touch icon cluster and a method for matching a notification corresponding to each dynamic touch icon, refer to the foregoing embodiments. For example, when a messaging touch icon 7010 corresponding to a newly received SMS notification has been displayed in the cluster 701b, the SMS notification is updated to the messaging touch icon 7010, and the messaging touch icon 7010 is ranked at the top of the cluster 701b, so that unprocessed notifications are arranged from top to bottom in a time order, to facilitate viewing of the user. When a Taobao touch icon corresponding to a newly received Taobao preference notification does not exist in the current dynamic icon cluster 701b, and a quantity of icons in the cluster 701b is less than 5, the Taobao touch icon is added at the top of the cluster 701b, and appears as the cluster 701b appears, or disappears as the cluster 701b disappears. When the user starts to view an unprocessed notification, the latest received Taobao preference notification is displayed for processing by the user. When a quantity of icons in the dynamic icon cluster 701b is 5, and a Taobao touch icon corresponding to a newly received Taobao preference notification does not exist in the cluster 701b, a messaging touch icon at the bottom of the cluster 701b is removed from the cluster, and the Taobao touch icon is added at the top of the cluster 701b, so that the user can conveniently process relatively new notification content. This is because notifications or messages that the user has not processed for a long time are usually content that is less interesting or less important. For another matching manner of the newly received SMS notification and the messaging touch icon 7010, and a case in which the newly received SMS notification is added to a notification list of the messaging touch icon 7010, detailed descriptions are provided above, and details are not described herein again.

It should be understood that, this application is not limited by notification receiving time and a time-based ranking method. In some embodiments of this application, content that the user is more interested in may be retained in the dynamic clusters 701a and 701b, instead of ranking notifications based on receiving time. For example, the user may predefine priorities of applications, so that when a new notification of an application is received, a touch icon corresponding to the application is retained in the dynamic clusters 701a and 701b if a priority is high, or is not retained in the cluster if a priority is low. Alternatively, the user may predefine priorities of applications by setting a keyword, or the terminal may determine priorities of applications based on time and a frequency of using each application by the user. The terminal may further predetermine importance of a newly received notification by using, for example, an artificial intelligence AI algorithm, and rank a touch icon corresponding to the notification based on the importance of the notification. For example, notifications are ranked in the cluster from top to bottom in the following order: "very important", "important", and "not important". It should be understood that the foregoing background ranking rule of the touch point clusters 701a and 702a and/or the touch icon clusters 701b and 702b is merely an example, and should not be used as a limitation on this application.

In the scenario shown in FIG. 6b to FIG. 6d or FIG. 7b and FIG. 7c, when the touch symbol cluster, for example, the touch point cluster or the touch icon cluster, is displayed in the side display region 303/503, the user may perform an operation on each touch symbol in the touch symbol cluster. When the intelligent terminal detects a corresponding operation on the touch symbol cluster and any touch symbol, a corresponding interface may be displayed, so that the user can process notification content corresponding to each touch symbol.

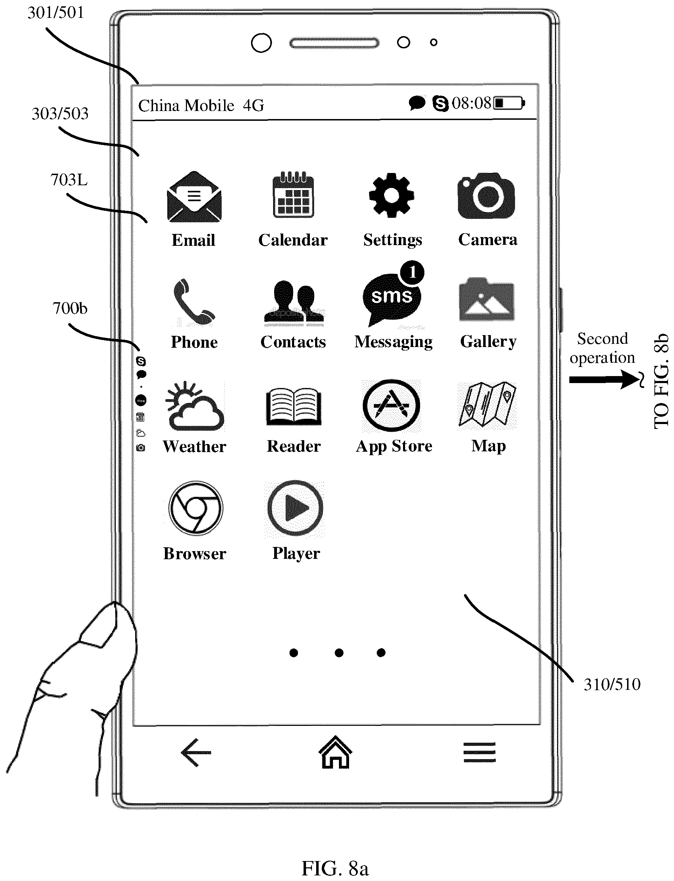

With reference to FIG. 8a to FIG. 8e, the following describes a scenario of interacting with a touch symbol cluster in this application.

FIG. 8a to FIG. 8e are a schematic diagram depicting a scenario of a notification display method according to an embodiment of this application. In FIG. 8a to FIG. 8e, interaction between the user and the cluster is described in detail by using an example in which the user touches the left region and the touch symbol cluster is displayed in only the left region. The touch symbol cluster includes a dynamic touch symbol and a fixed touch symbol, the dynamic touch symbol is corresponding to an unprocessed notification, and the fixed touch symbol is corresponding to an application option of an application.

In the embodiment shown in FIG. 3d, if the SMS notification is not processed, the symbol 305 is hidden on the side. In this case, with reference to the embodiment shown in FIG. 8a, after the terminal detects a first operation in the side region 303/503 of the first interface 310/510, a display feedback appears in the side region 303/503, for example, a touch symbol cluster is displayed. The touch symbol cluster may include a dynamic touch icon and a fixed touch icon, for example, the messaging touch symbol 305. The touch symbol cluster includes one or more symbols, and the one or more symbols may be displayed simultaneously, or may be sequentially displayed in the side region from bottom to top or from top to bottom. As shown in the figure, the touch icon cluster 700b including the messaging touch symbol 305 is displayed in the left region 703L of the first interface 310/510. In an embodiment of this application, if no further operation on the touch symbol cluster is detected within a predetermined time period, the touch symbol cluster disappears from the side region 303/503 again. The predetermined time period may be, for example, 2s or 5s. In another embodiment of this application, even if no further operation is detected, the touch symbol cluster does not disappear until the display is turned off.

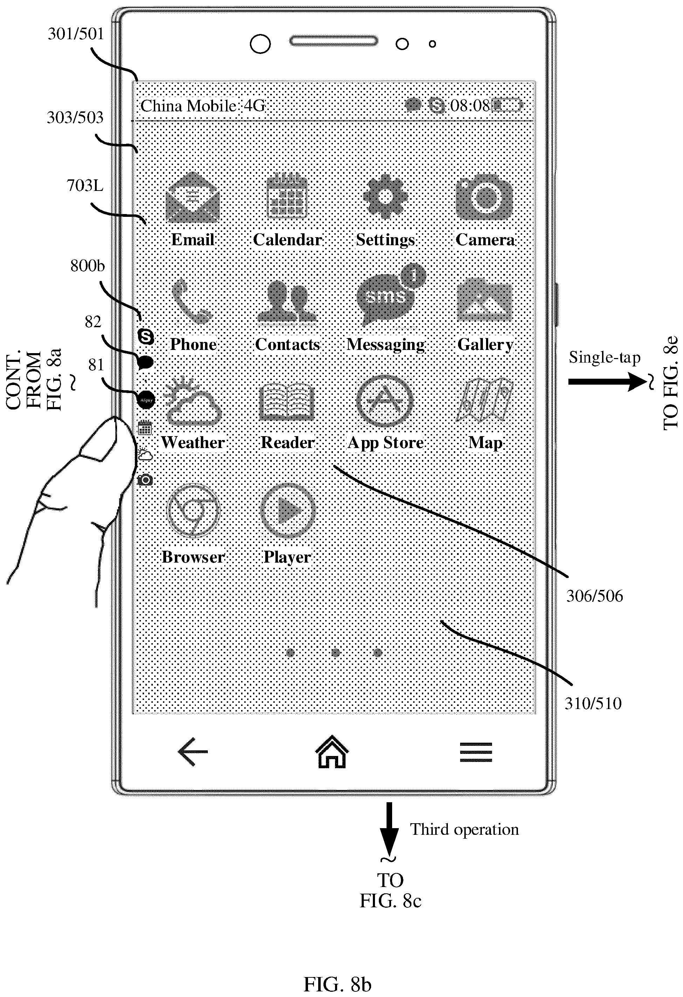

As shown in FIG. 8b, the terminal further detects a second operation in a hot region of the touch icon cluster 700b, and each touch icon in the touch icon cluster 700b is enlarged from a first size to a second size for display. In other words, an enlarged touch icon cluster 800b is displayed in FIG. 8b, so that the user can conveniently view a touch icon of an application that the user is interested in. For example, the messaging touch icon 305 is enlarged to a symbol 82 for display. The enlarged touch icon cluster 800b moves away from the side region compared with the touch icon cluster 700b existing before the enlargement. In other words, compared with the touch icon cluster 700b existing before the enlargement, the enlarged touch icon cluster 800b moves toward the front region 306/506 of the first interface 310/510, or moves toward a middle or a center point of the display 301/501. In this case, another region in the first interface 310/510 may be in a translucent state. In an embodiment of this application, if no further operation on the touch symbol cluster is detected within a predetermined time period, the touch symbol cluster 800b displayed in an enlarged manner may be reduced to the touch icon cluster 700b, or may directly disappear from the side region 303/503. In addition, the first interface 310/510 is no longer in the translucent state. The predetermined time period may be, for example, 2s or 5s. Similarly, in another embodiment of this application, even if no further operation is detected, the enlarged touch symbol cluster is not reduced or does not disappear until the display is turned off.

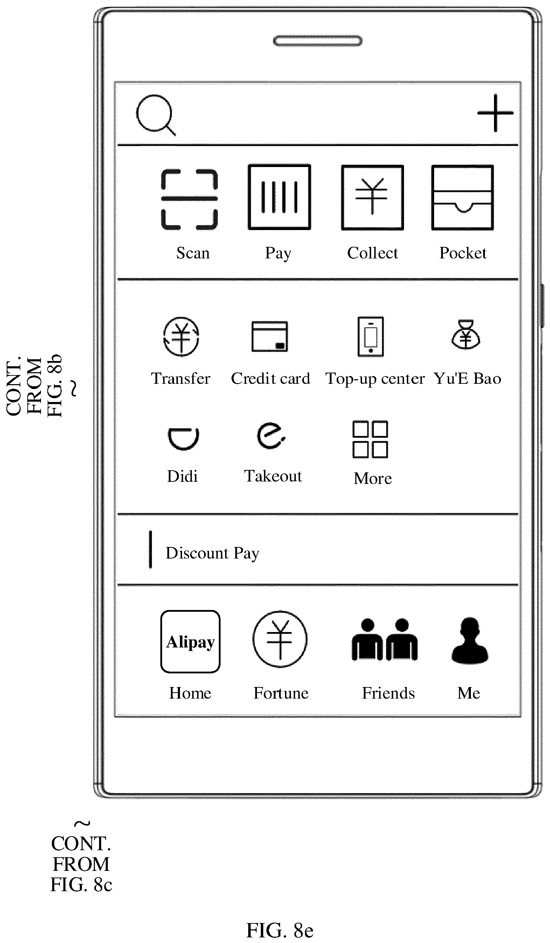

In an embodiment of this application, the user performs an operation on the enlarged touch icon cluster 800b, and may open a corresponding application interface. For example, when the user taps a fixed touch symbol: Alipay touch icon 81, an Alipay interface is opened. As shown in FIG. 8e, alternatively, in response to the tap operation, a payment code interface of Alipay is opened. The Alipay interface or the payment code interface may be displayed in a complete display region of the display 301/501, or may be displayed in a partial display region of the display 301/501. When the user taps a dynamic touch symbol: messaging touch icon 82, a messaging application interface or an interface of a newly received SMS message is opened, for example, the interface displayed in FIG. 3c or FIG. 3e. In this embodiment, when the user further triggers display of the touch icon cluster in the opened application interface, the touch icon cluster 700b existing before the enlargement may be displayed again, or the enlarged touch icon cluster 800b may be directly displayed, for a subsequent user operation.

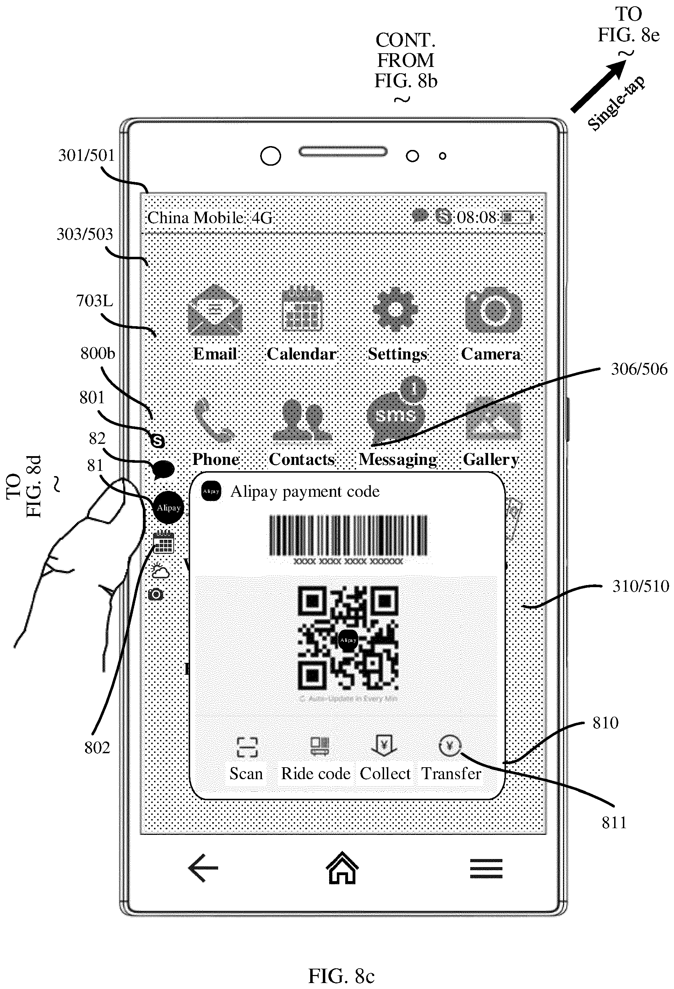

In another embodiment of this application, the user performs an operation on the enlarged touch icon cluster 800b, and may open a detail card related to an unprocessed notification or an application option. With reference to FIG. 8c, if the terminal detects a third operation in the hot region of the enlarged touch icon cluster 800b, for example, detects a corresponding operation on the Alipay touch icon 81 in the enlarged touch icon cluster 800b, the Alipay touch icon 81 is further enlarged from the second size to a third size for display, and an application option card corresponding to the touch icon 81, such as a payment code card 810, pops up for the user to perform payment through scanning. Compared with the Alipay touch icon 81 existing before the enlargement, the enlarged Alipay touch icon 81 moves away from the side region 303/503, or moves toward the front region 306/506 of the first interface 310/510, or moves toward a middle or a center point of the display 301/501, and the enlarged Alipay touch icon 81 may cover a part of the front region 306/506 of the first interface 310/510. In an embodiment of this application, when the terminal detects a corresponding operation (the third operation) on the Alipay touch icon 81 in the enlarged touch icon cluster 800b, the Alipay touch icon 81 is enlarged from the second size to the third size based on a first enlargement coefficient for display. One or more touch icons adjacent to the Alipay touch icon 81, such as the messaging touch icon 82 and a schedule touch icon 802, are enlarged from the second size to a fourth size based on a second enlargement coefficient for display. Further, another touch icon adjacent to the touch icon 82 or 802 may be enlarged from the second size to a fifth size based on a third enlargement coefficient for display. The first enlargement coefficient is greater than the second enlargement coefficient, and the second enlargement coefficient is greater than the third enlargement coefficient. In other words, the third size is greater than the fourth size, and the fourth size is greater than the fifth size. In another embodiment of this application, when the terminal detects a corresponding operation (the third operation) on the Alipay touch icon 81 in the enlarged touch icon cluster 800b, the Alipay touch icon 81 moves away from the side region 303/503 of the first interface 310/510 by a first movement distance. Touch icons adjacent to the Alipay touch icon 81, such as the messaging touch icon 82 and the schedule touch icon 802, move away from the side region 303/503 of the first interface 310/510 by a second movement distance. Further, another touch icon adjacent to the touch icon 82 or 802 may move away from the side region 303/503 of the first interface 310/510 by a third movement distance. The first movement distance is greater than the second movement distance, and the second movement distance is greater than the third movement distance.

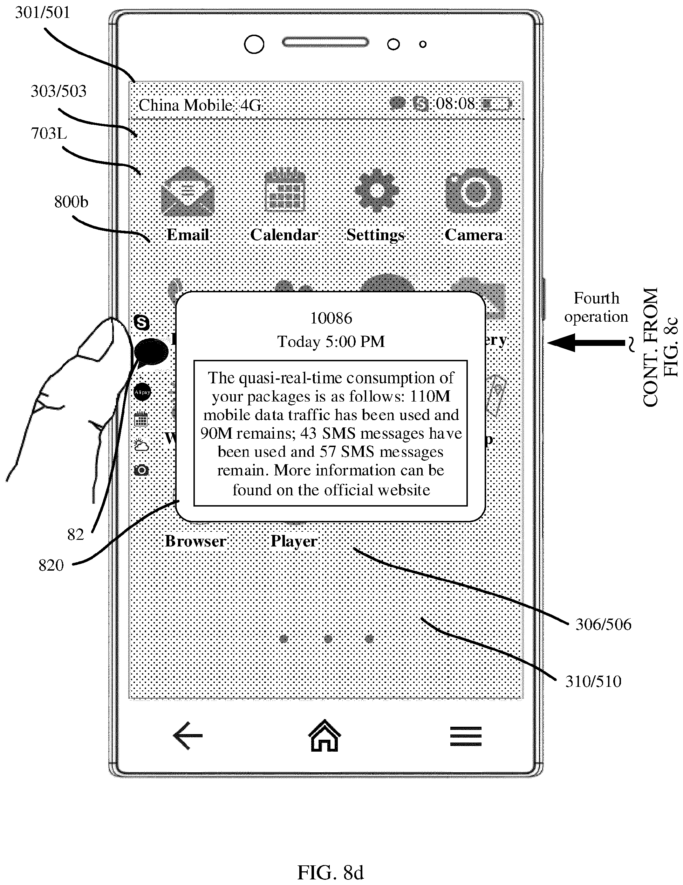

The terminal further detects a fourth operation in the hot region of the enlarged touch icon cluster 800b, for example, detects a corresponding operation on the messaging touch icon 82 in the enlarged touch icon cluster 800b. Because the Alipay touch icon 81 is a fixed touch icon in the touch icon cluster, the Alipay touch icon 81 is not removed from the fixed touch icon cluster when a corresponding application option card, such as a payment code card, is displayed (and thus viewed and/or processed). Therefore, in this case, the Alipay touch icon 81 is reduced from the third size to the second size and displayed in the touch icon cluster 800b, and the payment code card 810 is correspondingly hidden. In response to the fourth operation, the messaging touch icon 82 is further enlarged from the second size to the third size for display, and a content detail card such as an SMS message card 820 pops up for the user to view and process an SMS message, as shown in FIG. 8d. The SMS message card 820 may display content of a corresponding SMS message notification, or display an SMS message corresponding to the SMS message notification. Because the content of the SMS message notification may not include all content of the SMS message, the user may perform interaction on the SMS message card to view detailed content of the SMS message notification. Compared with a display region of the messaging touch icon 82 existing before the enlargement, a display region of the enlarged messaging touch icon 82 is farther away from the side region 303/503 of the first interface 310/510, or closer to the front region 306/506 of the first interface 310/510, that is, closer to the middle or the center point of the display 301/501, and may cover a part of the front region 306/506 of the first interface 310/510.

In an embodiment of this application, if no further operation on the card is detected within a predetermined time period, the pop-up card may disappear from the display, and the enlarged touch icon or touch icon cluster may be correspondingly reduced or hidden. In addition, the first interface 310/510 is no longer in the translucent state. The predetermined time period may be, for example, 2s or 5s. In another embodiment of this application, even if no further operation on the card is detected, the card is still displayed until the display is turned off. Advantageously, the foregoing embodiments of this application may be combined. For example, for a card corresponding to a fixed touch icon, even if no further operation is detected, the card such as the payment code card 810 of Alipay may be always displayed, to make it convenient for the user to use an application option of a payment code. However, for a card corresponding to a dynamic touch icon, if no further operation is detected, the card such as the SMS message card 820 disappears after a predetermined time period expires.

If the terminal further detects a fifth operation on the SMS message card 820, the terminal may open a messaging application corresponding to the messaging touch icon 82 to perform subsequent processing, or the terminal may open a reply window corresponding to the SMS message card 820 to reply to the SMS message, or the terminal may open a split-screen display interface including an interface of the messaging application and the first interface 310/510 to perform multi-task processing. Similarly, if the terminal further detects an operation on the payment code card 810 of Alipay, for example, on a function key 811 (including but not limited to a function such as "scan", "ride code", "receive money", or "transfer") on the card 810, the terminal may open Alipay corresponding to the Alipay touch icon 81 to use the function. The messaging touch icon 82 is a dynamic touch icon in the dynamic touch icon cluster, and is removed from the dynamic icon cluster after all corresponding SMS notifications are processed. Therefore, if the terminal detects an operation on the SMS message card 820, and correspondingly displays an interface related to the messaging application, the messaging touch icon 82 correspondingly disappears from the touch icon cluster 800b, and the SMS notification related to the SMS message card 820 is deleted from the notification center. If the terminal does not detect an operation on the SMS message card 820 and detects an operation of the user on another touch icon in the cluster, the messaging touch icon 82 may correspondingly disappear from the touch icon cluster 800b. Similarly, the SMS notification related to the SMS message card 820 is deleted from the notification center because opening and displaying of the SMS message card 820 indicate that the user has viewed the SMS notification. In an embodiment of this application, if the user opens the SMS message card 820 and the user slides from the messaging touch icon 82 to another touch icon for operation after the card has been displayed for a predetermined time period (2s), the messaging touch icon 82 disappears, and the corresponding SMS notification is deleted. If the user slides to or taps another touch icon within 2s after the user opens the SMS message card 820, the messaging touch icon 82 does not disappear, and the corresponding SMS notification is not deleted. It should be understood that the predetermined time period mentioned in this application may be provided by a system, or may be customized by the user. When the user quickly slides over the card, it is considered that the notification content corresponding to the card has not been viewed by the user, and the notification may still be retained. When the user stays on the card for a sufficient period of time, it is considered that the notification content corresponding to the card has been viewed by the user, and the notification may no longer be retained. In another embodiment of this application, as long as the card is opened and disappears again based on a subsequent operation of the user, the touch icon corresponding to the card disappears from the cluster, and the corresponding notification is deleted from the notification center. Because a card that the user quickly slides over is considered to be an unimportant notification, a touch icon related to the card does not need to be always retained in the cluster in the side region. After a content detail card such as the SMS message card 820 in FIG. 8d pops up, if the terminal detects a sixth operation on the SMS message card 820, the SMS message card 820 may be removed. To be specific, the SMS notification in the SMS message card 820 is removed from a notification list corresponding to the messaging touch icon 82, and is deleted from the notification center of the terminal. If there is no unprocessed notification in the messaging touch icon 82, the messaging touch icon 82 is correspondingly removed from the touch icon cluster. If there is an unprocessed notification in the messaging touch icon 82, the messaging touch icon 82 is retained. In this case, the messaging touch icon 82 is restored/reduced from the third size to the second size, that is, display in FIG. 8b is restored. In an embodiment of this application, in response to the sixth operation, the terminal may further delete the SMS message corresponding to the notification, and in response to the deletion operation, the messaging touch icon 82 disappears from the cluster (when the messaging touch icon 82 has no other corresponding unprocessed notification), and/or the SMS notification is deleted from the notification center, and/or the badge 411a of the messaging application 412a shown in FIG. 4e disappears, and/or the messaging icon 411b in the notification bar/task bar 412b shown in FIG. 4f disappears, and the SMS message corresponding to the SMS notification is deleted from the messaging application, and/or deleted from the system.

After a detail card such as the SMS message card 820 in FIG. 8d pops up, if the terminal detects a seventh operation in a region other than hot regions of the SMS message card 820 and the touch icon cluster, the SMS message card 820 disappears. In an embodiment of this application, in response to the seventh operation, the messaging touch icon 82 is restored from the third size to the second size for display, and is retained in the touch icon cluster 800b (that is, display in FIG. 8b is restored). After a period of time, for example, 2 seconds, if the terminal does not detect any operation in the hot region of the touch icon cluster 800b, the touch icon cluster 800b is further reduced to the touch icon cluster 700b of the first size (that is, display in FIG. 8a is restored). If the terminal still does not detect an operation in the hot region of the cluster in a subsequent period of time, for example, 1 second, the touch icon cluster 700b is hidden in the left region 703L, that is, display of the first interface 310/510 shown in FIG. 6a is restored. In another embodiment of this application, in response to the seventh operation, the touch icon cluster may be immediately restored to the touch icon cluster 700b of the first size (display in FIG. 8a is immediately restored), or the touch icon cluster may be immediately hidden in the left region 703L (display in FIG. 6a is immediately restored), so that the user can conveniently perform an operation in the first interface 310/510 without being interfered by the touch symbol cluster in the side region 303/503.

The first operation to the seventh operation for interacting with the touch symbol cluster each may be a touch operation, a slide operation, a double-tap operation, a touch and hold operation, a pinch operation, a pressure operation, a fingerprint operation, or a combination thereof, or may be a combination of the foregoing operation and human face recognition. In addition, the first operation to the fifth operation may be the same or different, or a plurality of operations may be combined into one operation.

In the embodiment shown in FIG. 8a to FIG. 8e, a touch icon in the touch icon cluster may be enlarged from the first size to the second size for viewing by the user, and after the user selects the touch icon, the touch icon may be further enlarged from the second size to the third size, to more clearly display an application icon corresponding to a notification that the user wants to process. However, it should be understood that the touch icon cluster may alternatively not be enlarged for display due to a corresponding operation, or after a corresponding icon is selected, only the single icon is enlarged, for example, directly enlarged from the first size to the third size for display. After the touch icon cluster is displayed in FIG. 8a, the user selects a touch icon. For example, when the user directly taps the messaging touch icon, a display interface is switched from FIG. 8a to FIG. 8d. To be specific, the messaging touch icon is directly enlarged from the first size to the third size, that is, the touch icon is switched between two sizes, and there is no a third type of size.

For example, when the terminal detects a touch (that is, the first operation) in the side region 303/503 of the first interface 310/510, the touch icon cluster 700b is displayed in the left region 703L. Each dynamic touch icon and each fixed touch icon have the first size, as shown in FIG. 8a. Within a preset time period after the touch is detected, for example, within 3 seconds, if the terminal detects a slide-up operation in the left region 703L, for example, an operation of sliding up by a preset distance or sliding up to the hot region of the touch icon cluster 700b (that is, the second operation), each touch icon in the touch icon cluster 700b moves away from the side region 303/503 of the first interface 310/510, and is enlarged to the second size for display, as shown in the touch icon cluster 800b shown in FIG. 8b. Subsequently, if the terminal detects a slide operation on the enlarged touch icon cluster 800b and detects that the slide operation is near the Alipay touch icon 81 in the touch icon cluster 800b (that is, the third operation), or the terminal detects a tap operation on the enlarged touch icon cluster 800b, especially a tap operation (that is, the third operation) on the Alipay touch icon 81, the Alipay touch icon 81 is further independently moved toward the front region 306/506 and is enlarged to the third size for display, and the payment code card 810 of Alipay correspondingly pops up on a side of the enlarged Alipay touch icon 81, as shown in FIG. 8c. If the terminal further detects a slide operation of continuing to slide upward or downward from the Alipay touch icon 81 to the vicinity of the messaging touch icon 82 (that is, the fourth operation), or the terminal further detects that the user raises a hand from the Alipay touch icon 81 and taps the messaging touch icon 82 (that is, the fourth operation), the Alipay touch icon 81 is reduced/restored from the third size to the second size, the payment code card 810 of Alipay correspondingly disappears, the messaging touch icon 82 further moves toward the front region 306/506 and is enlarged from the second size to the third size for display, and the SMS message card 820 correspondingly pops up, as shown in FIG. 8d. When the terminal detects a tap operation (that is, the fifth operation) on the SMS message card 820, a messaging application interface is displayed on the display 301/501, as shown in FIG. 3c, to process the SMS message on the SMS message card 820. Alternatively, when the terminal detects a touch and hold operation (that is, the fifth operation) on the SMS message card 820, the display 301/501 displays a split-screen display interface including a messaging application interface and the first interface 310/510, as shown in FIG. 3f, to perform multi-task processing. After the fifth operation, if the terminal determines that the messaging touch icon 82 is a dynamic icon and has no corresponding unprocessed notification, the messaging touch icon 82 is removed from the touch icon cluster 700b/800b. When the terminal detects a slide-right operation (that is, the sixth operation) on the SMS message card 820 in the scenario shown in FIG. 8d, the SMS message card 820 is moved out of the display 301/501, and a notification list corresponding to the messaging touch icon 82 is updated, or the messaging touch icon 82 may disappear from the touch icon cluster 800b. When the terminal detects a tap operation (that is, the seventh operation) in a region other than the touch icon cluster 800b and the payment code card 810 of Alipay or the SMS message card 820 in the scenario shown in FIG. 8c or FIG. 8d, the payment code card 810 of Alipay or the SMS message card 820 disappears, and the Alipay touch icon 81 or the messaging touch icon 82 is reduced/restored from the third size to the second size and is retained in the icon cluster 800b. It should be understood that the foregoing descriptions of the first operation to the seventh operation for interaction between the user and the touch symbol cluster are merely used as an example in this application, but cannot be used as a limitation on this application. In addition, it should be understood that there is no sequence from the first operation to the seventh operation. For example, the fourth operation does not necessarily occur after the third operation, and the seventh operation does not necessarily occur after the fifth operation and the sixth operation.

In an embodiment of this application, when the second operation is detected to enlarge and display the touch icon cluster 700b, and then any operation is performed on a touch icon or an application option card or a detail card corresponding to the touch icon in the enlarged touch icon cluster 800b, blurring processing or additional mask processing may be performed for the original first interface 310/510. The mask may be a picture provided by an application, a picture predefined by the user, or the like. In an embodiment of this application, the blurring processing may be gradual blurring. For example, gradual blurring occurs from FIG. 8a to FIG. 8b, and further gradual blurring occurs from FIG. 8b to FIG. 8c. To be specific, the first interface 310/510 shown in FIG. 8c and FIG. 8d is more blurry than the first interface 310/510 shown in FIG. 8b.

The "hot region" of the touch point cluster or icon cluster mentioned in this embodiment of this application is an interaction region in which the user can perform an operation on the touch point cluster or the touch icon cluster. The interaction region is typically at and near the displayed touch point cluster or touch icon cluster. The "detail card" and the "application option card" mentioned in this embodiment of this application are cards displayed after interaction with the "dynamic touch symbol" and/or the "fixed touch symbol" in this application. The card is a control or viewing window, floating window, or pop-up box that contains specific information or function keys, for example, a related window (or floating window or pop-up box) of a shortcut switch setting, a clock, a note, weather, a calendar, or a third-party application such as a music application or an instant news application in the system. Usually, display of the window (or floating window or pop-up box) occupies only a part of the display of the intelligent terminal. As shown in FIG. 8c and FIG. 8d, the cards 810 and 820 are displayed in a middle part of the display 301/501, are displayed as upper-layer floating windows, and may cover a part of a lower-layer interface. In this case, function keys on the cards 810 and 820 take precedence over function keys in a region covered by the cards 810 and 820. An underlying implementation of the card in this embodiment of this application may be one of a leftmost screen (or Hiboard), an intelligent home screen assistant, a card page, a widget (widget), or a control, or may be similar to or a combination of underlying implementations of the foregoing technologies. Because the foregoing technologies have been developed in this field for many years, main content or main functions provided by the technologies, for example, daily life scenarios and office scenarios such as global search (web page, settings, application, video, file, contacts, messaging, email, application function, and the like), shortcut entry (payment code, WeChat scan, WeChat business card, bus card, note, schedule, and the like), instant messages and reminders (express information, expenditure information, commuter road condition, taxi travel information, schedule information, and the like), concerned updates (football highlights, basketball highlights, stock information, and the like), and recent use (recent picture, document, contact, application, and the like), are known to a person skilled in the art. Details are not described herein, and the underlying implementations thereof are not described.

As described above, in the embodiment shown in FIG. 8a to FIG. 8e, when the user performs the third operation or the fourth operation, a corresponding application option card or detail card pops up. A pop-up manner or direction is not limited in this application. When the user operates from the interface in FIG. 8c to the interface in FIG. 8d, a plurality of cards may be switched, and switching of the plurality of cards may be instantaneous, or may be near-instantaneous, gradual, or switching at any appropriate rate. A switching manner or rate is not limited in this application. In another embodiment of this application, when the user views an application option card or a detail card corresponding to a touch point cluster or a touch icon cluster, a plurality of application option cards or detail cards may be independently displayed based on an operation of the user, as shown in FIG. 8a to FIG. 8e; or may be a plurality of linked cards, and are displayed in a linked manner from top to bottom or from left to right based on an operation of the user. Regardless of a specific manner for displaying the card, a card switching progress may be automatically controlled by a device, and is independent of the user, or may be controlled by the user. A switching manner or control manner is not limited in this application.

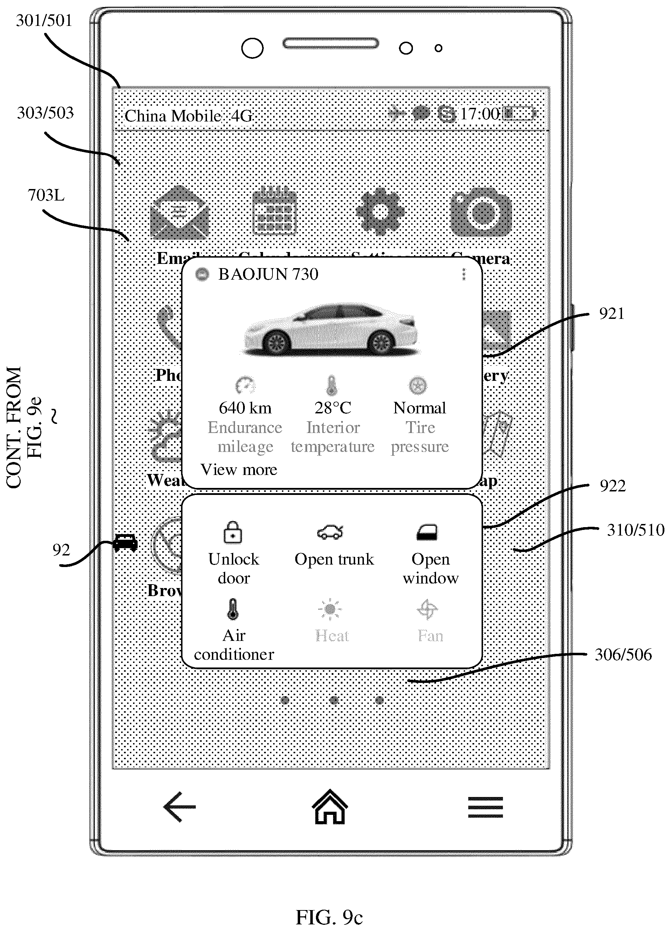

In addition, in the embodiment shown in FIG. 8a to FIG. 8e, each touch icon corresponds to one application option card or detail card. However, in another embodiment of this application, one touch icon may correspond to a plurality of application option cards or detail cards. For example, the Alipay touch icon may correspond to a payment code card, a collection code card, and a scan card. For example, a vehicle touch icon shown in FIG. 9c may correspond to a car information card 921, a vehicle operation card 922, and the like. The plurality of application option cards or detail cards corresponding to one touch icon may be viewed through switching as described above. For example, one card covers another card, and switching is performed through swiping to view the covered card below, or the cards may be linked cards as described above, and are viewed through scrolling. For example, a plurality of cards are connected, and the plurality of cards may be continuously viewed by swiping up or down or left or right.

In an embodiment of this application, an application option card or a detail card corresponding to a touch symbol, for example, a touch point or a touch icon, may display both an application option or detail content and a function key. For example, an SMS message and a reply key or a delete key may be displayed on an SMS message card. When a tap operation on the reply key or delete key is detected, corresponding processing is performed on the SMS message.

After the terminal detects the first to seventh operations for interaction with the cluster, or a corresponding operation on a function key in an application option card or a detail card, the terminal correspondingly updates a notification list corresponding to a dynamic touch symbol, and determines whether the dynamic touch symbol is retained in or removed from the cluster. In general, when a dynamic touch icon has a corresponding unprocessed notification, the dynamic touch icon should be retained in the cluster, or when a dynamic touch icon has no corresponding unprocessed notification, the dynamic touch icon should be removed from the cluster. A specific determining method for retaining or removing a dynamic touch icon includes but is not limited to the following manners:
(1) When one dynamic touch symbol is corresponding to one notification of one application, that is, corresponding to one detail card, there are the following cases:
   a. When a detail card C₁ corresponding to a dynamic touch symbol D₁ is opened, a status of a notification N₁ corresponding to the dynamic touch symbol D₁ changes from "unprocessed" to "processed" (in this case, the notification N₁ is removed from the notification center of the terminal). When the terminal enables the detail card C₁ to disappear from the first interface in response to another operation, the dynamic touch symbol D₁ also disappears from the touch symbol cluster. Enabling the detail card C₁ to disappear may be in response to the seventh operation (an operation in a region other than the card and the cluster) or in response to the fifth or sixth operation (an operation in a card region). Content displayed in the card can already satisfy processing performed by the user on the notification. When the detail card C₁ changes from being displayed to disappearing, it indicates that the user has viewed the notification content in the card, and the notification does not need to be retained in the side region of the first interface in a form of a touch symbol. In other words, the dynamic touch symbol D₁ disappears from the cluster. In addition, the notification does not need to be still retained in the notification center.
   b. When a detail card C₁ corresponding to a dynamic touch symbol D₁ is opened, a status of a notification N₁ corresponding to the dynamic touch symbol D₁ is still "unprocessed". When the terminal detects the fifth or sixth operation (an operation in a card region), the status of the notification N₁ changes from "unprocessed" to "processed", and the dynamic touch symbol D₁ disappears from the touch symbol cluster (in this case, the notification N₁ is removed from the notification center of the terminal). Sometimes, content displayed in the card cannot satisfy processing performed by the user on the notification. For example, the user does not reply after viewing a detail card of an SMS notification, and the user needs to query some data to reply to the SMS message of the other party. Therefore, the dynamic touch symbol is still retained after the card is opened. In this way, when the user needs to reply to the SMS notification, the user may perform a quick reply operation, and after the SMS message is replied to, the dynamic touch symbol D₁ disappears from the cluster.
(2) When one dynamic touch symbol is corresponding to a plurality of notifications of one application, that is, corresponding to a notification list of one application, the dynamic touch symbol may be corresponding to one or more detail cards.
   a. When detail cards "C₁, C₁, ..., and C_{A3}" corresponding to a dynamic touch symbol D₁ are opened, statuses of notifications "N₁, N₂, ..., and N_{A3}" (unprocessed notifications whose quantity does not exceed the third predetermined value A3) respectively corresponding to these cards change from "unprocessed" to "processed" (in this case, the notifications "N₁, N₂, ..., and N_{A3}" are removed from the notification center of the terminal). In addition, when the terminal enables the content detail cards "C₁, C₁, ..., and C_{A3}" to disappear in response to another operation, the dynamic touch symbol D₁ also disappears from the touch symbol cluster. Enabling the detail cards "C₁, C₁, ..., and C_{A3}" to disappear may be in response to the seventh operation (an operation in a region other than the card and the cluster) or in response to the fifth or sixth operation (an operation in a card region). Because the user may switch between cards for viewing, when the user does not need to continue viewing notification content displayed in the card, the user exits a card mode, or opens the application by performing an operation on the card to further process content of a plurality of notifications. These notifications do not need to be retained in the side region of the first interface in a form of a touch symbol. In other words, the dynamic touch symbol D₁ disappears from the cluster. In addition, these notifications do not need to be still retained in the notification center.
   b. When detail cards "C₁, C₁, ..., and C_{A3}" corresponding to a dynamic touch symbol D₁ are opened, statuses corresponding to notifications in notification lists "N₁, N₂, ..., and N_{A3}" are still "unprocessed". When the terminal detects that the fifth operation (an operation in a card region) occurs on the card C₁, statuses of all notifications in the notification lists "N₁, N₂, ..., and N_{A3}" change from "unprocessed" to "processed" and the notifications are removed from the notification lists. Correspondingly, the dynamic touch symbol D₁ disappears from the touch symbol cluster (in this case, all the notifications in the notification lists "N₁, N₂, ..., and N_{A3}" are removed from the notification center of the terminal). Sometimes, content displayed in the card cannot satisfy processing performed by the user on the notification. Therefore, after the card is opened, the dynamic touch symbol is still retained, so that the user may perform a shortcut operation on the unread notifications subsequently. When the user performs an operation on any card and opens an interface of an application, the user may continue to process other notifications in the application interface. In this case, the notifications do not need to be retained in the side region of the first interface in a form of a touch symbol, and the dynamic touch symbol D₁ disappears from the cluster.
   c. When detail cards "C₁, C₁, ..., and C_{A3}" corresponding to a dynamic touch symbol D₁ are opened, statuses corresponding to notifications in notification lists "N₁, N₂, ..., and N_{A3}" are still "unprocessed". When the terminal detects that the fifth operation (an operation in a card region) or the sixth operation (an operation for removing the card) occurs on the card C₁, a status of the notification N₁ changes from "unprocessed" to "processed", and the notification N₁ is removed from the notification list (in this case, the notification N₁ is removed from the notification center of the terminal). When the terminal continues to detect that the fifth operation or the sixth operation occurs on a card Cₓ, a status of a notification Nₓ changes from "unprocessed" to "processed", and the notification Nₓ is removed from the notification list (in this case, the notification Nₓ is removed from the notification center of the terminal). When the notification list corresponding to the dynamic touch symbol D₁ is cleared, or when there is no unprocessed notification in the notification list, the dynamic touch symbol D₁ disappears from the touch symbol cluster. After the user performs processing (replying, copying a verification code, or the like) on a card that the user is interested in, or removes a card that the user is not interested in, a notification corresponding to the card does not need to be retained in the notification list, and the notification does not need to be retained in the notification center. However, another unprocessed notification in the list is not processed by the user, and therefore is still retained in the notification list, and corresponds to the dynamic touch symbol D₁ for subsequent interaction by the user. In addition, the unprocessed notification is still retained in the notification center.

It should be understood that the foregoing description is merely an example, and should not be used as a limitation on this application. In the embodiments of this application, unlimited to the foregoing method, another determining method may alternatively be configured to determine whether to retain or remove the dynamic touch icon.

In an embodiment of this application, an eighth operation may be further performed on the touch symbol cluster, and in response to the eighth operation, the terminal may clear a notification and a notification list corresponding to each dynamic touch symbol in the touch symbol cluster. In addition, in response to the eighth operation, all dynamic touch symbols in the touch symbol cluster are removed.

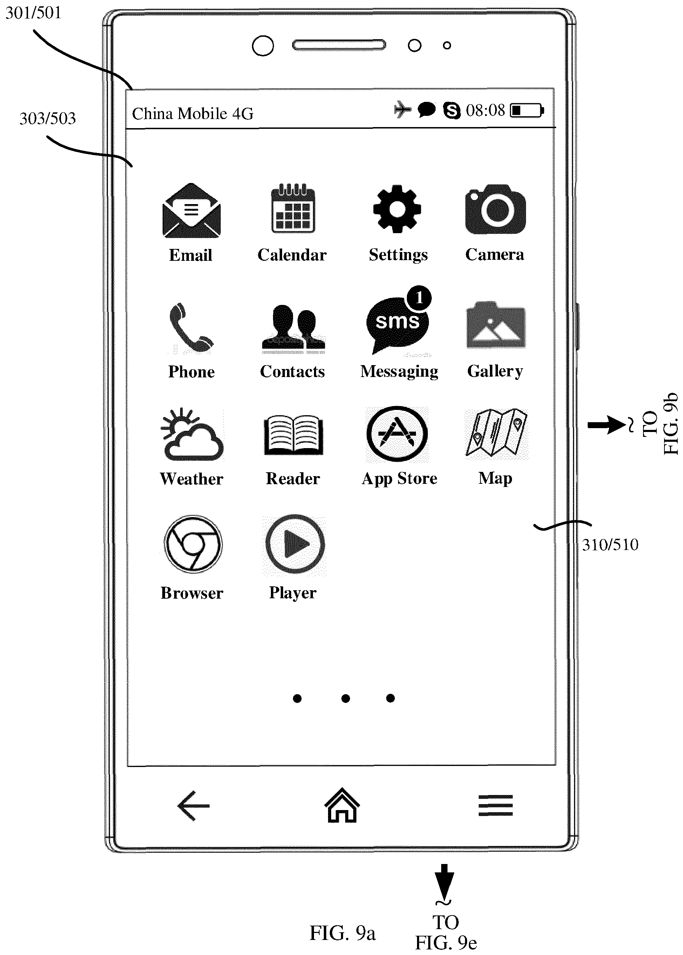

FIG. 9a to FIG. 9e are a schematic diagram depicting a scenario of a notification display method according to an embodiment of this application. When the first interface 310/510 is displayed on the intelligent terminal, as shown in FIG. 9a, and a touch icon cluster hidden in the side region 303/503 of the first interface 310/510 includes a touch icon corresponding to a third application, the touch icon of the third application may be a fixed touch icon, and the fixed touch icon of the third application has an application option card or a detail card related to a detection condition of time, signal strength, a distance, and/or the like, for example, has a card related to time such as start time or end time, or a card related to a scenario of signal strength and/or distance determining, including a card of a vehicle locking scenario, a scenario of arriving at an associated vehicle, or the like. For example, the third application may be a schedule application, and a notification corresponding to the fixed touch icon of the third application may be a reminder notification of an approaching conference (for example, a reminder 15 minutes before conference start time). An application option card or a detail card corresponding to the notification may display detailed content of the conference reminder notification and/or a function key for joining the conference. When the terminal determines that reminder time of the conference expires, the corresponding fixed touch icon or the entire touch icon cluster automatically appears (or may continue to remain in a hidden state). Correspondingly, the application option card or the detail card of the conference reminder notification automatically pops up, to remind the user to view and/or process the application option card or the detail card.

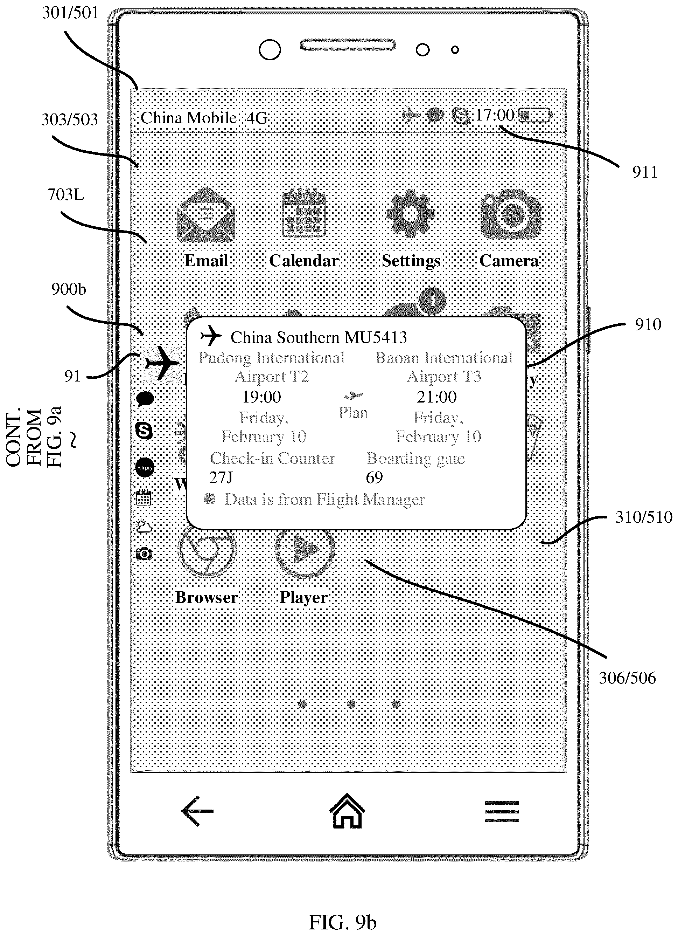

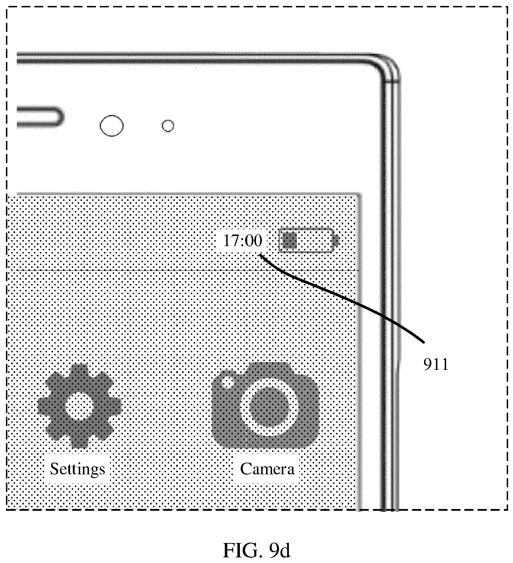

In an embodiment of this application, the touch icon of the third application may alternatively be a dynamic touch icon. With reference to FIG. 9b, when the terminal determines that a notification corresponding to a dynamic touch icon such as a flight manager touch icon 91 in a touch icon cluster 900b in a hidden state satisfies an automatic pop-up condition (for example, a time condition), the touch icon cluster 900b is displayed in the left region 703L of the first interface 310/510, and may further correspondingly move toward the front region 306/506 of the first interface 310/510 and be displayed in an enlarged manner. The flight manager touch icon 91 may be further automatically enlarged and a flight information card 910 correspondingly pops up on a side of the flight manager touch icon 91. The flight information card 910 displays flight information 2 hours after the current time. For example, content corresponding to the flight information card 910 is boarding information of a China Southern flight at 19:00 of the current day, and 2 hours before boarding, that is, at 17:00 of the current day (as shown in an enlarged diagram in FIG. 9d), the terminal determines that the time condition is satisfied, the icon cluster 900b is enlarged and displayed in the left region 703L of the first interface 310/510, the flight manager touch icon 91 is further enlarged, and the flight information card 910 pops up at the same time, to remind the user not to miss the flight.

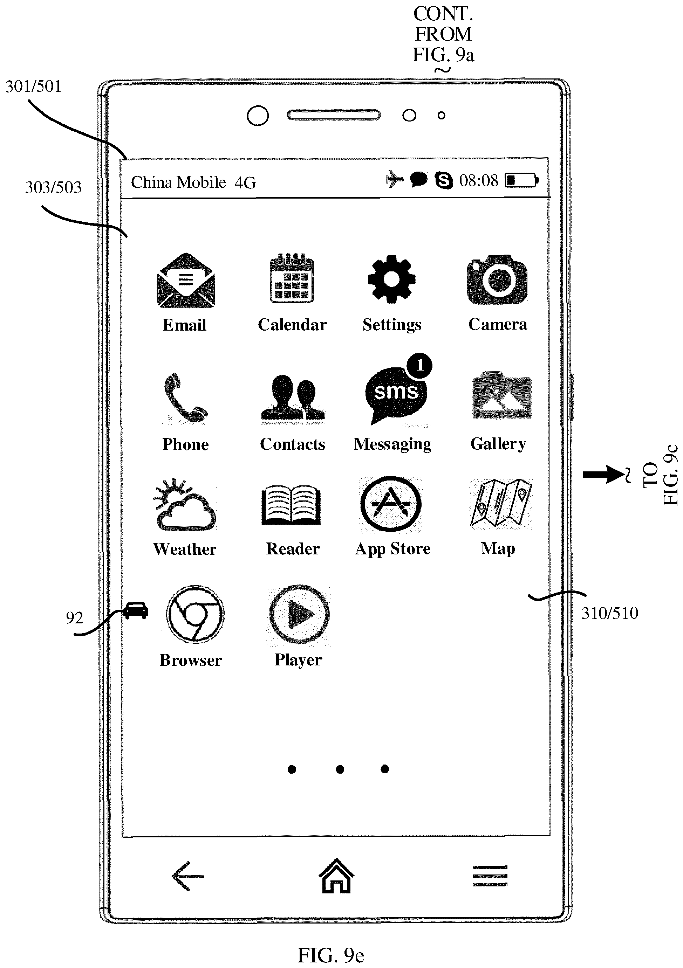

In the embodiment shown in FIG. 9e of this application, when the terminal determines that a notification corresponding to a car application touch icon 92 in the touch icon cluster in the hidden state satisfies an automatic pop-up condition (for example, a scenario condition determined by using signal strength, a distance, and/or the like), the touch icon cluster continues to remain in the hidden state in the side region of the first interface 310/510, and the touch icon 92 corresponding to a car application is displayed in the left region 703L of the first interface 310/510. After the user taps the touch icon 92, as shown in FIG. 9c, a detail card or an application option card of the notification corresponding to the touch icon 92, for example, a car information card 921 and/or a car operation card 922, pops up in the front region 306/506 of the first interface 310/510, to make it convenient for the user to control or operate a car, for example, open a window of the car, unlock a door of the car, set a temperature of an air conditioner, and the like. In this embodiment of this application, the automatic pop-up scenario condition may be: The terminal detects, for example, by using a Bluetooth signal, that an associated vehicle appears nearby; or the terminal detects that a distance from an associated vehicle increases but the associated vehicle is not locked; or the terminal detects that an abnormality occurs on an associated vehicle, for example, a vehicle alarm such as insufficient tire pressure, a low fuel amount, or a damaged sensor. When an abnormality occurs on the associated vehicle, the terminal automatically pops up a detail card or an application option card to display detailed content of the abnormality, so as to remind the user of the abnormality and/or provide a function key for processing the abnormality. In addition, in this embodiment of this application, the touch icon 92 is corresponding to a plurality of detail cards or application option cards, for example, the car information card 921 and the car operation card 922, and the plurality of cards may simultaneously pop up when a detection or determining condition is satisfied, or only one or more related cards but not all the cards pop up, so that the user can conveniently view content related to a currently detected scenario and perform a related operation.

In the foregoing embodiment, a notification with a time or scenario condition and/or limitation may still be retained in the side region in a form of a dynamic touch symbol after the user views a detail card or an application option card of the notification or performs a corresponding operation on the card. Alternatively, as described in the foregoing embodiment, after the user processes a notification detail card, for example, slides right to delete the card, a dynamic touch symbol corresponding to the card is removed from the cluster in the side region.

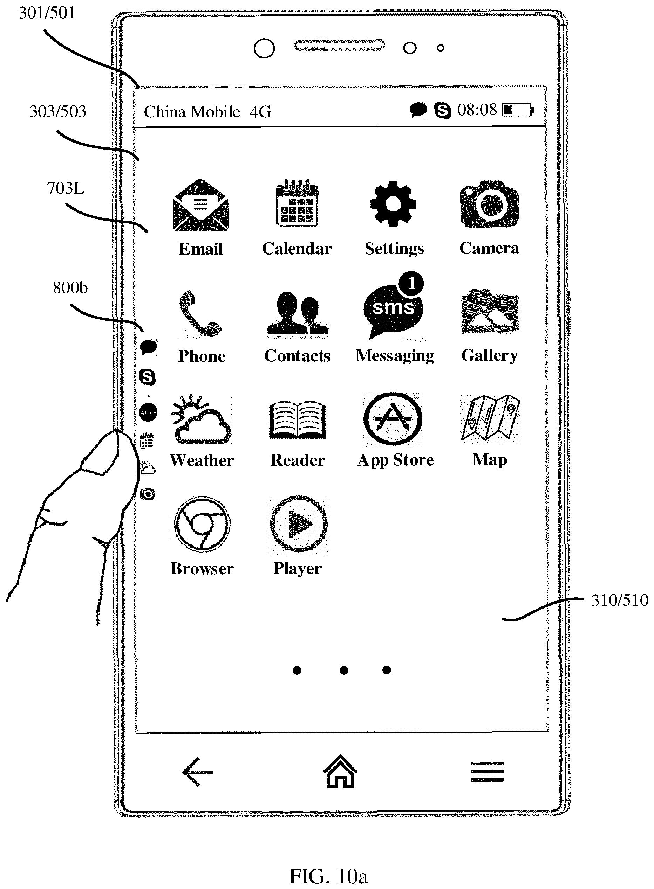

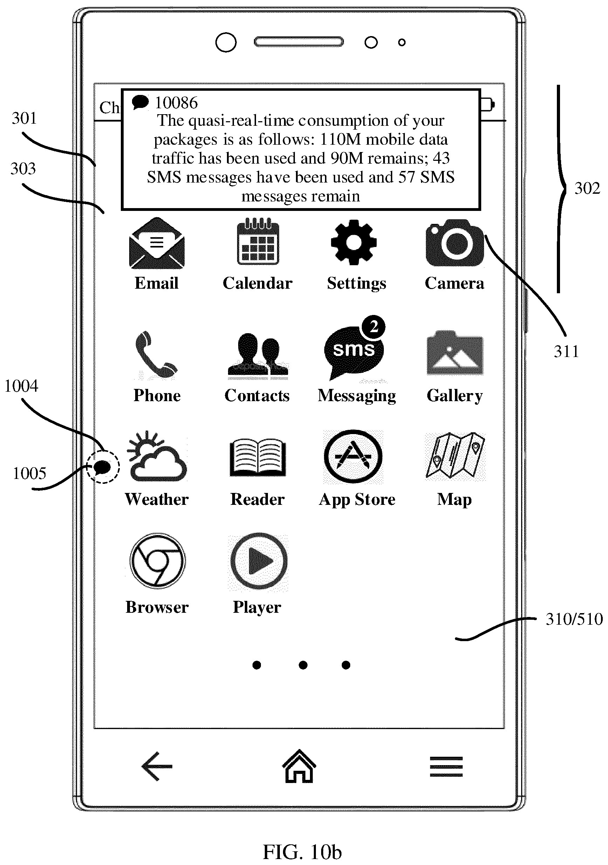

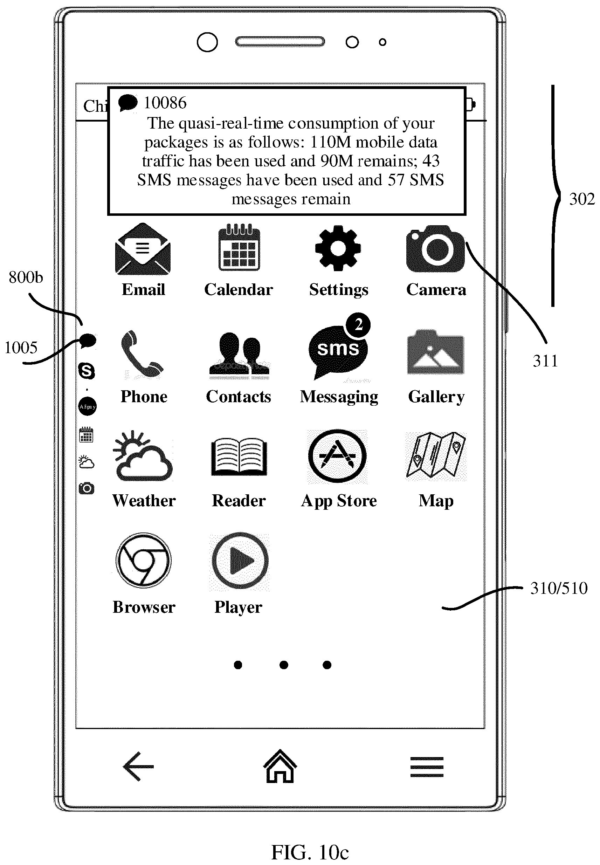

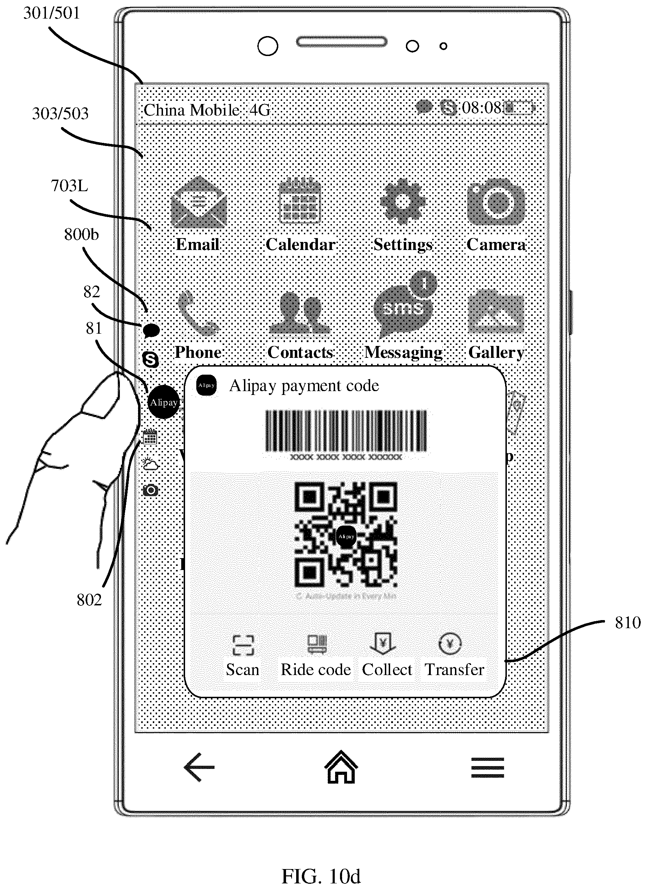

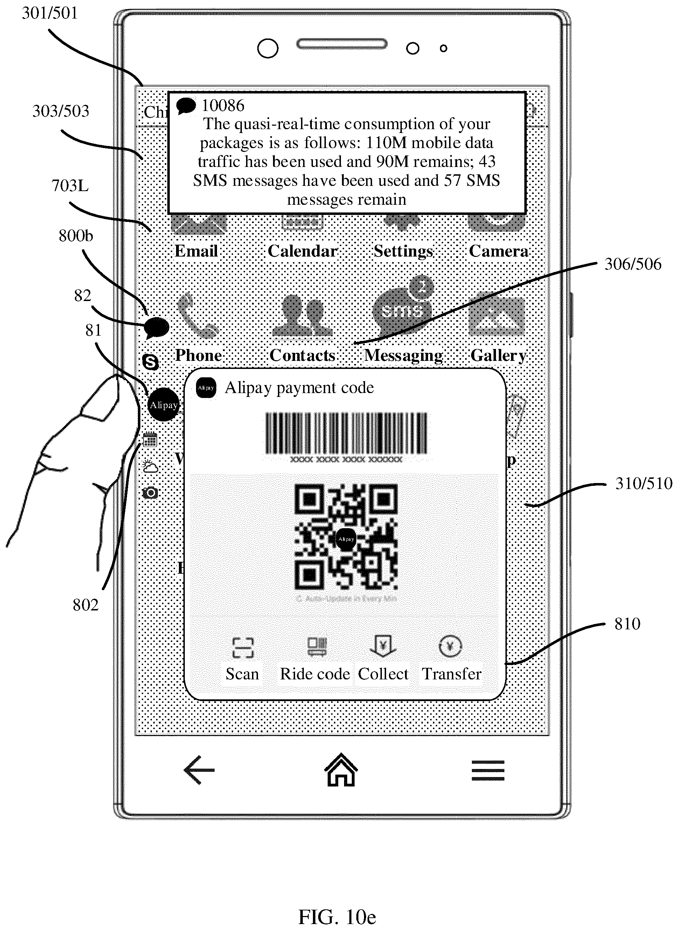

FIG. 10a to FIG. 10e are a schematic diagram depicting a scenario of a notification display method according to an embodiment of this application. As shown in FIG. 10a, the enlarged icon cluster 800b has been displayed in the side region 303/503 of the first interface 310/510, and the user is interacting with the hot region of the icon cluster 800b. As shown in FIG. 10d, the user still interacts with the hot region of the icon cluster 800b, and the payment code card 810 of Alipay is displayed on the display. It should be understood that interaction between the user and the icon cluster 800b is not limited to the scenario shown in FIG. 10a and FIG. 10d, but includes but is not limited to the interaction scenarios in the foregoing embodiments, for example, the scenario in any embodiment shown in FIG. 3b, FIG. 4a to FIG. 4c, FIG. 4e and FIG. 4f, FIG. 6b to FIG. 6e, FIG. 7b to FIG. 7e, FIG. 8a to FIG. 8d, and FIG. 9b and FIG. 9c. In the foregoing possible interaction scenarios between the user and the touch symbol cluster, the intelligent terminal receives a notification from a second application, for example, receives an SMS notification, and the notification appears in the top region 302 of the first interface 310/510 in a form of a banner 311, as shown in FIG. 10b, FIG. 10c, or FIG. 10e. A touch symbol corresponding to the banner 311 may already exist or may not exist in the current icon cluster 800b.

In the embodiment shown in FIG. 10b, in response to the banner 311 of the new notification, the touch icon cluster 800b in the side region 303/503 is hidden, and only a touch icon, that is, a messaging touch icon 1005, corresponding to the banner 311 is displayed in the side region 303/503. When the first interface 310/510 is a home screen, a badge of a messaging application icon displayed in the first interface 310/510 is updated from "1" to "2", to indicate that a messaging application includes the newly received notification. To be specific, when the user is interacting with the touch icon cluster 800b, the new notification interrupts the current interaction, so that the user processes content of the new notification. When the intelligent terminal detects a corresponding operation in a touch hot region 1004 of the messaging touch icon 1005, corresponding processing may be performed, as shown in FIG. 3b, FIG. 3c, FIG. 3d, FIG. 3e, or FIG. 3f. Details are not described herein. In an embodiment of this application, if the terminal does not detect a further operation on the messaging touch icon 1005, the banner 311 of the new notification disappears after a predetermined period of time. In addition, an updated touch symbol cluster is displayed in the side region 303/503 of the first interface 310/510. For an update of the touch symbol cluster after the new notification is received, refer to the foregoing embodiments. Details are not described herein.

In the embodiment shown in FIG. 10c and FIG. 10e, when the user is interacting with the touch icon cluster 800b in the side region, that is, the intelligent terminal detects an operation in the hot region of the touch icon cluster 800b, in response to the received new notification, the banner 311 is displayed in the top region 302 of the first interface 310/510. In this case, an interface for interaction with the icon cluster 800b is not hidden, and the messaging touch icon 1005 corresponding to the SMS notification and the banner 311 is displayed in the touch icon cluster 800b in a prompt manner. "Display in a prompt manner" means that the icon is displayed in a manner different from that of another icon in the cluster, for example, displayed in an enlarged manner, and/or displayed in a highlighted manner, and/or displayed in a flickering manner. For example, the icon is enlarged and displayed in a flickering manner for 3 seconds, to provide a strong reminder for the touch icon 1005. Therefore, even when the user is interacting with the cluster and focuses on the interaction interface, the icon displayed in a prompt manner can attract attention of the user to remind the user that a corresponding operation can be performed on the messaging touch icon 1005 currently to process the SMS message. In other words, when the user is interacting with the touch icon cluster 800b, the new notification does not interrupt the current interaction, so that the user can conveniently determine whether to continue the current interaction or process content of the new notification.

In the interfaces of the scenarios shown in FIG. 3b, FIG. 4a to FIG. 4c, FIG. 6b to FIG. 6e, FIG. 7b to FIG. 7e, and FIG. 8a and FIG. 8b, a new notification received by the terminal interrupts current interaction with the touch symbol cluster. As described in FIG. 10b, after the interaction is interrupted, the interface for interaction with the cluster disappears, and only a touch symbol corresponding to the new notification is displayed in the side region. In the interfaces of the scenarios shown in FIG. 8c and FIG. 8d and FIG. 9b and FIG. 9c, a new notification received by the terminal does not interrupt current interaction with the touch symbol cluster. As shown in FIG. 10e, a touch symbol corresponding to the new notification is displayed in the cluster in an enlarged, highlighted, or flickering manner.

In the interface of the scenario shown in FIG. 4e and FIG. 4f, the terminal does not display a banner or a pop-up box of a new notification when receiving the new notification, but displays an icon corresponding to the new notification in the notification bar/task bar 412b, and/or displays a badge on an application corresponding to the new notification. In this case, the new notification may interrupt interaction in the scenario shown in FIG. 4e and FIG. 4f, that is, a touch icon on the side is to be configured to receive an operation to display and/or process the new notification.

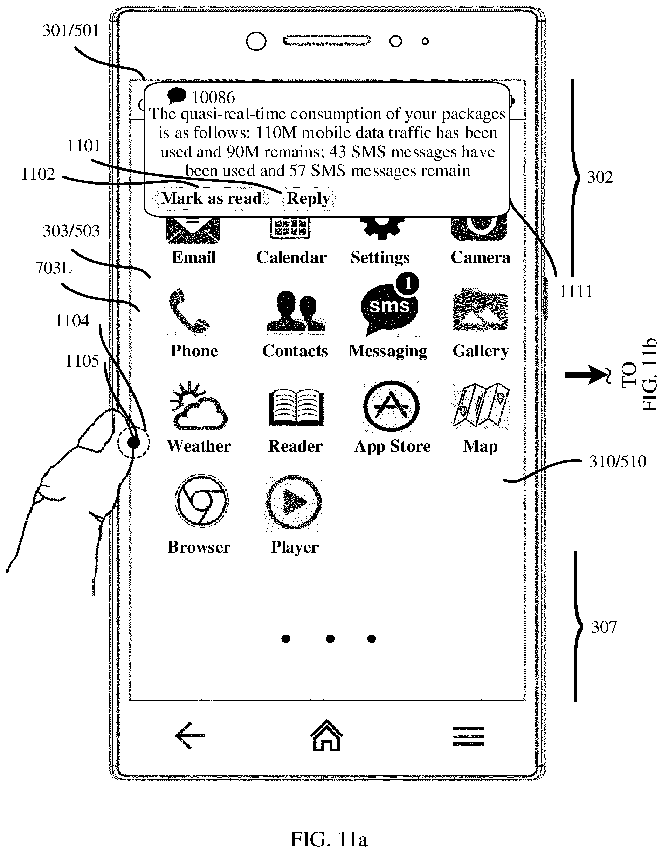

In some application scenarios of the intelligent terminal provided in this application, a notification pushed by a system or a third-party application appears in a form of a banner or a pop-up box, and a function key is attached to the banner or the pop-up box. For example, function keys such as "copy verification code" and/or "delete" are attached to an SMS notification, and function keys such as "reply" and/or "mark as read" are attached to a pop-up box of a WeChat message. FIG. 11a to FIG. 11d are a schematic diagram depicting a scenario of a notification display method according to an embodiment of this application. FIG. 11a shows that the intelligent terminal receives a new notification that is in a form of a banner 1111 with function keys 1101 and 1102 in the top region 302 of the first interface 310/510. In response to the new notification, a touch symbol 1105 is displayed in the side region 303/503. The touch symbol 1105 may be a unique touch symbol or a touch symbol corresponding to the new notification. When detecting a corresponding operation in a touch hot region 1104 of the touch symbol 1105, the terminal displays content of the notification for processing by the user. If the user does not process the new notification, the notification is added to the notification center of the terminal. If the user processes the notification, the notification is removed from the notification center of the terminal.

In an embodiment of this application, the terminal determines, based on a sensor, and/or an antenna signal, and/or historical use data of the user, whether the user holds the terminal with the left hand or the right hand, or whether the user performs an operation with the left hand or the right hand, and displays the touch symbol 1105 in the left region 703L or the right region 703R of the first interface 310/510 based on a determining result, to display the touch symbol 1105 in an operation region close to the user. In this way, the user can process the new notification in a current holding status without changing the holding status or adding an additional operation finger. In another embodiment of this application, the touch symbol 1105 may alternatively be displayed in both the left region 703L and the right region 703R, so that the user can process the new notification on either side, to quickly process the content of the notification corresponding to the banner.

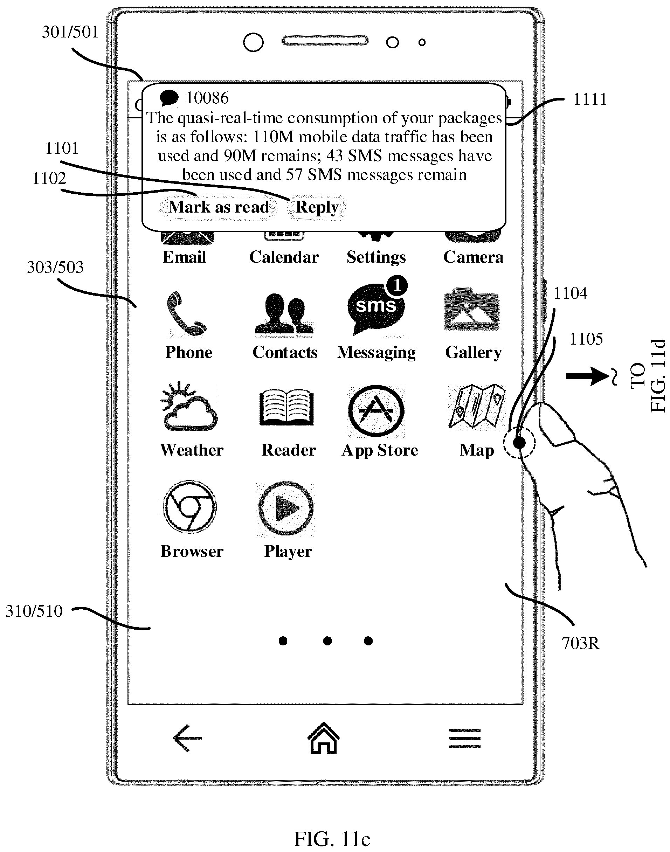

In the embodiment shown in FIG. 11a, in response to the banner 1111, if the terminal determines that the user currently operates the terminal with the left hand (this determining process may alternatively be omitted, that is, the symbol is displayed on the left by default), the touch symbol 1105 is displayed in at least the left region 703L of the first interface 310/510. In the embodiment shown in FIG. 11c, in response to the banner 1111, if the terminal determines that the user currently operates the terminal with the right hand (this determining process may alternatively be omitted, that is, the symbol is displayed on the right by default), the touch symbol 1105 is displayed in at least the right region 703R. When the terminal detects the first operation in the hot region 1104 of the touch symbol 1105 in the left region 703L or the right region 703R, the entire banner 1111 with the function keys 1101 and 1102 is dropped down to a predetermined region 1106. The predetermined region 1106 is between the top region 302 and the bottom region 307 of the first interface 310/510. The banner 1111 displayed in the predetermined region 1106 covers a part of the first interface 310/510 in the front region 306/506, and the banner 1111 after being dropped down is closer to the bottom region 307 of the first interface 310/510 than the banner 1111 before being dropped down. The first operation is not limited in this application. The first operation may be a touch operation, a slide operation, a double-tap operation, a touch and hold operation, a pinch operation, a pressure operation, a fingerprint operation, or a combination thereof, or may be a combination of the foregoing operation and human face recognition. Specifically, for example, the first operation may be an operation of sliding down by a preset distance, an operation of touching and holding for a preset time period, or an operation of a preset gesture. The predetermined region mentioned in this application may be a middle region of the first interface, may be an upper-middle region or a lower-middle region, or may be a left-middle region or a right-middle region. Generally, for the banner and the function keys of the banner displayed in the predetermined region 1106, the user usually can perform an operation conveniently without moving a finger greatly.

In an embodiment, the predetermined region 1106 may alternatively be a first region adaptively adjusted based on an operation location of the user in the side region that is detected by the terminal. For example, the first region may be located near a touch point or a single-tap point of the user in the side region. For example, a center of the first region may be adaptively adjusted to a horizontal line of a touch point detected by the terminal, or a specific distance above or below the horizontal line. The horizontal line is not an absolutely horizontal direction, but is described relative to a direction of the terminal in the figure. When an up-down direction of the terminal is not vertical if the terminal is normally viewed, a direction of the horizontal line is not horizontal, but is substantially perpendicular to the up-down direction of the terminal.

In another embodiment, the user may further edit the drop-down banner 1111 to change the first region for displaying the banner. For example, after the user touches and holds the banner for 3s, an editing mode is displayed, and the user may drag the banner up and down to display the banner in an expected region. After the user exits the editing mode, a banner of a new notification is displayed in the expected region edited by the user after being dropped down. It should be understood that editing for the first region may alternatively be performed in a setting interface of the system. This should not be construed as a limitation on the present disclosure.

In addition, in this application, a location of the function keys 1101 and 1102 on the banner 1111 may be a left, right, or middle location. When the entire banner or pop-up box 1111 with the function keys 1101 and 1102 is dropped down to the predetermined region 1106 in response to the first operation, the display location of the function keys 1101 and 1102 on the banner or pop-up box 1111 may be correspondingly adjusted to a location that is more convenient for the user to perform an operation, such as a left location, a right location, or a middle location.

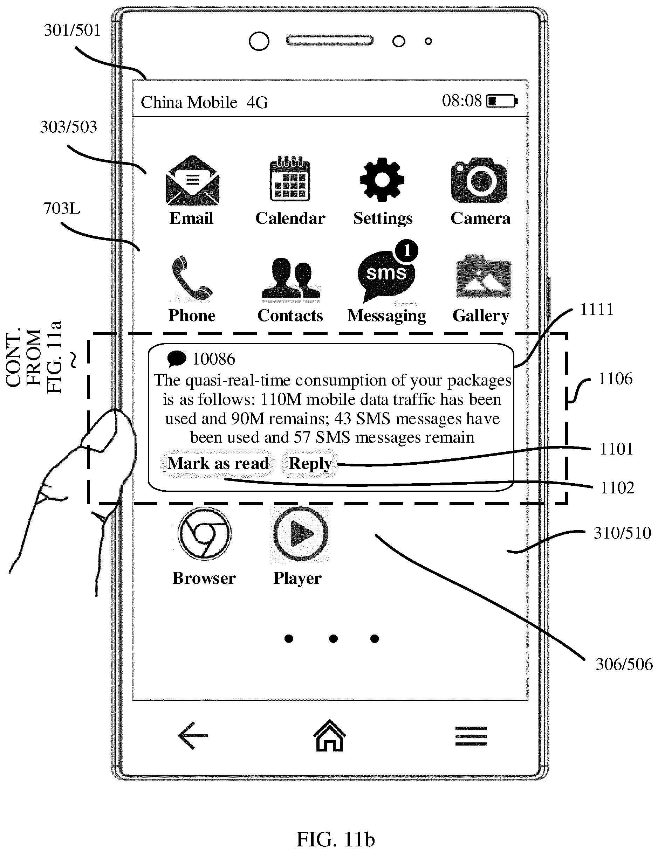

In the embodiment shown in FIG. 11a, the function keys 1101 and 1102 are at a lower left location on the banner 1111, and if the terminal determines that the user currently operates the terminal with the left hand, the touch symbol 1105 is displayed in the left region 703L. When the terminal determines the first operation in the hot region 1104 of the touch symbol 1105, the entire banner 1111 with the function keys 1101 and 1102 is dropped down to the predetermined region 1106. As shown in FIG. 11b, the display location of the function keys 1101 and 1102 in the drop-down banner 1111 remains unchanged, so that the user can continue to operate the function keys on the left side.

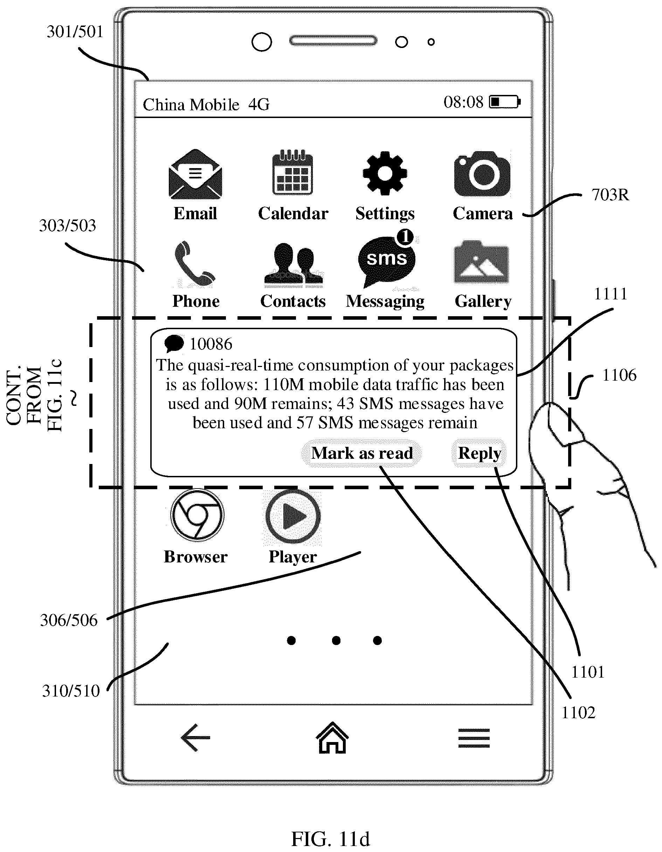

In the embodiment shown in FIG. 11c, the function keys 1101 and 1102 are at a lower left location on the banner 1111, and if the terminal determines that the user currently operates the terminal with the right hand, the touch symbol 1105 is displayed in the right region 703R. When the terminal determines the first operation in the hot region 1104 of the touch symbol 1105, the entire banner 1111 with the function keys 1101 and 1102 is dropped down to the predetermined region 1106. As shown in FIG. 11d, the function keys 1101 and 1102 are adjusted from the lower left location to a lower right location in the drop-down banner 1111, so that the user can continue to operate the function keys on the right side.

In an embodiment of this application, when the terminal receives a new notification, the terminal determines whether the user currently operates the terminal with the left hand or the right hand, to correspondingly display a touch symbol in the left region or the right region, and correspondingly display function keys at a lower left location or a lower right location of a banner. As shown in FIG. 11a, when receiving the new notification, the terminal determines that the user currently operates the terminal with the left hand. Therefore, the touch symbol 1105 is displayed in the left region 703L, and the function keys 1101 and 1102 are displayed at the lower left location of the banner 1111.

It should be noted that, in another embodiment of this application, when a banner or pop-up box without a function key is dropped down to a predetermined display region in response to a first operation, the intelligent terminal further detects a second operation in the predetermined display region, and performs a corresponding operation for the new notification in response to the second operation, to process content of the notification. For example, when detecting a tap operation on the banner 1111 displayed in the predetermined display region 1106, the intelligent terminal opens an interface corresponding to the notification. The interface may be shown in FIG. 3c, FIG. 3e, or FIG. 3f. Details are not described herein.

When the touch symbol 1105 is one of a plurality of interface elements used by the terminal to process a notification in the side region, in an embodiment of this application, in the scenario shown in FIG. 11a or FIG. 11c, in response to the terminal receiving the new notification and displays the new notification on the display in a form of the banner 1111, the notification is added to the notification center of the terminal, and the touch symbol 1105 is added to a hidden touch symbol cluster in the side region. In the scenario shown in FIG. 11b or FIG. 11d, in response to interaction between the user and the touch symbol 1105 on the side, the banner 1111 is dropped down, the notification corresponding to the banner 1111 is removed from the notification center of the terminal, and the touch symbol 1105 is removed from the touch symbol cluster. However, in another embodiment of this application, in the scenario shown in FIG. 11b or FIG. 11d, if the user does not perform a related operation on the drop-down banner 1111 within a predetermined time period, the drop-down banner 1111 disappears from the interface, the notification corresponding to the banner 1111 is still retained in the notification center of the terminal, and the touch symbol 1105 is retained in the hidden touch symbol cluster in the side region.

The foregoing embodiments of this application may be used in combination with each other. For example, a method for quickly processing a notification that is provided in this application may be combined with any one of the foregoing embodiments. In some scenarios to which the embodiments of this application are applicable, the intelligent terminal may receive a notification that includes only content, for example, news, or may receive a notification that includes content and a function key, for example, an SMS notification that has a "copy verification code" function, or an email conference notification with "accept" or "reject". The foregoing different system notifications and notifications of different applications may be processed with reference to any of the foregoing embodiments. For example, the terminal processes, according to an embodiment of this application, the notification that includes only content, and processes, according to another embodiment of this application, the notification that includes content and a function key.

For example, when the intelligent terminal receives a WeChat notification, the notification appears on the display in a form of a banner or a pop-up box, and the banner or the pop-up box of the notification includes only WeChat message content, but does not include any function key, the user performs an operation on a corresponding touch point displayed in the side region, to quickly process the WeChat message. For example, when detecting an operation in a touch region of the touch point, the terminal may open a WeChat interface, and hide the banner or the pop-up box, or display the WeChat interface in a split-screen mode. For details, refer to FIG. 3a to FIG. 3h and the description thereof. For another example, when the intelligent terminal receives an SMS notification, the SMS notification appears on the display in a form of a banner or a pop-up box, and the SMS notification not only includes SMS message content but also includes function keys such as "copy verification code" and/or "delete", the user performs an operation on a corresponding touch point displayed in the side region, to quickly drop down the banner or the pop-up box to process the SMS message content. For example, when detecting an operation on the banner or the pop-up box dropped down to a predetermined region, the terminal performs corresponding processing on the SMS notification. For details, refer to FIG. 11a to FIG. 11d and the description thereof.

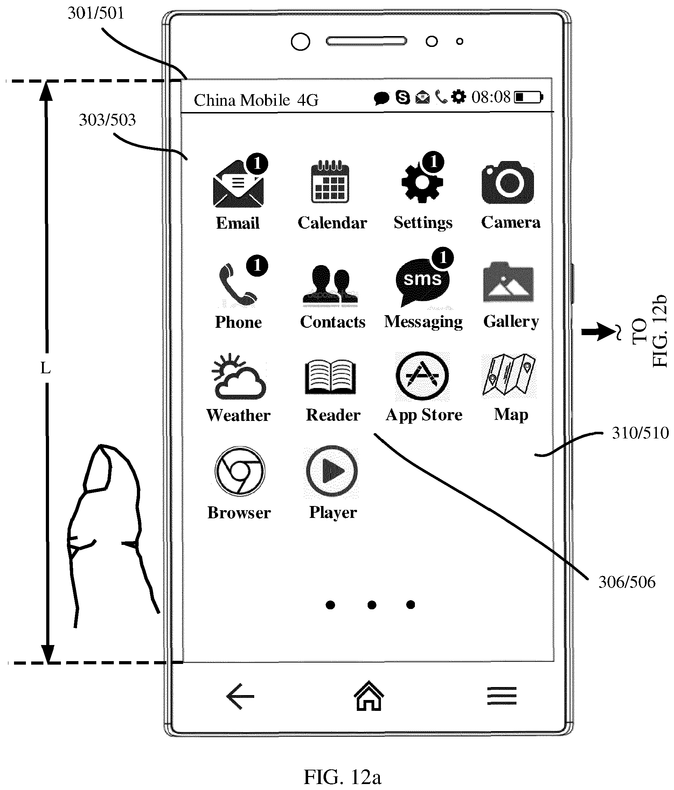

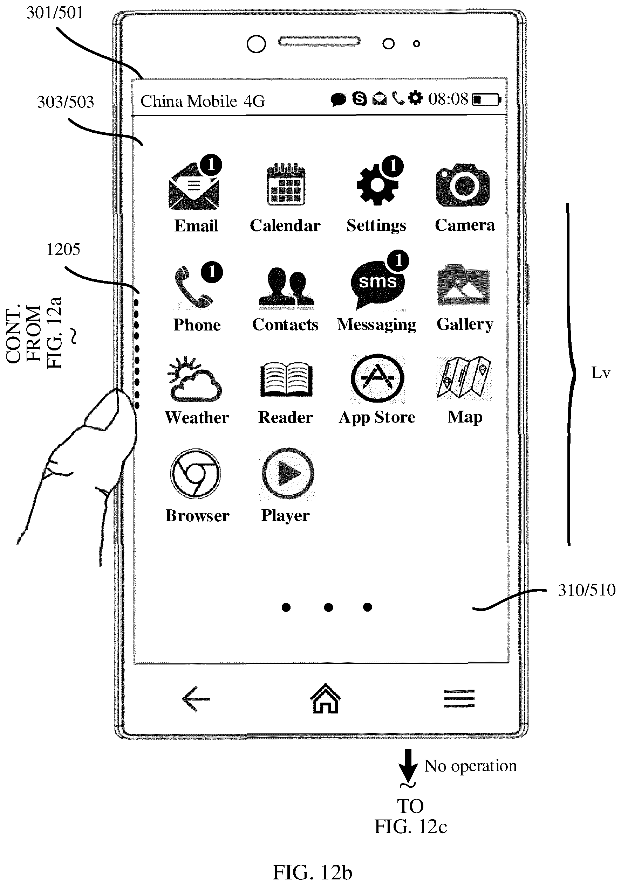

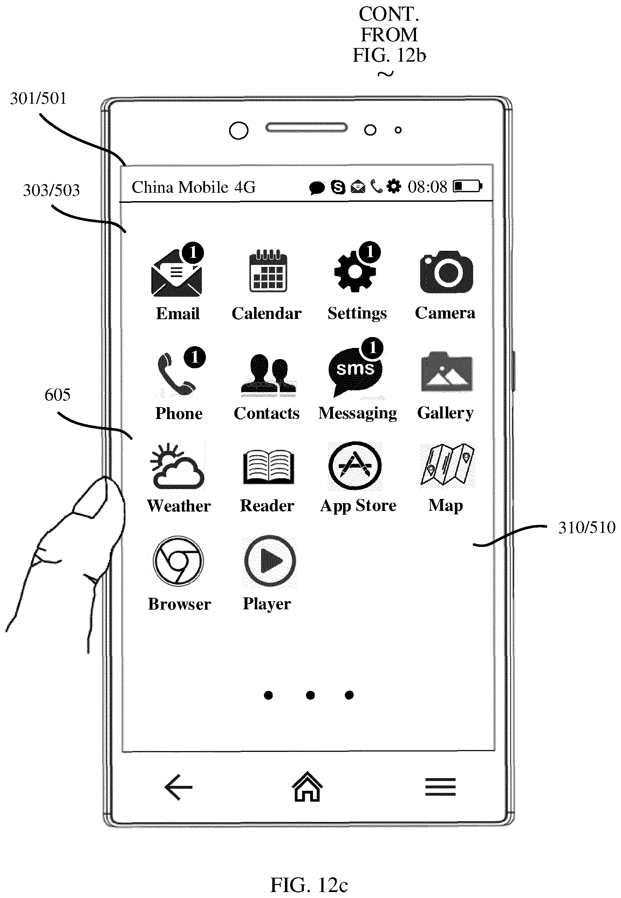

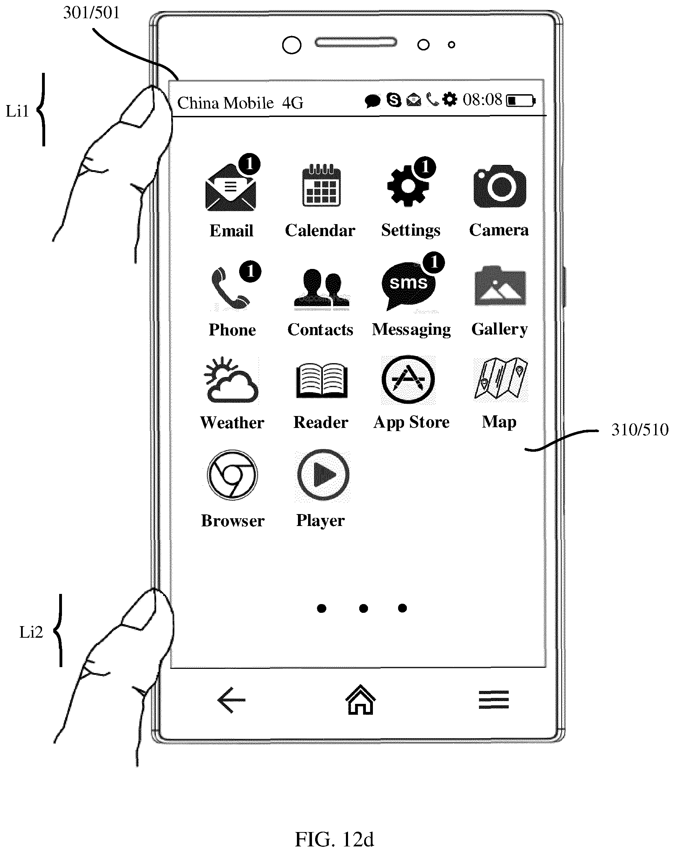

FIG. 12a to FIG. 12d are a schematic diagram depicting a scenario of a notification display method according to an embodiment of this application. As shown in FIG. 12a, the intelligent terminal displays the first interface 310/510, a finger of the user does not touch the side region 303/503 of the first interface 310/510, and a touch symbol cluster 1205 is not displayed. As shown in FIG. 12d, the finger of the user touches the side region 303/503 of the first interface 310/510, but a touch location is close to an upper edge and/or a lower edge in the side region 303/503, that is, in an invalid touch region Li1 and/or an invalid touch region Li2, and the touch symbol cluster 1205 is still not displayed. The terminal may detect an operation performed by the user in the invalid touch region Li1 and/or the invalid touch region Li2 and determine that the operation is an invalid operation, or the terminal does not detect any related operation such as a touch in the region. As shown in FIG. 12b, the finger of the user touches the side region 303/503, a touch point is in a middle part of the side region 303/503, that is, in a valid touch region Lv, and the touch symbol cluster 1205 is displayed in the side region 303/503. After the touch point cluster 1205 is displayed, if the terminal does not further detect an interaction operation in a hot region of the touch symbol cluster 1205 within a predetermined time period, the touch point cluster 1205 is no longer displayed. In other words, as shown in FIG. 12c, the touch point cluster 1205 is hidden again in the side region 303/503. In an embodiment of this application, the predetermined time period may be set to, for example, 1.5s, 2s, or 3s. After the user touches the valid touch region Lv of the side region 303/503 and the touch symbol cluster 1205 is displayed, if there is no further operation of the user within 3s, the touch point cluster 1205 is hidden again. In another embodiment in FIG. 12b, only when the terminal detects a tap or touch operation in the valid touch region Lv of the side display region 303/503, or an operation of double-tapping or sliding up by a specific distance in the valid touch region Lv, the touch symbol cluster 1205 is displayed. A more complex operation gesture is set for cluster display, to avoid frequent display and hiding of the touch point cluster 1205 caused by an accidental tap or touch operation. In addition, the valid touch region Lv and the invalid touch region Li1 and/or Li2 are set, to avoid a case in which when the user performs another operation in the front region 306/506 of the first interface 310/510, some parts of an operation finger accidentally touch the side region 303/503. For example, when the user holds the terminal with the left hand and uses the thumb of the left hand to operate an application icon in the first interface 310/510, a part of the hand between the thumb and the index finger easily touches a lower location in the side region 303/503. When the part of the hand between the thumb and the index finger touches the invalid touch region Li2, the touch symbol cluster 1205 is not displayed. Therefore, interference caused by display of the cluster on a current operation of the user can be avoided.

The "invalid touch region" Li and the "valid touch region" Lv in this embodiment of this application are two relative concepts, and are separately set on a total length L of the side region 303/503. The "invalid touch region" Li and/or the "valid touch region" Lv each may be a region predefined by the system or may be a region customized by the user. For example, a valid touch region Lv predefined by the system may be a middle region that is 60% of the side region 303/503, that is, Lv=0.6L. An invalid touch region Li predefined by the system may be an upper region Li1 that is 30% of the side region 303/503 and a lower region Li2 that is 10% of the side region 303/503, that is, Li1=0.3L, and Li2=0.1L. The user may further customize the invalid touch region Li and the valid touch region Lv, to set the valid touch region Lv to a middle region that is 70% of the side region 303/503, that is, Lv=0.7L, and set the invalid touch region Li to an upper region Li1 that is 30% of the side region 303/503 and a lower region Li2 that is 0% of the side region 303/503, that is, Li1=0.3L, and Li2=0. With reference to FIG. 12b and FIG. 12d, approximate regions of Li1, Li2, and Lv are shown in the figure. The "hot region" mentioned in this embodiment of this application may also be defined as a region in the valid touch region Lv. To be specific, after the user touches the valid touch region Lv to enable the touch symbol cluster to be displayed in the side display region, a subsequent operation, for example, sliding to switch a touch icon, or tapping to select a touch icon, performed by the user on the cluster also needs to be performed in the valid touch region Lv, that is, in the hot region. Otherwise, the operation is considered as an invalid touch.

The embodiments provided in this application may all be applied to a landscape and portrait scenario or a screen-off and screen-on scenario of the display of the intelligent terminal.

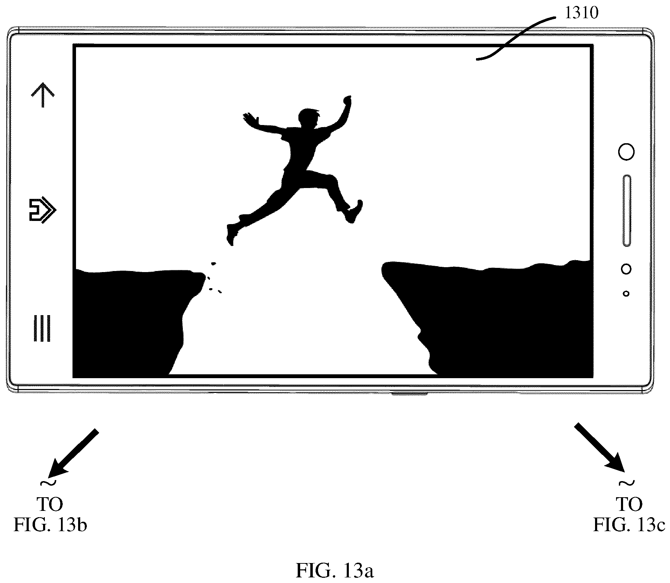

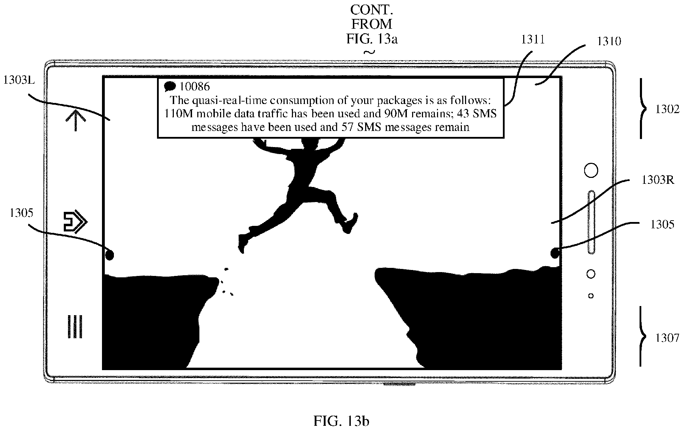

FIG. 13a to FIG. 13d are a schematic diagram depicting a scenario of a notification display method according to an embodiment of this application. FIG. 13a shows a landscape scenario of an intelligent terminal, for example, a scenario in which a user is reading a file or watching a video in landscape mode. In this case, a horizontal length of a first interface 1310 displayed on a display is greater than a vertical length. In other words, when the user normally views an interface in landscape mode, a length in a left-right direction of the interface is greater than a length in an up-down direction. When the terminal is in a direction shown in FIG. 13a to FIG. 13d, a left-right direction of an interface is equivalent to a horizontal direction of the terminal, and an up-down direction of the interface is equivalent to a vertical direction of the terminal. When the intelligent terminal receives a notification in landscape mode, a banner 1311 pops up on a screen, as shown in FIG. 13b. In response to the newly received notification, the banner 1311 is displayed in a top region 1302 of the first interface 1310, and a corresponding touch point 1305 is displayed in a bottom region 1307 or a side region 1303L or 1303R of the first interface 1310, so that the user can quickly process content of the notification. When detecting an operation at the touch point 1305, for example, detecting a slide-up operation, the intelligent terminal may hide the banner 1311, or when detecting another operation, the intelligent terminal may view or split an application interface corresponding to the notification. Such an operation is described in the foregoing embodiment. Details are not described herein again.

As shown in FIG. 13b, the touch point 1305 is displayed in both the side region 1303L and the side region 1303R, so that the user can operate the new notification on a left side or a right side without switching between operation sides, thereby reducing an operation time.

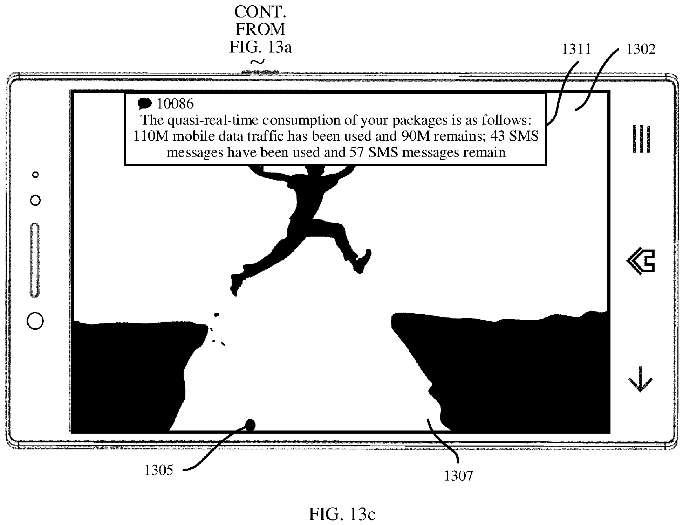

As shown in FIG. 13c, the touch point 1305 is displayed in the bottom region 1307 of the first interface, so that the user can perform an operation from the bottom to view, ignore, or split the content corresponding to the notification. Similarly, the specific operation is not described herein.

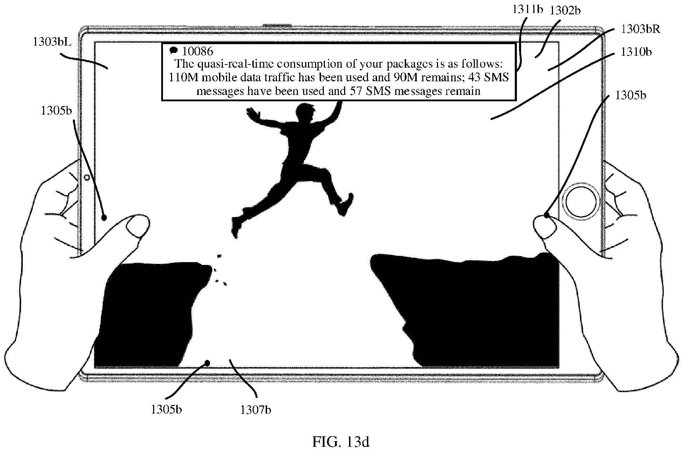

FIG. 13d shows a landscape scenario of an intelligent large-screen terminal. For example, a user holds a tablet computer and watches a video in landscape mode. As shown in FIG. 13d, when the intelligent large-screen terminal receives a notification in landscape mode, a banner 1311b pops up on a screen. In response to the newly received notification, the banner 1311b is displayed in a top region 1302b of a first interface 1310b, and a corresponding touch point 1305b is displayed in a bottom region 1307b and/or a left region 1303bL or a right region 1303bR of the first interface 1310b, so that the user can quickly process content of the notification. When detecting an operation at the touch point 1305b, for example, detecting a slide-up operation, the intelligent terminal may hide the banner 1311b, or when detecting another operation, the intelligent terminal may view or split an application interface corresponding to the notification. Such an operation is described in the foregoing embodiment. Details are not described herein again.

In the embodiment shown in FIG. 13d, the touch point 1305b is displayed in all of the bottom region 1307b, the left region 1303bL, and the right region 1303bR of the first interface 1310b, so that the user can operate the touch point from any of the left side, the right side, or the bottom to display/process the content of the notification. It should be understood that, in the intelligent large-screen terminal scenario, the touch point may alternatively be displayed at only one place, or a display region of the touch point may be determined based on a location of an operation finger of the user. Determining of a display region of a touch point or a touch icon based on a historical operation location or accidental touch location of the user is described in the foregoing embodiment, and details are not described herein again.

In addition, even when the intelligent large-screen terminal is not in landscape mode, for example, when the user holds the large-screen terminal in portrait mode with both hands, a touch symbol that appears in the side region in response to a new notification or a touch symbol cluster that is displayed in the side region in response to a trigger operation may be displayed in both a left region and a right region in portrait mode, so that the user can selectively perform an operation on the touch symbol or the cluster from the left or right.

When the terminal is in a landscape scenario, if it is set that a pop-up box or a banner of a new notification is not displayed, no touch symbol is displayed either, so that a landscape viewing state of the user is not disturbed.

It should be understood that the foregoing specific scenario of the landscape mode is not a limitation on this application. In another embodiment of this application, when the intelligent terminal is in landscape mode, a system may automatically disable or disable, in a predefined manner, display of a touch symbol icon. Similarly, the system may automatically disable or disable, in a predefined manner, display of a touch symbol cluster. It should be further understood that the user may set, for more scenarios, whether to disable display of a touch symbol cluster or a touch symbol of a new notification. In landscape mode, the user may expect to be not disturbed by a touch symbol during current game playing or video watching. Therefore, display of the touch symbol is completely disabled. In a screen-off scenario, the user may expect that no reminder related to a new notification is displayed, for example, no banner or touch symbol is displayed, to avoid frequent lighting of a touchscreen of the terminal. It should be understood that the setting of not displaying a banner or any touch symbol is not limited to the screen-off scenario, and the user may perform the same do-not-disturb setting for another scenario. However, in an embodiment of this application, it may be further set that when receiving a new notification, the terminal does not display a banner but displays a touch symbol on a side to remind that there is currently a new notification to be processed.

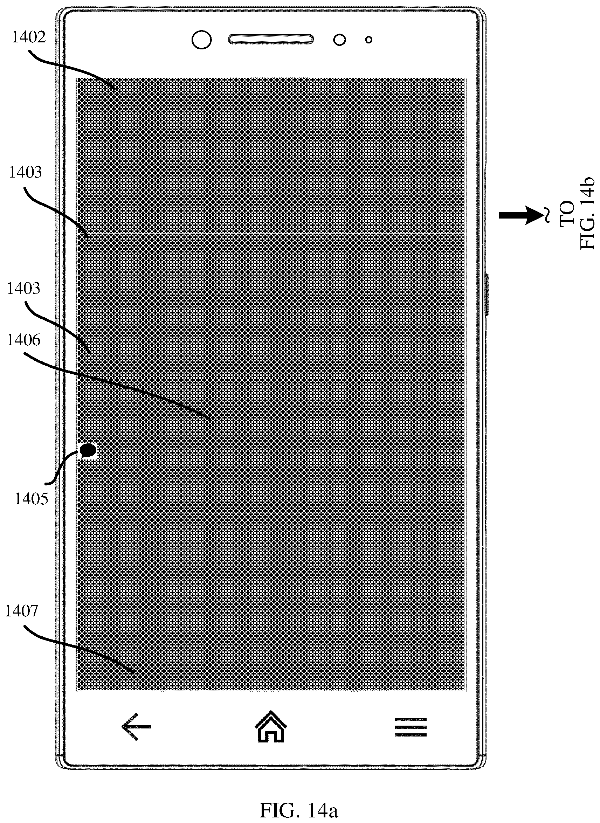

FIG. 14a to FIG. 14f are a schematic diagram depicting a scenario of a notification display method according to an embodiment of this application. FIG. 14a shows that an intelligent terminal receives a new notification and displays a symbol 1405 when a screen is off. A touchscreen 1401 of the intelligent terminal has a top display region 1402, a bottom display region 1407, a side display region 1403, and a front display region 1406. When a user holds the intelligent terminal in a normal direction, the top display region 1402 is in an upper part of the display 1401 and abuts against an upper edge of the display 1401, and the bottom display region 1407 is in a lower part of the display 1401 and abuts against a lower edge of the display 1401. The side display region 1403 includes a left side and a right side, which are respectively in a left part and a right part of the display 1401 and respectively abut against a left edge and a right edge of the display 1401. The front display region 1406 is a main display region of the display 1401, may also be understood as a middle region of the display 1401, and occupies half or more of a display region on the display 1401. It should be understood that the front display region 1406 may be defined as a center region on the display 1401, or may be defined as being closer to one or more edges of the display 1401. The front display region 1406 does not abut against four edges of the display 1401. In addition, the top display region 1402 is a region that the user usually needs to move a finger greatly to touch, and the bottom display region 1407 and a part of the side display region 1403 are regions that the user usually can touch without moving a finger greatly.

In an embodiment of this application, the top display region 1402, the bottom display region 1407, the side display region 1403, and the front display region 1406 are respectively corresponding to the top region, the bottom region, the side region, and the front region of the first interface in the foregoing embodiments. For example, the top region of the first interface in the foregoing embodiments may be displayed in the top display region 1402, the bottom region of the first interface may be displayed in the bottom display region 1407, the side region of the first interface may be displayed in the side display region 1403, and the front region of the first interface may be displayed in the front display region 1406.

It should be understood that the region division for the touchscreen 1401 is intended to describe the embodiments of this application more clearly, but is not intended to substantially split the touchscreen 1401 or distinguish between different regions. In another embodiment of this application, the touchscreen 1401 may alternatively be divided into regions different from the foregoing regions. This should not be used as a limitation on this application.

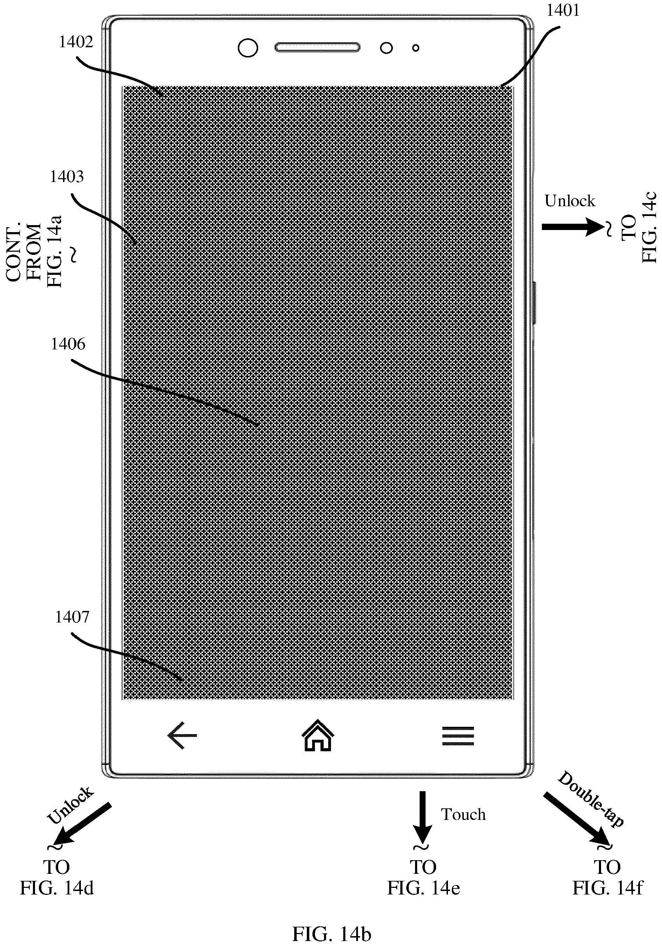

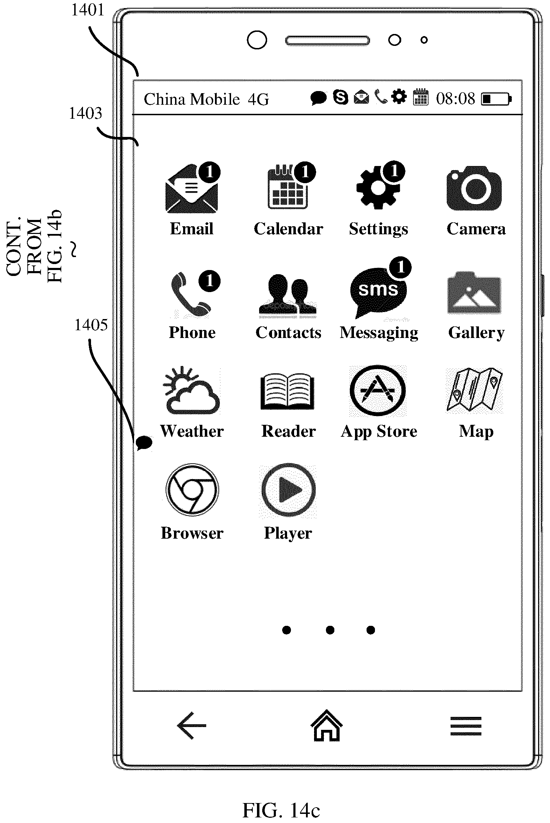

In this case, if a system setting is that no banner or pop-up box is displayed but a corresponding touch symbol is displayed when there is a new notification, as shown in FIG. 14a, when receiving a new notification, the terminal displays only a touch symbol such as a touch point 1405 in the side display region 1403 in a screen-off interface, and the touch symbol is used as an interface element for processing content of the new notification. In an embodiment of this application, after the screen of the terminal is turned off, the touch symbol 1405 corresponding to the notification pushed to the terminal is displayed in the side display region 1403 for a period of time, such as 5s, and then is hidden, as shown in FIG. 14b. Within 5s in which the touch symbol 1405 is displayed and/or within a time period in which the touch symbol 1405 is hidden again, if the user unlocks the electronic device, the touch symbol 1405 is automatically displayed in the side display region 1403, as shown in FIG. 14c, to allow the user to quickly process the new notification. When the user sees the touch symbol 1405 corresponding to the new notification, for example, the user sees that the touch symbol 1405 is a small messaging icon, and the user expects to process the new SMS message immediately, after the user performs unlocking instantly, only the touch symbol 1405 is displayed in the side display region 1403, to allow the user to quickly process the new SMS message. Even if there are more applications including unread notifications, as shown in a signal bar, touch symbols corresponding to the unread notifications are not displayed on a side in this case. As shown in FIG. 14c, after unlocking, the user taps the touch symbol 1405 to open an application interface of the SMS message.

In the embodiment in FIG. 14b, alternatively, when the screen is off, the electronic device may not display a side symbol when receiving a new notification. In other words, before FIG. 14b, the case in FIG. 14a does not occur, but the screen is always off. In this case, when the electronic device receives the new notification, there may be a ring prompt, a vibration prompt, or a breathing indicator prompt. Based on these prompts for the new notification, if the user unlocks the electronic device within a specific time period, for example, within 2s, a symbol corresponding to the new notification automatically appears on a side, to allow the user to process content of the new notification.

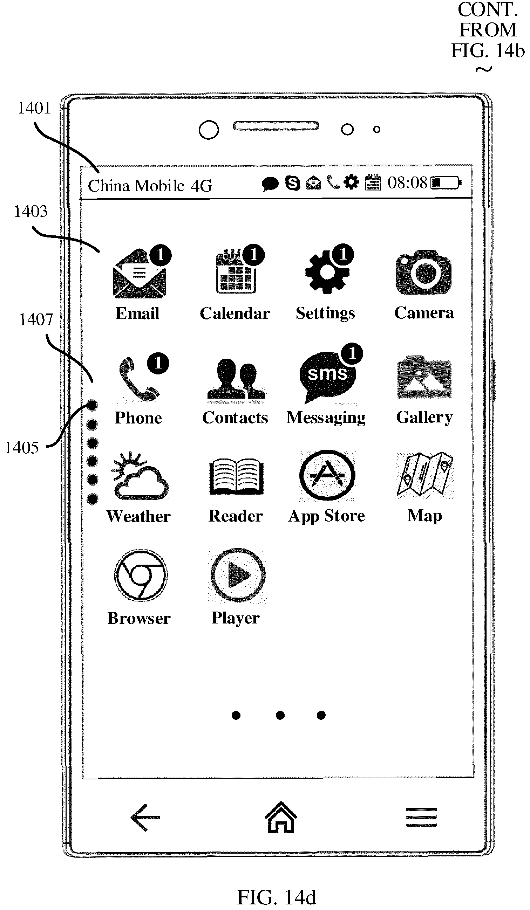

In another embodiment of this application, in a screen-off state, as shown in FIG. 14b, when the user unlocks the electronic device, a touch symbol cluster 1407 including the symbol 1405 of the new notification is automatically displayed in the side display region 1403, as shown in FIG. 14d, to allow the user to quickly process the unread notification.

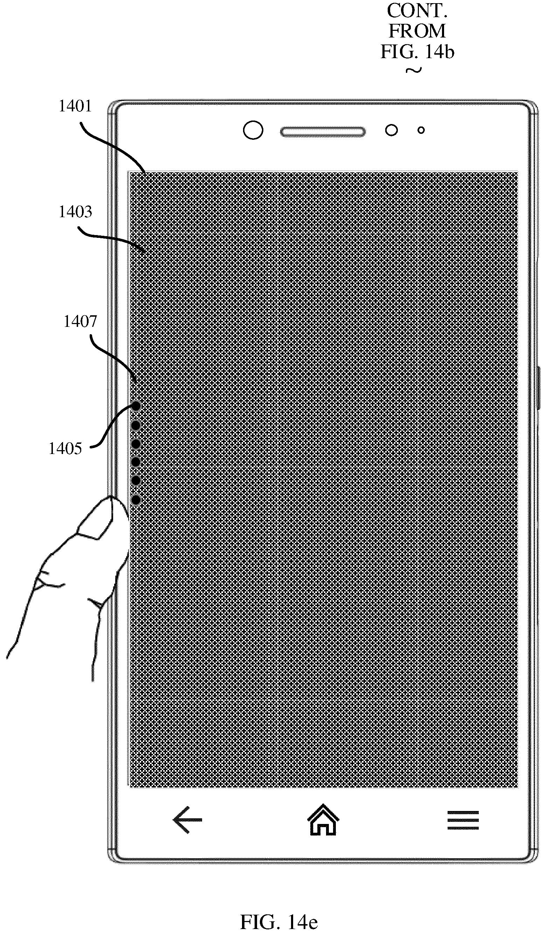

With reference to FIG. 14b again, in a screen-off state, in response to a touch of the user in the side display region 1403, a touch symbol cluster including the touch symbol 1405 is displayed in the side display region 1403, as shown in FIG. 14e. In another embodiment of this application, a touch symbol corresponding to a notification received after the screen is turned off is always displayed in the side display region 1403, and a touch symbol set is formed in the side display region 1403 after the terminal receives a plurality of notifications. Different from the foregoing touch symbol cluster, the touch symbol set accumulated in the side display region 1403 after the screen is turned off may include only the touch symbol corresponding to the new notification received by the terminal after the screen is turned off. In this case, in response to a touch of the user in the side display region 1403, the touch symbol set disappears. In still another embodiment of this application, a touch symbol corresponding to a notification received after the screen is turned off is always displayed, but may be replaced with a touch symbol corresponding to a received new notification. Therefore, if the terminal receives a new notification after the screen is turned off, a touch symbol is always displayed in the side region, even if the touch symbol may correspond to different new notifications at different time.

It should be understood that all new notifications received by the terminal after the screen is turned off are added to the notification center, until the user processes the notifications.

In a screen-off state of the terminal, when the user performs a first operation in the side display region 1403, in response to the first operation, a touch symbol cluster is displayed in the side display region 1403, as shown in FIG. 14e. If there is no subsequent operation, the touch symbol cluster disappears after being displayed for a period of time. The first operation may be a touch and raise operation, and display or disappearance of the touch symbol cluster may be gradual. For example, touch symbols in the cluster are sequentially displayed from bottom to top, or touch symbols in the cluster sequentially disappear from bottom to top. In an embodiment of this application, the display of the touch symbol cluster follows an operation location of the first operation. For example, the touch symbol cluster is displayed 0 to 2 cm above the operation location. In this case, when the user performs a touch and raise operation at different locations in the side display region 1403, the touch symbol cluster is displayed in different regions and changes with the operation location of the user. This can bring the user a light effect that a light dot absorbs a finger of the user. In this embodiment, the user may also trigger display of the cluster in a left display region or a right display region. It should be understood that, because notifications corresponding to the touch symbol cluster have not been processed, these notifications are still retained in the notification center.

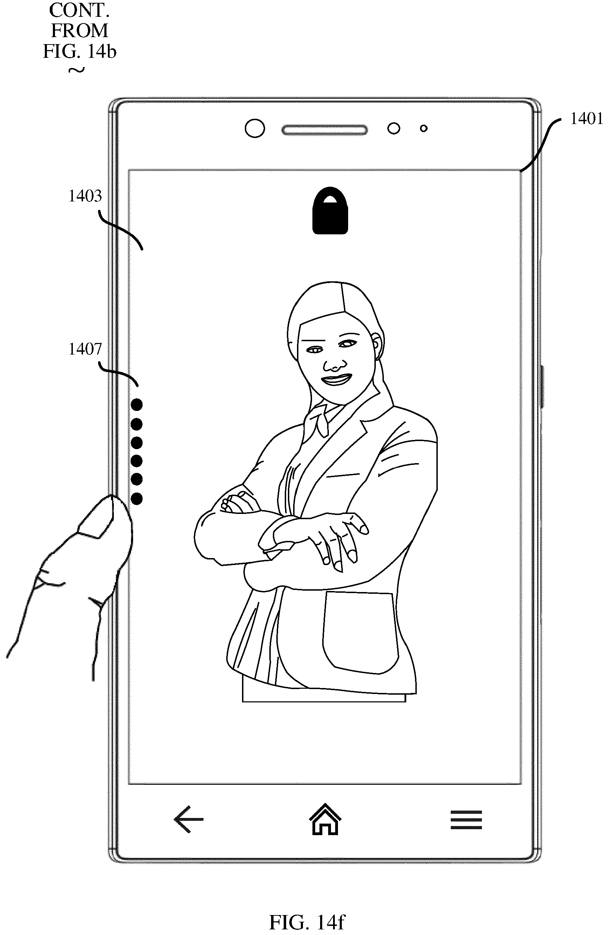

When the user performs a second operation in the side display region 1403, in response to the second operation, the touch symbol cluster 1407 may be displayed in the side display region 1403, and the user is prompted to unlock the terminal, as shown in FIG. 14f. The touch symbol cluster 1407 includes all touch symbols that are retained on a side on the terminal. The second operation may be an operation of touching and holding for 2s or double-tapping in the side display region 1403. Because the touch symbol cluster 1407 includes all unprocessed notifications that are received by the intelligent terminal before and after the screen is turned off and that are retained in the side display region 1403, the touch symbol cluster 1407 may be updated and displayed according to the foregoing ranking method, or may be updated and displayed according to another method. After unlocking the terminal based on a prompt, the user may interact with the touch symbol cluster 1407, as described in the foregoing embodiments. An unlock operation for the intelligent terminal is a normal setting, and interaction with the touch point cluster 1407 after unlocking is the same as or similar to that in the foregoing embodiment. Details are not described herein again. If the unlocking fails, or the terminal does not subsequently detect a further operation on the cluster in the side region 303/503, the cluster disappears again after a predetermined time period, for example, 3s, or the cluster disappears as the screen of the terminal is turned off.

Preferably, the user may further set that when the screen of the terminal is turned off, an operation feedback of interaction with the cluster is disabled, to avoid side cluster display and interaction triggered by frequent accidental touch of the user in the side display region.

In an embodiment of this application, in response to the terminal being unlocked, the terminal may determine whether a "very important" new notification, an "important" new notification, or a new notification whose priority is higher than a threshold is received when the screen is off. If a determining result is yes, a symbol corresponding to the "very important" new notification, the "important" new notification, or the new notification whose priority is higher than the threshold is automatically displayed in an unlocked interface, to prompt the user to view and/or process the new notification by interacting with the touch symbol cluster. For interaction with the touch symbol cluster, refer to the foregoing embodiments. Details are not described herein again.

In another embodiment of this application, when the terminal receives a new notification in a screen-off state, as shown in FIG. 14a, only a corresponding touch symbol 1405 is displayed in the side display region 1403, or another symbol, such as a floating box or a banner (not shown in the figure), related to the new notification may also be displayed.

The foregoing embodiments of this application may be applied to the electronic device 100 shown in FIG. 1, for example, an intelligent terminal. A software system of the terminal may use a layered architecture, an event-driven architecture, a microkernel architecture, a microservice architecture, or a cloud architecture. In the embodiments of the present disclosure, an Android system with the layered architecture is used as an example to illustrate a software structure of the electronic device 100.

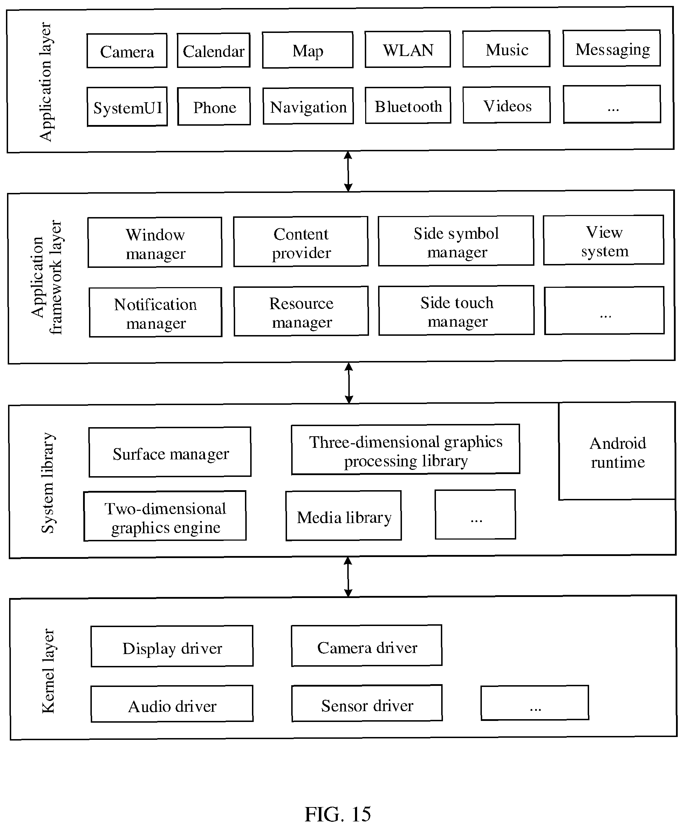

FIG. 15 is a block diagram of the software structure of the electronic device 100 shown in FIG. 1 according to an embodiment of the present disclosure.

In the layered architecture, software is divided into several layers, and each layer has a clear role and task. The layers communicate with each other through software interfaces. In some embodiments, the Android system is divided into four layers: an application layer, an application framework layer, an Android runtime (Android runtime) and system library, and a kernel layer from top to bottom.

The application layer may include a series of application packages.

As shown in FIG. 15, the application packages may include applications such as Camera, Gallery, Calendar, Phone, Map, Navigation, WLAN, Bluetooth, Music, Videos, and Messaging. In an embodiment of this application, the application framework layer may further include SystemUI, used for interaction display and display of a notification received by the intelligent terminal.

The application framework layer provides an application programming interface (application programming interface, API) and a programming framework for an application at the application layer. The application framework layer includes some predefined functions.

As shown in FIG. 15, the application framework layer may include a window manager, a content provider, a view system, a resource manager, a notification manager, and the like. In an embodiment of this application, the application framework layer may further include a side symbol manager and a side touch manager.

The window manager is configured to manage a window program. The window manager may obtain a size of a display, determine whether there is a status bar, perform screen locking, take a screenshot, and the like.

The content provider is configured to: store and obtain data, and enable the data to be accessible by an application. The data may include a video, an image, audio, calls that are made and received, a browsing history and bookmarks, a phone book, and the like.

The view system includes visual controls, such as a text display control and a picture display control. The view system may be configured to construct an application. A display interface may include one or more views. For example, a display interface including an SMS notification icon may include a text display view and a picture display view.

The resource manager provides various resources such as a localized character string, an icon, a picture, a layout file, and a video file for an application.

The notification manager enables an application to display notification information in a status bar, and may be configured to convey a notification-type message. The notification information may automatically disappear after a short pause without user interaction. For example, the notification manager is configured to: notify download completion, provide a message reminder, and the like. The notification manager may alternatively be a notification that appears in a top status bar of the system in a form of a graph or a scroll bar text, for example, a notification of an application running on the background or a notification that appears on the screen in a form of a dialog window. For example, text information is displayed in the status bar, an alert sound is played, the electronic device vibrates, or an indicator light flickers.

The side symbol manager is responsible for managing a side symbol that appears in a side region, for example, a side symbol control, a correspondence between each side symbol and an application, and data of each side symbol. The side symbol manager is further responsible for display of the side symbol control and display after interaction with a user. In an embodiment of this application, the side symbol manager may alternatively be a part of the view system.

The side touch manager is configured to recognize a touch operation in the side region of the intelligent terminal, and send a corresponding signal to the side symbol manager in response to the corresponding touch operation, to trigger the window manager to display a side symbol control, or trigger the SystemUI to display content associated with a notification, for example, a related interface of an application, or a banner of the notification.

The Android runtime (Android Runtime) includes a kernel library and a virtual machine. The Android runtime is responsible for scheduling and management of the Android system.

The kernel library includes two parts: a function that needs to be invoked in Java and a kernel library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (Media Libraries), a three-dimensional graphics processing library (for example, OpenGL ES), and a two-dimensional graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for 2D drawing.

The kernel layer is a layer between hardware and software. The kernel layer includes at least a display driver, a camera driver, an audio driver, and a sensor driver.

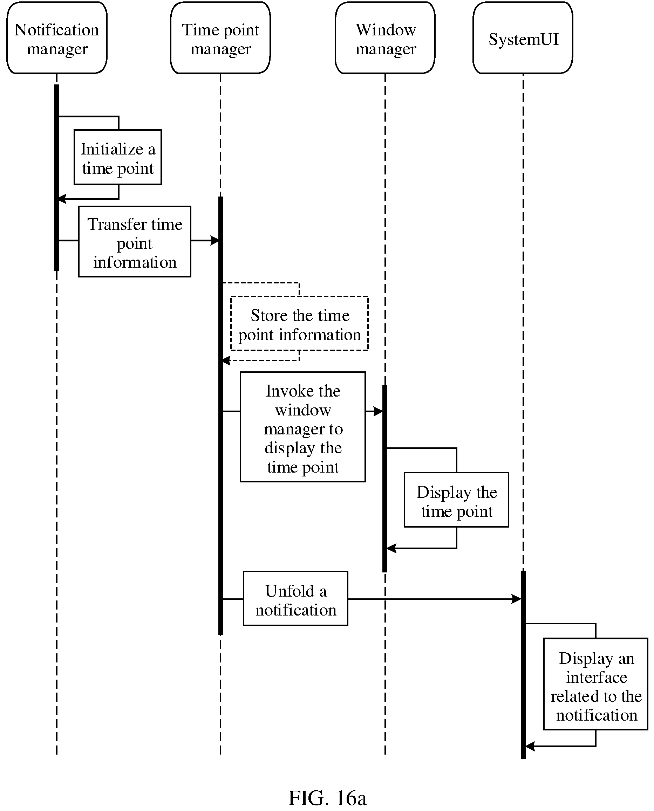

In an embodiment of this application, the side symbol control may be referred to as a time point control, and is configured to display the touch symbol and the touch symbol cluster in the foregoing embodiments. The following further uses a time point control as an example to provide descriptions with reference to a message sequence diagram of a notification display method shown in FIG. 16a to FIG. 16c. Each time point corresponds to one touch symbol, and a touch symbol cluster corresponds to a time point cluster. In the embodiment in FIG. 16a to FIG. 16c, each time point includes one touch icon and one piece of card data/information, where the touch icon is corresponding to an icon of an application, and the card data/information is corresponding to a notification or an application option of the application. The touch icon and the card data/information may be customized by the application.

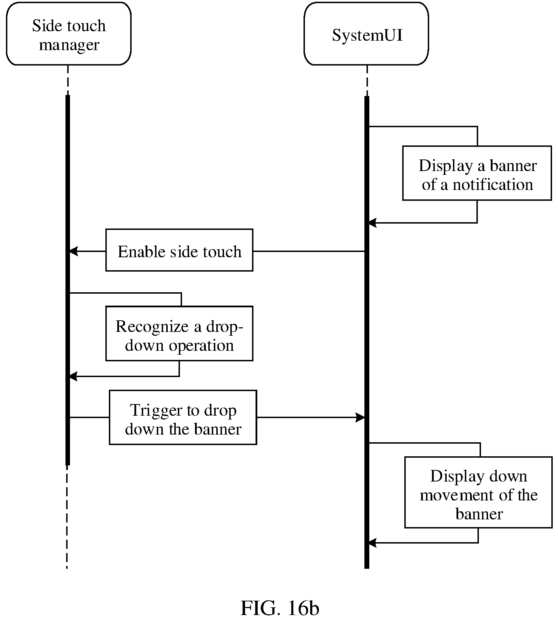

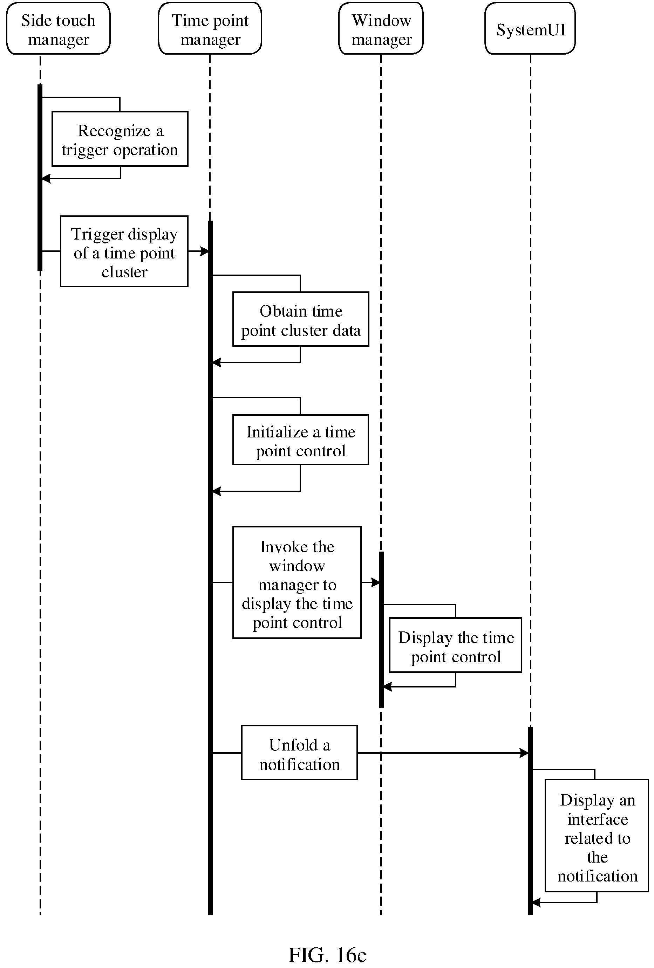

FIG. 16a is a schematic flowchart of time point management when a new notification arrives. FIG. 16b is a schematic flowchart of dropping down a banner by using a time point. FIG. 16c is a schematic flowchart of interaction with a time point cluster.

With reference to FIG. 16a, when receiving a new notification, the notification manager initializes a time point corresponding to the notification, completes initialization of the time point, for example, initialization of a touch icon corresponding to the time point, by using a Remote View function, and may further complete initialization of card data/information corresponding to the new notification. Then, the notification manager may invoke an interface of a time point manager, to transfer new time point information to the time point manager. The time point information may be information such as the new notification and/or content associated with the new notification. The time point manager further invokes the window manager to display a time point control in a side region of a first interface. In this embodiment, the time point control includes the time point corresponding to the new notification, and the time point is configured to receive an operation to process the new notification, for example, delete the new notification, view the content (such as a card) of the new notification, process the content of the new notification in the background, or open an application. In response to a notification processing operation received by the time point, the time point manager further invokes the SystemUI at the application layer to display a notification-related interface.

Optionally, unprocessed time point information may be stored in the time point manager, so that the user subsequently invokes the time point information by performing an operation in the side region.

With reference to FIG. 16b, in an embodiment of this application, a user may perform an operation on the time point to drop down a banner. When receiving a new notification, the terminal displays a banner of the new notification in a top region by using the SystemUI and enables touch in the side region. When the side touch manager recognizes a related operation in the side region, for example, recognizes a slide-down operation on the time point, the side touch manager notifies the SystemUI to trigger display of the drop-down banner. The SystemUI drops down the banner of the new notification from the top region to a predetermined first region, and the first region is preferably far away from the top region, so that the user can conveniently perform a related operation on the drop-down banner to process the new notification.

In a specific embodiment, when receiving a new notification of Alipay, the terminal triggers the SystemUI to display a banner of the new notification in the top region, and notifies the window manager to display a time point control on a side of the first interface. Specifically, a time point related to Alipay is displayed. If the side touch manager recognizes a drop-down operation on the time point, the side touch manager triggers the SystemUI to display a drop-down banner.

In the embodiment in FIG. 16a and FIG. 16b, if the user does not perform any operation on the banner or time point of the notification, the time point manager receives the time point information to manage time point data. When information about a plurality of time points in a time point cluster is stored in the time point manager, an operation performed by the user in the side region may trigger display of the time point cluster.

Specifically, as shown in FIG. 16c, when the terminal receives an operation such as a touch or a double-tap of the user in the side region, the side touch manager recognizes a trigger gesture/operation on a time point control, and further notifies the time point manager to trigger display of all time points in the time point cluster. The time point manager initializes the time point control by obtaining stored time point information of each application, that is, information/data of the time point cluster, and invokes the window manager to display the time point control. The window manager is invoked to display the time point control in the side region, that is, display the time point cluster. In response to an interaction operation of the user on the time point cluster, the time point manager further invokes the SystemUI at the application layer to correspondingly display an interface related to a notification, for example, card data/information corresponding to a time point, an application interface corresponding to a time point, or a related split-screen interface.

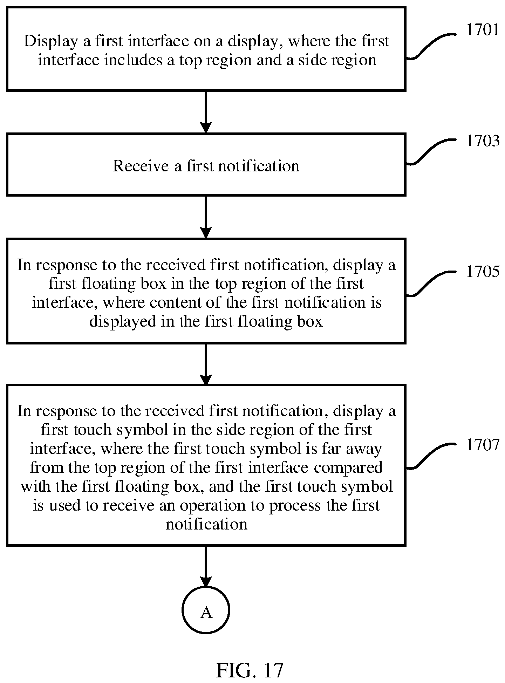

Methods provided in the following embodiments shown in FIG. 17 to FIG. 19 are applied to the electronic device 100 provided in the foregoing embodiment.

FIG. 17 is a schematic flowchart depicting a notification display method according to an embodiment of this application. For a method procedure embodiment shown in FIG. 17, refer to the foregoing Embodiment 1 and the embodiment shown in FIG. 3a to FIG. 3h. As shown in FIG. 17, the method includes the following steps.

Step 1701: Display a first interface in a first region of a display. The first interface includes a top region and a side region. When the first interface is in a direction of normally viewing the first interface, the top region and the side region of the first interface are respectively located on the top and two sides of the first interface, and the side region and the top region are adjacent or partially overlap.

The first interface is a complete display interface displayed on a touchscreen of an electronic device. Specifically, the first interface may be a home screen that includes a notification bar/signal bar part and that is displayed on the display of the terminal; may be an interface of one or more applications (including or not including the notification bar/signal bar part), for example, a system setting interface, a WeChat chat interface, or an Alipay payment code interface; may be a split-screen display interface of the foregoing interfaces, for example, a split-screen display interface of WeChat and the home screen; or may be a leftmost screen, a widget (widget), an intelligent home screen assistant, a control, or the like.

Step 1703: The electronic device receives a new first notification, for example, an SMS notification.

Step 1705: In response to the first notification received by the electronic device, display a first floating box in the top region of the first interface, where content of the first notification is displayed in the first floating box, and the first floating box covers at least a part of the top region of the first interface.

For example, the SMS notification may be displayed in the top region of the first interface 310 in a form of, for example, the banner or pop-up box 311 in FIG. 3b. At least some content of the SMS notification is displayed in the banner or pop-up box 311, and the banner or pop-up box 311 covers a part of the first interface 310 in the top region 302. In the embodiment shown in FIG. 11a to FIG. 11d, the banner or pop-up box 1111 may further include the function keys 1101 and 1102 in addition to the content of the SMS notification.

Step 1707: In response to the first notification received by the electronic device, further display a first touch symbol in the side region of the first interface, where the first touch symbol covers a part of the first interface in the side region and is farther away from the top region compared with the first floating box. The first touch symbol is configured to receive an operation to process the first notification.

The first touch symbol may be, for example, a touch light dot, a touch halo, or a touch icon in the side region. The light dot, halo, or icon may be associated with the foregoing new notification, for example, associated with the new SMS notification.

For example, with reference to FIG. 3b, in response to the new SMS notification, a touch light dot 305 is displayed in the side region 303 of the first interface 310, to prompt the user to perform an operation in the hot region 304 of the light dot 305. A display region of the light dot 305 is farther away from the top region 302 of the first interface 310, that is, closer to the bottom region 307 of the first interface 310 than a display region of the banner or pop-up box 311, and the light dot 305 covers only a part of the first interface 310 in the side region 303.

It should be noted that, the banner or the pop-up box usually appears in the top display region of the display, and this is inconvenient for one-hand operation of a user, or requires a finger of the user to move greatly to perform an operation. In this embodiment of this application, a touch point or a touch icon for quickly processing a notification may be provided in the side display region of the display, and the user does not need to move the finger up and down greatly. The touch point and the touch icon are displayed in only a small part of the side display region of the display. Therefore, content in another display region on the display is not interfered or blocked.

In an embodiment of this application, the display may be a curved screen. As shown in FIG. 5a and FIG. 5b, the side region for displaying the touch point may be displayed in the curved display region 503 of the curved screen. This facilitates a user operation and extends an application scenario of the curved display region.

It should be understood that a form of the operation in the hot region of the touch light dot 305 is not limited in this embodiment of this application. It can be learned from the embodiment shown in FIG. 3a to FIG. 3h that the operation performed by the user on the light dot 305 may implement quick processing on a new notification, or quick processing on content displayed in the banner or pop-up box 311, for example, opening a messaging application and displaying content of an SMS message (FIG. 3c), removing display of the banner or pop-up box 311 (FIG. 3d), opening a reply window corresponding to an SMS notification (FIG. 3e), or displaying the first interface and an interface of a messaging application in a split-screen mode (FIG. 3f). This has been described in detail above, and details are not described herein again.

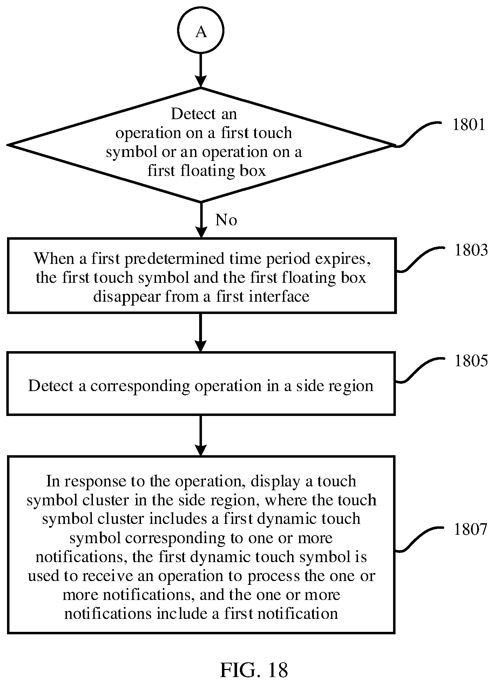

FIG. 18 is a schematic flowchart depicting a notification display method according to an embodiment of this application. For a method procedure embodiment shown in FIG. 18, refer to the embodiments shown in FIG. 6a to FIG. 6e and FIG. 8a to FIG. 8e. As shown in FIG. 18, the method includes the method shown in FIG. 17, that is, includes steps 1701, 1703, 1705, and 1707. In addition, the method shown in FIG. 18 starts to be performed from A shown in FIG. 17. In addition to displaying a first interface, a display of an electronic device further displays a first floating box and a first touch symbol that are corresponding to a new notification and that cover a part of the first interface, and the first touch symbol is farther away from a top region of the first interface compared with the first floating box. After A, the method shown in FIG. 18 includes the following steps.

Step 1801: Detect an operation on the first touch symbol or an operation on the first floating box. The operation may be processing the new notification, or ignoring the new notification. When the electronic device does not detect the foregoing operation, step 1803 is performed.

Step 1803: The electronic device detects neither an operation on the first touch symbol nor an operation on the first floating box, and when a first predetermined time period expires, the first touch symbol and the first floating box disappear from the first interface. Because no operation on the new notification is detected, the new notification is added to a notification center, and the first touch symbol is added to a touch symbol cluster in a side region and hidden in the side region.

Step 1805: Detect a corresponding operation in the side region. Specifically, a trigger operation of touching or tapping in the side region may be detected.

Step 1807: Display a touch symbol cluster in the side region in response to the trigger operation in the side region, where the touch symbol cluster covers a part of the first interface in the side region. The touch symbol cluster includes one or more touch symbols, a first dynamic touch symbol in the one or more touch symbols corresponds to one or more notifications received by the electronic device, and the first dynamic touch symbol is configured to receive an operation to process the one or more notifications. The one or more notifications include the first notification in the method shown in FIG. 17. The first dynamic touch symbol may be the same as or different from the first touch symbol.

In an embodiment of this application, the touch symbol cluster may further include a first fixed touch symbol, and the first fixed touch symbol is corresponding to one or more application options of an application on the electronic device. The application option may be preset in the application or customized by a user.

For example, with reference to FIG. 6a to FIG. 6e or FIG. 8a, in response to a touch operation or another operation performed by the user in the side region 303/503, the touch icon cluster 605 or 700b is displayed in the side region 303/503.

In the embodiment shown in FIG. 6a to FIG. 6e, a display region of the cluster 605 may be fixed or dynamically changed. For example, a bottom of the display region of the cluster 605 may be within a predetermined distance above a trigger operation location of the user. Therefore, the cluster 605 may be displayed in a different region each time, and after the cluster 605 is displayed, a display region of the cluster 605 is fixed, to facilitate interaction between the user and the cluster. Alternatively, the display region of the cluster 605 may be always fixed, and the display region is not dynamically changed with an operation location of the user. The operation and interaction of the user are described in detail above with reference to FIG. 6a to FIG. 6e and FIG. 8a to FIG. 8e, and details are not described herein again.

With reference to FIG. 8c and FIG. 8d, after the touch icon cluster 700b or 800b is displayed in the side display region of the display 301/501, the user may perform an operation on a touch icon in the cluster, to process a recent unread notification, or view a predefined application option, for example, a WeChat unread message, a calendar event, or an Alipay payment code. As shown in FIG. 8c and FIG. 8d, the user performs a continuous operation in a region in which the touch icon cluster 700b or 800b is displayed, to display a touch icon in an enlarged manner, to find a desired application, and further performs an operation on the enlarged touch icon, to process content included in an unread notification of the application.

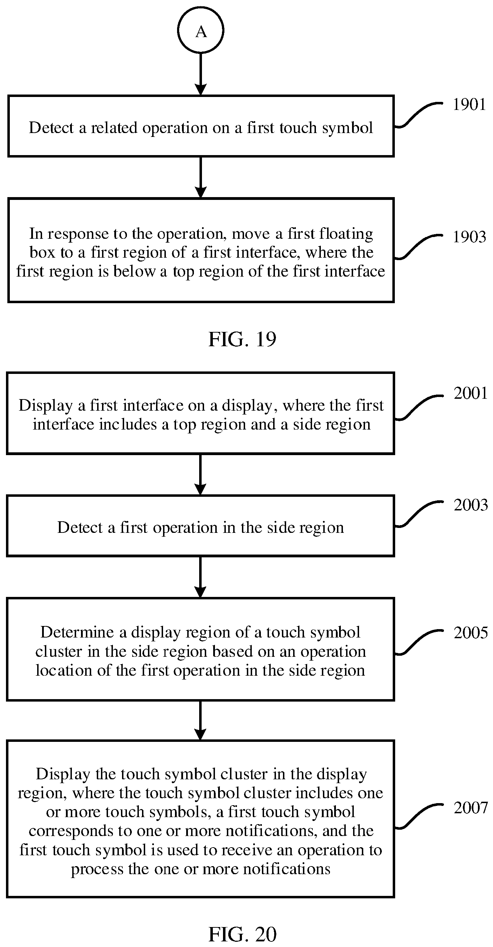

FIG. 19 is a schematic flowchart depicting a notification display method according to an embodiment of this application. For a method procedure embodiment shown in FIG. 19, refer to the embodiment shown in FIG. 11a to FIG. 11d. As shown in FIG. 19, the method includes the method shown in FIG. 17, that is, includes steps 1701, 1703, 1705, and 1707. In addition, the method shown in FIG. 19 starts to be performed from A shown in FIG. 17. In addition to displaying a first interface, a display of an electronic device further displays a first floating box and a first touch symbol that are corresponding to a new notification and that cover a part of the first interface, and the first touch symbol is farther away from a top region of the first interface compared with the first floating box. After A, the method shown in FIG. 19 includes the following steps.

Step 1901: Detect a related operation on the first touch symbol. Specifically, a slide-down operation on the first touch symbol is detected.

Step 1903: In response to the slide-down operation, move the first floating box to a first region of the first interface, where the first floating box covers a part of the first interface in the first region after being moved. The first region is below the top region.

For example, refer to FIG. 11a to FIG. 11d. In the embodiment shown in FIG. 11a, a user performs, for example, a slide-down operation in the side region 303/503. It should be understood that the slide-down operation is merely an implementation of this embodiment of this application, and should not be used as any limitation on this application. In response to the slide-down operation, the banner or pop-up box 1111 is dropped down from the top region to the first region 1106, as shown in FIG. 11b. Compared with a display region of the banner or pop-up box 1111 before being dropped down, in FIG. 11b, a display region of the banner or pop-up box 1111 after being dropped down is farther away from the top region 302 of the first interface, that is, closer to the bottom region 307 of the first interface. Specifically, when the user holds the terminal in portrait mode, the banner or pop-up box 1111 after being dropped down covers the first interface in the first region 1106, that is, a middle display part of the display. The middle display part is closer to a bottom display part of the display than a top display part, and is closer to a finger operation region of the user. This facilitates subsequent processing on the banner or pop-up box 1111 by the user.

It should be understood that, in the foregoing embodiment, the banner or pop-up box 1111 is dropped down to the middle display part of the display, and this cannot be used as a limitation on this application. In another embodiment of this application, the banner or pop-up box 1111 may be dropped down to any display part that is closer to the bottom than the top on the display.

FIG. 20 is a schematic flowchart depicting a notification display method according to an embodiment of this application. For a method procedure embodiment shown in FIG. 20, refer to the embodiment shown in FIG. 6a to FIG. 6e. The method shown in FIG. 20 includes the following steps.

Step 2001: Display a first interface in a first region of a display. The first interface includes a top region and a side region.

Step 2003: Detect a first operation in the side region. Specifically, a trigger operation of touching or tapping in the side region may be detected.

Step 2005: Determine a display region of a touch symbol cluster in the side region based on an operation location of the first operation in the side region. Specifically, when the first interface is in a direction of normally viewing the first interface, the display region determined for the touch symbol cluster in the side region should be higher than the operation location of the first operation by a preset height, as shown in FIG. 6c and FIG. 6d.

Step 2007: Display the touch symbol cluster in the display region, where the touch symbol cluster includes one or more touch symbols, a first touch symbol corresponds to one or more notifications, and the first touch symbol is configured to receive an operation to process the one or more notifications. Specifically, the bottom of the display region of the touch symbol cluster is higher than the operation location of the first operation of the user by the preset height, and the operation location is determined based on a start point, an end point, or an intermediate point of the first operation.

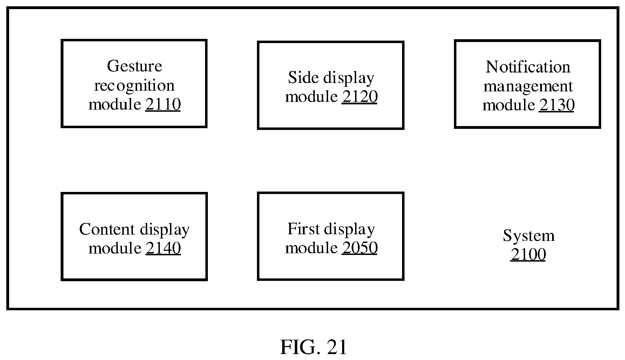

FIG. 21 is a schematic diagram depicting a module architecture of an electronic device for displaying a notification according to this application. In the embodiment in FIG. 21, a system 2100 may perform the notification display method provided in the foregoing embodiments. The system 2100 includes the following several modules.

A gesture recognition module 2110 is configured to recognize an operation performed by a user on a display, and is specifically configured to recognize whether an operation in a side display region of the display satisfies a preset threshold or a trigger value. The operation performed by the user includes but is not limited to the first operation to the eighth operation in the foregoing embodiments. In an embodiment of this application, the gesture recognition module 2110 may be replaced with another signal input module, or the gesture recognition module 2110 and another signal input module, for example, a voice recognition module, a fingerprint recognition module, or a human face recognition module, may jointly determine whether the operation satisfies a preset trigger value.

A side display module 2120 is configured to display a touch symbol and a touch symbol cluster in the side display region of the display. For example, based on a trigger operation detected by the gesture recognition module 2110, the side display module 2120 may display the touch symbol cluster, for example, a touch light dot cluster, a touch halo cluster, or a touch icon cluster, in the side display region. Further, based on an interaction operation detected by the gesture recognition module 2110, the side display module 2120 may display, in the side display region, an animation of interaction with a touch symbol in the touch symbol cluster, for example, an animation of enlargement, movement, or a combination thereof. In an embodiment of this application, the side display module 2120 may further adjust, based on a related operation detected by the gesture recognition module 2110, a display location/region of the touch symbol cluster in the side display region.

A notification management module 2130 is configured to manage a new notification pushed to an intelligent terminal, and further manage, based on whether the new notification is processed, a notification list in a notification center and a notification list corresponding to a touch symbol in the touch symbol cluster. Specifically, the management includes update, addition, deletion, or the like for the notification list.

A content display module 2140 is configured to display notification content or a preset application option corresponding to the touch symbol. Specifically, after the user interacts with the touch symbol or the touch symbol cluster, based on a related operation detected by the gesture recognition module 2110, when there is a new pushed notification, the content display module 2140 may display content of the notification, for example, display an SMS message reply window. Alternatively, during interaction with the touch symbol cluster, the content display module 2140 may display a content detail card or an application option detail card corresponding to a touch symbol that the user is interacting with, for example, an SMS notification card or an Alipay payment code card.

A first display module 2150 is configured to display an interface related to a notification. Specifically, when the electronic device receives a new notification, the first display module 2150 displays, in a top display region of the display, a banner or a pop-up box related to the new notification, where at least a part of content of the notification is displayed. Based on a related operation detected by the gesture recognition module 2110, if an operation on a touch symbol or a detail card satisfies a preset threshold or a trigger value, the first display module 2150 further displays an application interface or a split-screen interface corresponding to the touch symbol or the detail card.

In an embodiment of this application, when the intelligent terminal receives a new notification, the notification management module 2130 manages the notification, and triggers the first display module to display, in the top display region of the display, a banner or a pop-up box corresponding to the notification. In response to receiving the new notification, the side display module 2120 displays a touch symbol, such as a light dot, a halo, or a small application icon corresponding to the notification. When detecting that an operation on the touch symbol satisfies the preset threshold or the trigger value, the gesture recognition module 2110 correspondingly triggers the first display module or the content display module 2140 to display content of the notification, for example, display an application interface or a split-screen interface corresponding to the notification, or display an operation window of an application.

In another embodiment of this application, when the intelligent terminal has received one or more notifications, and the user has not processed these notifications, the side display module 2120 ranks, in the background in a time order, touch symbols corresponding to these notifications or messages, and display a touch symbol cluster at a predetermined location in the side display region when the gesture recognition module 2110 detects that there is a trigger operation satisfying the threshold in the side display region. The touch symbol cluster is corresponding to the one or more unprocessed notifications. When the gesture recognition module 2110 detects a further operation on the touch symbol cluster, the side display module 2120 correspondingly displays an animation of interaction with a touch symbol in the touch symbol cluster, for example, displaying the cluster or some touch symbols in a first size, displaying the cluster or some touch symbols in a second size, moving the cluster or some touch symbols by a first distance, or moving the cluster or some touch symbols by a second distance. When further detecting an interaction operation on a touch symbol in the touch symbol cluster, the gesture recognition module 2110 may invoke the content display module 2140 or the first display module 2150 to display a detail card corresponding to the touch symbol or an application interface corresponding to the touch symbol.

In still another embodiment of this application, when the intelligent terminal receives a new notification, the notification management module 2130 manages the notification, and triggers the first display module to display, in the top display region of the display, a banner or a pop-up box corresponding to the notification. In response to receiving the new notification, the side display module 2120 displays a touch symbol, such as a light dot, a halo, or a small application icon corresponding to the notification. When detecting that an operation on the touch symbol satisfies the preset threshold or the trigger value, the gesture recognition module 2110 triggers the first display module 2150 to display an animation in which the banner or the pop-up box is dropped down to a predetermined display region of the display. Optionally, after the banner or the pop-up box is dropped down or the banner or the pop-up box is moved, a function key attached to the banner or the pop-up box may be adjusted based on recognition of the gesture recognition module 2110. For example, when it is recognized that a user operation occurs in a right display region of the display, the function key on the banner or the pop-up box is displayed on the lower right side of the banner or the pop-up box, or when it is recognized that a user operation occurs in a left display region of the display, the function key on the banner or the pop-up box is displayed on the lower left side of the banner or the pop-up box, to facilitate a continuous operation of the user.

The foregoing embodiments of this application may be used in combination with each other.

In the foregoing embodiments provided in this application, the method provided in the embodiments of this application is described from a perspective of the terminal serving as an execution body.

This application provides a computer program product including instructions. When the computer program product runs on a terminal, the terminal is enabled to perform steps in a fast notification processing method provided in the embodiments of this application.

This application provides a computer-readable storage medium, including instructions. When the instructions are run on a terminal, the terminal is enabled to perform steps in a fast notification processing method provided in the embodiments of this application.

A person skilled in the art may clearly understand that the embodiments of this application may be implemented by hardware, or by hardware and software. When the embodiments are implemented by hardware and software, the foregoing functions may be stored in a computer-readable medium. Based on such an understanding, the technical solutions of the embodiments of this application essentially, or the part contributing to the current technology, or all or some of the technical solutions may be implemented in a form of a software product. The computer software product is stored in a storage medium and includes several instructions for instructing a computer device (which may be a personal computer, a server, or a network device) or a processor to perform all or some of the steps of the methods described in the embodiments of this application. The foregoing storage medium includes: any medium that can store program code, such as a flash memory, a removable hard disk, a read-only memory, a random access memory, a magnetic disk, or a compact disc.

The foregoing descriptions are merely specific implementations of the embodiments of this application, but are not intended to limit the protection scope of the embodiments of this application. Any variation or replacement within the technical scope disclosed in the embodiments of this application shall fall within the protection scope of the embodiments of this application. Therefore, the protection scope of the embodiments of this application shall be subject to the protection scope of the claims.

## Claims

1. A notification display method, applied to an electronic device (100) having a curved screen, wherein the curved screen has a flat display region and a curved display region extending from a side edge of the flat display region, a first icon (312b) of a first application is displayed in the flat display region, and the method comprises:
in response to the electronic device (100) receiving a first notification from the first application,
displaying (1705) a first banner (311) in the flat display region, wherein first content of the first notification is displayed in the first banner (311);
displaying (1707) a first symbol (305) in the curved display region, wherein the first symbol (305) is configured to receive an operation to process the first notification;
displaying a second symbol (311a) on the first icon (312b) in the flat display region
if no operation on the first banner (311), the first symbol (305), or the first icon (312b) is detected within a first predetermined time period in which the first symbol (305) is displayed in the first curved display region, when the first symbol (305) has been displayed for the first predetermined time period, enabling the first symbol (305) and the first banner (311) to automatically disappear (1803) from the curved screen; and
after the first symbol (305) and the first banner (311) disappear from the curved screen, the method further comprises:
detecting a first operation in the curved display region; and
displaying the first symbol (305) in the curved display region in response to the first operation.

2. The method according to claim 1, wherein
after the first symbol (305) and the first banner (311) disappear from the curved screen, the method further comprises:
in response to the electronic device (100) receiving a second notification from a second application, wherein the second application is different from the first application,
displaying a second banner in the flat display region, wherein content of the second notification is displayed in the second banner; and
displaying the first symbol (305) in the curved display region, to receive an operation to process the second notification;

3. The method according to claim 1, wherein
after the first symbol (305) and the first banner (311) disappear from the curved screen, the method further comprises:
in response to the electronic device (100) receiving a third notification from a third application, wherein the third application is different from the first application,
displaying a third banner in the flat display region, wherein content of the third notification is displayed in the third banner; and
displaying, in the curved display region, a third symbol different from the first symbol (305), to receive an operation to process the third notification.

4. The method according to claim 1, wherein a display location of the first symbol (305) in the curved display region is at a first height above an operation location of the first operation in the curved display region.

5. The method according to claim 1, wherein the method further comprises:
displaying a fourth symbol (81) in the curved display region in response to the first operation, wherein the fourth symbol (81) is configured to open an application option of a fourth application.

6. The method according to claim 5, wherein the method further comprises:
detecting a second operation on the first symbol (305); and
displaying a first card (311f) in the flat display region in response to the second operation, wherein second content of the first notification is displayed in the first card (311f), and the second content comprises the first content.

7. The method according to claim 6, wherein
the method further comprises:
detecting a third operation on the fourth symbol (81); and
displaying a fourth card (810) in the flat display region in response to the third operation, wherein the application option of the fourth application is displayed in the fourth card (810);
and/or, the method further comprises:
detecting a third operation on the first card (311f); and
opening the first application in response to the third operation;
and/or, the method further comprises:
in response to the second operation, triggering at least one of the following steps:
displaying the first symbol (305) in an enlarged manner; and
moving the first symbol (305) in a direction to the flat display region.

8. The method according to claim 1, wherein the method further comprises:
displaying a fifth symbol in the curved display region in response to the first operation, wherein the fifth symbol corresponds to a fifth application and is configured to receive an operation to process a fifth notification, and the first symbol (305) and the fifth symbol are displayed in the curved display region based on a time sequence of receiving the first notification and the fifth notification.

9. The method according to claim 6, wherein the method further comprises:
in response to the electronic device (100) receiving a seventh notification from a seventh application,
displaying a seventh banner in the flat display region, wherein content of the seventh notification is displayed in the seventh banner; and displaying a seventh symbol in the curved display region, wherein the seventh symbol is configured to receive an operation to process the seventh notification.

10. The method according to claim 9, wherein the displaying a seventh symbol in the curved display region comprises at least one of the following steps:
displaying the seventh symbol in the curved display region in an enlarged manner;
displaying the seventh symbol in the curved display region in a flickering manner; and
displaying the seventh symbol in the curved display region in a highlighted manner.

11. The method according to claim 1, wherein the curved display region comprises a first curved display region extending from a first side edge of the flat display region and a second curved display region extending from a second side edge of the flat display region, and the first curved display region is opposite to the second curved display region, wherein
the displaying a first symbol (305) in the curved display region comprises:
displaying the first symbol (305) in the first curved display region when a user holds the electronic device (100) by using a left hand; or
displaying the first symbol (305) in the second curved display region when a user holds the electronic device (100) by using a right hand;
and/or, the displaying a first symbol (305) in the curved display region comprises:
displaying the first symbol (305) in both the first curved display region and the second curved display region;
and/or, wherein the electronic device (100) is a foldable electronic device (100), the curved screen is a foldable screen, and the first symbol (305) is displayed in the first curved display region or the second curved display region when the electronic device (100) is in a folded state, or the first symbol (305) is displayed in both the first curved display region and the second curved display region when the electronic device (100) is in an unfolded state;
and/or, wherein the displaying a first symbol (305) in the curved display region comprises:
determining a display location of the first symbol (305) in the curved display region based on historical data of performing an operation by a user on the curved screen; and
displaying the first symbol (305) at the display location.

12. The method according to claim 1, wherein the first application is not running;
and/or wherein the first application is opened in response to a first operation on the first symbol (305).

13. An electronic device, comprising one or more touchscreens, one or more memories (121), and one or more processors (110), wherein the one or more memories (121) store one or more programs, and when the one or more processors (110) execute the one or more programs, the terminal is enabled to implement the method according to any one of claims 1 to 12.

14. A computer-readable storage medium, including instructions, wherein when the instructions are run on an electronic device (100), the electronic device (100) is enabled to perform the method according to any one of claims 1 to 12.

15. A computer program product including instructions, wherein when the computer program product runs on an electronic device (100), the electronic device (100) is enabled to perform the method according to any one of claims 1 to 12.

## Patentansprüche

1. Benachrichtigungsanzeigeverfahren, angewendet auf eine elektronische Vorrichtung (100) mit einem gekrümmten Bildschirm, wobei der gekrümmte Bildschirm einen flachen Anzeigebereich und einen sich von einer Seitenkante des flachen Anzeigebereichs erstreckenden gekrümmten Anzeigebereich aufweist, ein erstes Icon (312b) einer ersten Anwendung in dem flachen Anzeigebereich angezeigt wird und das Verfahren Folgendes umfasst:
als Reaktion darauf, dass die elektronische Vorrichtung (100) eine erste Benachrichtigung von der ersten Anwendung empfängt, Anzeigen (1705) eines ersten Banners (311) in dem flachen Anzeigebereich, wobei der erste Inhalt der ersten Benachrichtigung in dem ersten Banner (311) angezeigt wird;
Anzeigen (1707) eines ersten Symbols (305) in dem gekrümmten Anzeigebereich, wobei das erste Symbol (305) dazu konfiguriert ist, eine Operation zum Verarbeiten der ersten Benachrichtigung zu empfangen;
Anzeigen eines zweiten Symbols (311a) auf dem ersten Icon (312b) in dem flachen Anzeigebereich
falls innerhalb eines ersten vordefinierten Zeitraums, in dem das erste Symbol (305) in dem ersten gekrümmten Anzeigebereich angezeigt wird, keine Operation auf dem ersten Banner (311), dem ersten Symbol (305) oder dem ersten Icon (312b) erkannt wird, Ermöglichen, dass das erste Symbol (305) und das erste Banner (311) von dem gekrümmten Bildschirm automatisch verschwinden (1803), wenn das erste Symbol (305) für den ersten vordefinierten Zeitraum angezeigt wurde; und
nachdem das erste Symbol (305) und das erste Banner (311) von dem gekrümmten Bildschirm verschwunden sind, das Verfahren ferner Folgendes umfasst:
Erkennen einer ersten Operation in dem gekrümmten Anzeigebereich; und
Anzeigen des ersten Symbols (305) in dem gekrümmten Anzeigebereich als Reaktion auf die erste Operation.

2. Verfahren nach Anspruch 1, wobei
nachdem das erste Symbol (305) und das erste Banner (311) von dem gekrümmten Bildschirm verschwunden sind, das Verfahren ferner Folgendes umfasst:
als Reaktion darauf, dass die elektronische Vorrichtung (100) eine zweite Benachrichtigung von einer zweiten Anwendung empfängt, wobei sich die zweite Anwendung von der ersten Anwendung unterscheidet,
Anzeigen eines zweiten Banners in dem flachen Anzeigebereich, wobei der Inhalt der zweiten Benachrichtigung in dem zweiten Banner angezeigt wird; und
Anzeigen des ersten Symbols (305) in dem gekrümmten Anzeigebereich, um eine Operation zum Verarbeiten der zweiten Benachrichtigung zu empfangen.

3. Verfahren nach Anspruch 1, wobei
nachdem das erste Symbol (305) und das erste Banner (311) von dem gekrümmten Bildschirm verschwunden sind, das Verfahren ferner Folgendes umfasst:
als Reaktion darauf, dass die elektronische Vorrichtung (100) eine dritte Benachrichtigung von einer dritten Anwendung empfängt, wobei sich die dritte Anwendung von der ersten Anwendung unterscheidet,
Anzeigen eines dritten Banners in dem flachen Anzeigebereich, wobei der Inhalt der dritten Benachrichtigung in dem dritten Banner angezeigt wird; und
Anzeigen eines dritten Symbols, das sich von dem ersten Symbol (305) unterscheidet, in dem gekrümmten Anzeigebereich, um eine Operation zum Verarbeiten der dritten Benachrichtigung zu empfangen.

4. Verfahren nach Anspruch 1, wobei sich eine Anzeigeposition des ersten Symbols (305) in dem gekrümmten Anzeigebereich auf einer ersten Höhe über einer Operationsposition der ersten Operation in dem gekrümmten Anzeigebereich befindet.

5. Verfahren nach Anspruch 1, wobei das Verfahren ferner Folgendes umfasst:
Anzeigen eines vierten Symbols (81) in dem gekrümmten Anzeigebereich als Reaktion auf die erste Operation, wobei das vierte Symbol (81) dazu konfiguriert ist, eine Anwendungsoption einer vierten Anwendung zu öffnen.

6. Verfahren nach Anspruch 5, wobei das Verfahren ferner Folgendes umfasst:
Erkennen einer zweiten Operation auf dem ersten Symbol (305); und
Anzeigen einer ersten Karte (311f) in dem flachen Anzeigebereich als Reaktion auf die zweite Operation, wobei ein zweiter Inhalt der ersten Benachrichtigung in der ersten Karte (311f) angezeigt wird und der zweite Inhalt den ersten Inhalt umfasst.

7. Verfahren nach Anspruch 6, wobei
das Verfahren ferner Folgendes umfasst:
Erkennen einer dritten Operation auf dem vierten Symbol (81); und
Anzeigen einer vierten Karte (810) in dem flachen Anzeigebereich als Reaktion auf die dritte Operation, wobei die Anwendungsoption der vierten Anwendung in der vierten Karte (810) angezeigt wird;
und/oder das Verfahren ferner Folgendes umfasst:
Erkennen einer dritten Operation auf der ersten Karte (311f); und
Öffnen der ersten Anwendung als Reaktion auf die dritte Operation;
und/oder das Verfahren ferner Folgendes umfasst:
als Reaktion auf die zweite Operation, Auslösen mindestens eines der folgenden Schritte:
Anzeigen des ersten Symbols (305) in vergrößerter Form; und Bewegen des ersten Symbols (305) in eine Richtung zu dem flachen Anzeigebereich.

8. Verfahren nach Anspruch 1, wobei das Verfahren ferner Folgendes umfasst:
Anzeigen eines fünften Symbols in dem gekrümmten Anzeigebereich als Reaktion auf die erste Operation, wobei das fünfte Symbol einer fünften Anwendung entspricht und dazu konfiguriert ist, eine Operation zum Verarbeiten einer fünften Benachrichtigung zu empfangen, und das erste Symbol (305) und das fünfte Symbol in dem gekrümmten Anzeigebereich basierend auf einer zeitlichen Abfolge eines Empfangens der ersten Benachrichtigung und der fünften Benachrichtigung angezeigt werden.

9. Verfahren nach Anspruch 6, wobei das Verfahren ferner Folgendes umfasst:
als Reaktion darauf, dass die elektronische Vorrichtung (100) eine siebte Benachrichtigung von einer siebten Anwendung empfängt,
Anzeigen eines siebten Banners in der flachen Anzeigeregion, wobei der Inhalt der siebten Benachrichtigung in dem siebten Banner angezeigt wird; und Anzeigen eines siebten Symbols in dem gekrümmten Anzeigebereich, wobei das siebte Symbol dazu konfiguriert ist, eine Operation zum Verarbeiten der siebten Benachrichtigung zu empfangen.

10. Verfahren nach Anspruch 9, wobei das Anzeigen eines siebten Symbols in dem gekrümmten Anzeigebereich mindestens einen der folgenden Schritte umfasst:
Anzeigen des siebten Symbols in dem gekrümmten Anzeigebereich in vergrößerter Form;
Anzeigen des siebten Symbols in dem gekrümmten Anzeigebereich in flackernder Form; und
Anzeigen des siebten Symbols in dem gekrümmten Anzeigebereich in hervorgehobener Form.

11. Verfahren nach Anspruch 1, wobei der gekrümmte Anzeigebereich einen ersten gekrümmten Anzeigebereich, der sich von einer ersten Seitenkante des flachen Anzeigebereichs erstreckt, und einen zweiten gekrümmten Anzeigebereich umfasst, der sich von einer zweiten Seitenkante des flachen Anzeigebereichs erstreckt, und der erste gekrümmte Anzeigebereich dem zweiten gekrümmten Anzeigebereich gegenüberliegt, wobei
das Anzeigen eines ersten Symbols (305) in dem gekrümmten Anzeigebereich Folgendes umfasst:
Anzeigen des ersten Symbols (305) in dem ersten gekrümmten Anzeigebereich, wenn ein Benutzer die elektronische Vorrichtung (100) unter Verwendung der linken Hand hält; oder
Anzeigen des ersten Symbols (305) in dem zweiten gekrümmten Anzeigebereich, wenn ein Benutzer die elektronische Vorrichtung (100) unter Verwendung der rechten Hand hält;
und/oder das Anzeigen eines ersten Symbols (305) in dem gekrümmten Anzeigebereich Folgendes umfasst:
Anzeigen des ersten Symbols (305) sowohl in dem ersten gekrümmten Anzeigebereich als auch in dem zweiten gekrümmten Anzeigebereich;
und/oder wobei die elektronische Vorrichtung (100) eine klappbare elektronische Vorrichtung (100) ist, der gekrümmte Bildschirm ein klappbarer Bildschirm ist und das erste Symbol (305) in dem ersten gekrümmten Anzeigebereich oder dem zweiten gekrümmten Anzeigebereich angezeigt wird, wenn sich die elektronische Vorrichtung (100) in einem zusammengeklappten Zustand befindet, oder das erste Symbol (305) sowohl in dem ersten gekrümmten Anzeigebereich als auch in dem zweiten gekrümmten Anzeigebereich angezeigt wird, wenn sich die elektronische Vorrichtung (100) in einem aufgeklappten Zustand befindet;
und/oder wobei das Anzeigen eines ersten Symbols (305) in dem gekrümmten Anzeigebereich Folgendes umfasst:
Bestimmen einer Anzeigeposition des ersten Symbols (305) in dem gekrümmten Anzeigebereich basierend auf historischen Daten eines Durchführens einer Operation durch einen Benutzer auf dem gekrümmten Bildschirm; und
Anzeigen des ersten Symbols (305) an der Anzeigeposition.

12. Verfahren nach Anspruch 1, wobei die erste Anwendung nicht läuft;
und/oder wobei die erste Anwendung als Reaktion auf eine erste Operation auf dem ersten Symbol (305) geöffnet wird.

13. Elektronische Vorrichtung, umfassend einen oder mehrere Touchscreens, einen oder mehrere Speicher (121) und einen oder mehrere Prozessoren (110), wobei der eine oder die mehreren Speicher (121) ein oder mehrere Programme speichern und, wenn der eine oder die mehreren Prozessoren (110) das eine oder die mehreren Programme ausführen, es dem Endgerät ermöglicht wird, das Verfahren nach einem der Ansprüche 1 bis 12 zu implementieren.

14. Computerlesbares Speichermedium, beinhaltend Anweisungen, wobei, wenn die Anweisungen auf einer elektronischen Vorrichtung (100) laufen, es der elektronischen Vorrichtung (100) ermöglicht wird, das Verfahren nach einem der Ansprüche 1 bis 12 durchzuführen.

15. Computerprogrammprodukt, beinhaltend Anweisungen, wobei, wenn das Computerprogrammprodukt auf einer elektronischen Vorrichtung (100) läuft, es der elektronischen Vorrichtung (100) ermöglicht wird, das Verfahren nach einem der Ansprüche 1 bis 12 durchzuführen.

## Revendications

1. Procédé d'affichage de notification, appliqué à un dispositif électronique (100) ayant un écran incurvé, dans lequel l'écran incurvé a une zone d'affichage plate et une zone d'affichage incurvée se prolongeant à partir d'un bord latéral de la zone d'affichage plate, une première icône (312b) d'une première application est affichée dans la zone d'affichage plate, et le procédé comprend :
en réponse à la réception, par le dispositif électronique (100), d'une première notification provenant de la première application,
l'affichage (1705) d'une première bannière (311) dans la zone d'affichage plate, dans lequel un premier contenu de la première notification est affiché dans la première bannière (311) ;
l'affichage (1707) d'un premier symbole (305) dans la zone d'affichage incurvée, dans lequel le premier symbole (305) est configuré pour recevoir une opération permettant de traiter la première notification ;
l'affichage d'un deuxième symbole (311a) sur la première icône (312b) dans la zone d'affichage plate
si aucune opération sur la première bannière (311), le premier symbole (305) ou la première icône (312b) n'est détectée pendant une première période prédéterminée au cours de laquelle le premier symbole (305) est affiché dans la première zone d'affichage incurvée, lorsque le premier symbole (305) a été affiché pendant la première période prédéterminée, la permission au premier symbole (305) et à la première bannière (311) de disparaître automatiquement (1803) de l'écran incurvé ; et
après la disparition du premier symbole (305) et de la première bannière (311) de l'écran incurvé, le procédé comprend également :
la détection d'une première opération dans la zone d'affichage incurvée ; et
l'affichage du premier symbole (305) dans la zone d'affichage incurvée en réponse à la première opération.

2. Procédé selon la revendication 1, dans lequel après la disparition du premier symbole (305) et de la première bannière (311) de l'écran incurvé, le procédé comprend également :
en réponse à la réception, par le dispositif électronique (100), d'une deuxième notification provenant d'une deuxième application, dans lequel la deuxième application est différente de la première application,
l'affichage d'une deuxième bannière dans la zone d'affichage plate, dans lequel un contenu de la deuxième notification est affiché dans la deuxième bannière ; et
l'affichage du premier symbole (305) dans la zone d'affichage incurvée, pour recevoir une opération permettant de traiter la deuxième notification.

3. Procédé selon la revendication 1, dans lequel après la disparition du premier symbole (305) et de la première bannière (311) de l'écran incurvé, le procédé comprend également :
en réponse à la réception, par le dispositif électronique (100), d'une troisième notification provenant d'une troisième application, dans lequel la troisième application est différente de la première application,
l'affichage d'une troisième bannière dans la zone d'affichage plate, dans lequel un contenu de la troisième notification est affiché dans la troisième bannière ; et
l'affichage, dans la zone d'affichage incurvée, d'un troisième symbole différent du premier symbole (305), pour recevoir une opération permettant de traiter la troisième notification.

4. Procédé selon la revendication 1, dans lequel un emplacement d'affichage du premier symbole (305) dans la zone d'affichage incurvée se situe à une première hauteur au-dessus d'un emplacement d'opération de la première opération dans la zone d'affichage incurvée.

5. Procédé selon la revendication 1, dans lequel le procédé comprend également :
l'affichage d'un quatrième symbole (81) dans la zone d'affichage incurvée en réponse à la première opération, dans lequel le quatrième symbole (81) est configuré pour ouvrir une option d'application d'une quatrième application.

6. Procédé selon la revendication 5, dans lequel le procédé comprend également :
la détection d'une deuxième opération sur le premier symbole (305) ; et
l'affichage d'une première carte (311f) dans la zone d'affichage plate en réponse à la deuxième opération, dans lequel un second contenu de la première notification est affiché dans la première carte (311f), et le second contenu comprend le premier contenu.

7. Procédé selon la revendication 6, dans lequel le procédé comprend également :
la détection d'une troisième opération sur le quatrième symbole (81) ; et
l'affichage d'une quatrième carte (810) dans la zone d'affichage plate en réponse à la troisième opération, dans lequel l'option d'application de la quatrième application est affichée dans la quatrième carte (810) ;
et/ou, le procédé comprend également :
la détection d'une troisième opération sur la première carte (311f) ; et
l'ouverture de la première application en réponse à la troisième opération ;
et/ou, le procédé comprend également :
en réponse à la deuxième opération, le déclenchement d'au moins l'une des étapes suivantes :
affichage du premier symbole (305) de manière agrandie ; et
déplacement du premier symbole (305) dans une direction vers la zone d'affichage plate.

8. Procédé selon la revendication 1, dans lequel le procédé comprend également :
l'affichage d'un cinquième symbole dans la zone d'affichage incurvée en réponse à la première opération, dans lequel le cinquième symbole correspond à une cinquième application et est configuré pour recevoir une opération permettant de traiter une cinquième notification, et le premier symbole (305) et le cinquième symbole sont affichés dans la zone d'affichage incurvée sur la base d'une séquence temporelle de réception de la première notification et de la cinquième notification.

9. Procédé selon la revendication 6, dans lequel le procédé comprend également :
en réponse à la réception, par le dispositif électronique (100), d'une septième notification provenant d'une septième application,
l'affichage d'une septième bannière dans la zone d'affichage plate, dans lequel un contenu de la septième notification est affiché dans la septième bannière ; et l'affichage d'un septième symbole dans la zone d'affichage incurvée, dans lequel le septième symbole est configuré pour recevoir une opération permettant de traiter la septième notification.

10. Procédé selon la revendication 9, dans lequel l'affichage d'un septième symbole dans la zone d'affichage incurvée comprend au moins l'une des étapes suivantes :
affichage du septième symbole dans la zone d'affichage incurvée de manière agrandie ;
affichage du septième symbole dans la zone d'affichage incurvée de manière clignotante ; et
affichage du septième symbole dans la zone d'affichage incurvée de manière mise en évidence.

11. Procédé selon la revendication 1, dans lequel la zone d'affichage incurvée comprend une première zone d'affichage incurvée se prolongeant à partir d'un premier bord latéral de la zone d'affichage plate et une seconde zone d'affichage incurvée se prolongeant à partir d'un second bord latéral de la zone d'affichage plate, et la première zone d'affichage incurvée est opposée à la seconde zone d'affichage incurvée, dans lequel
l'affichage d'un premier symbole (305) dans la zone d'affichage incurvée comprend :
l'affichage du premier symbole (305) dans la première zone d'affichage incurvée lorsqu'un utilisateur tient le dispositif électronique (100) en utilisant la main gauche ; ou
l'affichage du premier symbole (305) dans la seconde zone d'affichage incurvée lorsqu'un utilisateur tient le dispositif électronique (100) en utilisant la main droite ;
et/ou, l'affichage d'un premier symbole (305) dans la zone d'affichage incurvée comprend :
l'affichage du premier symbole (305) à la fois dans la première zone d'affichage incurvée et dans la seconde zone d'affichage incurvée ;
et/ou, dans lequel le dispositif électronique (100) est un dispositif électronique pliable (100), l'écran incurvé est un écran pliable, et le premier symbole (305) est affiché dans la première zone d'affichage incurvée ou dans la seconde zone d'affichage incurvée lorsque le dispositif électronique (100) est dans un état plié, ou le premier symbole (305) est affiché à la fois dans la première zone d'affichage incurvée et dans la seconde zone d'affichage incurvée lorsque le dispositif électronique (100) est dans un état déplié ;
et/ou, dans lequel l'affichage d'un premier symbole (305) dans la zone d'affichage incurvée comprend :
la détermination d'un emplacement d'affichage du premier symbole (305) dans la zone d'affichage incurvée sur la base de données historiques de réalisation d'une opération par un utilisateur sur l'écran incurvé ; et
l'affichage du premier symbole (305) à l'emplacement d'affichage.

12. Procédé selon la revendication 1, dans lequel la première application n'est pas en cours d'exécution ;
et/ou dans lequel la première application est ouverte en réponse à une première opération sur le premier symbole (305).

13. Dispositif électronique comprenant un ou plusieurs écrans tactiles, une ou plusieurs mémoires (121) et un ou plusieurs processeurs (110), dans lequel les une ou plusieurs mémoires (121) stockent un ou plusieurs programmes, et lorsque les un ou plusieurs processeurs (110) exécutent les un ou plusieurs programmes, le terminal est activé pour mettre en œuvre le procédé selon l'une quelconque des revendications 1 à 12.

14. Support de stockage lisible par ordinateur, comportant des instructions, dans lequel, lorsque les instructions sont exécutées sur un dispositif électronique (100), le dispositif électronique (100) est activé pour réaliser le procédé selon l'une quelconque des revendications 1 à 12.

15. Produit-programme informatique comportant des instructions, dans lequel lorsque le produit-programme informatique s'exécute sur un dispositif électronique (100), le dispositif électronique (100) est activé pour réaliser le procédé selon l'une quelconque des revendications 1 à 12.
